# EUROPÄISCHE PATENTSCHRIFT

(11) **EP 3 664 983 B1**
(45) Veröffentlichungstag und Bekanntmachung des Hinweises auf die Patenterteilung: **01.01.2025**
(21) Anmeldenummer: 18752482.2
(22) Anmeldetag: 07.08.2018
(51) Int. Cl.: B28D 5/00, B23K 26/53

(54) **FERTIGUNGSANLAGE ZUM ABTRENNEN VON WAFERN VON SPENDERSUBSTRATEN**
PRODUCTION FACILITY FOR SEPARATING WAFERS FROM DONOR SUBSTRATES
INSTALLATION DE FABRICATION POUR SÉPARER DES TRANCHES DE SUBSTRATS DONNEURS

(30) Priorität: 11.08.2017 DE 102017007586
(43) Veröffentlichungstag der Anmeldung: 17.06.2020
(73) Patentinhaber: Siltectra GmbH, 01099 Dresden (DE)
(72) Erfinder: SWOBODA, Marco, 01097 Dresden (DE); BEYER, Christian, 09599 Freiberg (DE); RIESKE, Ralf, 01099 Dresden (DE); ULLRICH, Albrecht, 01097 Dresden (DE); RICHTER, Jan, Dresden 01277 (DE)
(74) Vertreter: Müller Hoffmann & Partner
(86) Internationale Anmeldenummer: PCT/EP2018/071438
(87) Internationale Veröffentlichungsnummer: WO 2019/030247

(56) Entgegenhaltungen:
- WO-A2-2011/066491
- WO-A2-2016/083610
- DE-A1- 102015 008 037

## Beschreibung

Die vorliegende Erfindung bezieht sich gemäß den Ansprüchen 1 auf eine Fertigungsanlage zum Abtrennen von mindestens einer Festkörperlage, insbesondere von mehreren Festkörperlagen nacheinander, von einem Spendersubstrat und gemäß der Ansprüche 12 bis 14 auf Verfahren zum Abtrennen von Festkörperscheiben von einem Spendersubstrat, und gemäß Anspruch 15 auf einen Datensatz.

Halbleitermaterialien werden z.B. in großen Zylindern aus kristallinem Material, sogenannten Ingots, gewachsen, während Industrieprozesse oft Wafermaterial mit unterschiedlicher Dicke und Oberflächenqualität erfordern. Wafering von spröden Halbleitermaterialien wird häufig mit Diamant- oder Slurry-basierten Drahtsäge-Prozessen durchgeführt. Diese Sägeprozesse führen nicht nur zu Schnittspalt-Verlust von potenziell wertvollem Material, sondern auch Oberflächenrauheit und unter der Oberfläche zur Beschädigung des Kristalls. Diese Aspekte des Wafering mit Sägeprozessen machen erforderlichen Polier- und Schleifschritte im Waferherstellungsprozess erforderlich, was zu zusätzlichen Schäden und Prozesskosten führt.

Um diese Probleme beim herkömmlichen Wafering und Dünnen von Halbleitern anzugehen, wurden sog. kerf-less Technologien entwickelt, die eine Verringerung der Schnittspaltverluste versprechen - wenn nicht gar deren Beseitigung, sowie von Schaden unter der Oberfläche und Schleifprozessschritten. Insbesondere extern angelegten sogenannten Spalling-processes Verwendung Beanspruchungen - oft temperaturbedingten - kristalline Materialien entlang Kristallebenen mit gut definierten Dicke zu trennen. Spalling können mit Nickel-Chrom-Legierungen, Silber-Aluminiumpaste, Epoxidharz, Aluminium und Nickel erfolgen. Kerf-freie Wafering-Techniken haben das Potenzial, um Schäden in Halbleiterherstellungsverfahren drastisch zu reduzieren. Spannungsbasierte Abtrennverfahren, wie das sog. Spalling (bzw. Splitten), verwenden extern aufgebrachte Spannungen um kristalline Materialien entlang ihrer Kristallebenen mit gut definierter Dicke zu trennen. Substrate zeigen nach dem Spalling jedoch sogenannte Wallner-Linien, die von der Rissausbreitung im Kristall herrühren.

Es wurde Spalling unter Verwendung von Unterschieden in den thermischen Ausdehnungskoeffizienten zwischen einem spröden Material und einem auf der Oberfläche des Materials anhaftenden Polymer ermöglicht. Abkühlen der verbundenen Materialien unterhalb der Glasübergangstemperatur des Polymers induziert Spannungen, die zur Materialtrennung entlang einer Rissebene führen. Ein Vorteil dieses speziellen Verfahrens im Gegensatz zu anderen Arten von Spalling ist, dass durch den Prozess des Kühlens keine erhöhte Diffusion von unerwünschten chemischen Komponenten durch das Material auftritt, im Gegensatz zu Hochtemperaturverfahren, die auch zum Spalling verwendet werden.

Spalling Verfahren neigen jedoch dazu, in ihrer Kontrolle über die erreichte Wafer-Dicke begrenzt zu sein, und ein Abstimmen des vertikalen Orts der Rissausbreitung ist kompliziert. Darüber hinaus entstehen beim Spalling sehr prominente Muster von Wallner-Linien auf der Oberfläche. Dieses Muster besteht aus streifenförmigen Rillen und Erhebungen, die von der Rissausbreitung im Halbleitermaterial stammen und eine Ableitung der Rissdynamik im Substrat ermöglichen. Üblicherweise beginnt der Riss an einem gewissen Punkt am Rand und breitet sich dann rasch von der Kante des Substrats aus. Wallner-Linien von herkömmlichen Spalling-Oberflächen erhöhen die resultierende Oberflächenrauheit stark, oft bis zu dem Punkt, ab dem vor der Weiterverarbeitung und der Herstellung von Schaltkreisen auf dem Substrat zusätzliche Polier- oder Schleif Schritte erforderlich sind.

Die Druckschrift WO2016/083610 der Anmelderin offenbart ein lasergestütztes Abtrennen von Festkörperschichten von Spendersubstraten, insbesondere Beispiele der Modifikationserzeugung.

Durch die Druckschrift DE102016201780A1 wird ein Verfahren offenbart, bei dem mittels Laserstrahlen Risse zum Ablösen eines Wafers in einem Ingot erzeugt werden. Die Ablösung erfolgt in Abhängigkeit von einer Ultraschallbeaufschlagung. Dieses Verfahren ist nachteilig, da es aufgrund seiner Prozessparameter sehr festgelegt ist und ferner einen hohen Nachbearbeitungsaufwand erfordert, wobei durch die Nachbearbeitung hohe Kosten und Materialverluste erzeugt werden.

Es ist die Aufgabe der vorliegenden Erfindung ein Verfahren und eine Fertigungsanlage bereitzustellen, die gegenüber den aus dem Stand der Technik bekannten Verfahren und Fertigungsanlagen vorteilhaft ist.

Die zuvor genannte Aufgabe wird durch eine Fertigungsanlage gemäß Anspruch 1 gelöst. Die erfindungsgemäße Fertigungsanlage zur Ablösung von Wafern bzw. Festkörperscheiben von Spendersubstraten weist bevorzugt mindestens eine Analyseeinrichtung zum Bestimmen von mindestens einer individuellen Eigenschaft, insbesondere der Dotierung, der jeweiligen Spendersubstrate, eine Dateneinrichtung zum Erzeugen von Spendersubstrat-Prozessdaten zu individuellen Spendersubstraten, wobei die Spendersubstrat-Prozessdaten Analysedaten der Analyseeinrichtung umfassen, wobei die Analysedaten zumindest die eine individuelle Eigenschaft des Spendersubstrats beschreiben, eine Lasereinrichtung zum Erzeugen von Modifikationen im Inneren der Spendersubstrate zum Ausbilden eines Ablösebereichs im Inneren des jeweiligen Spendersubstrats, wobei die Lasereinrichtung in Abhängigkeit der Spendersubstrat-Prozessdaten eines konkreten Spendersubstrats zur Bearbeitung des konkreten Spendersubstrats betreibbar ist, und eine Ablöseeinrichtung zum Erzeugen von mechanischen Spannungen im Inneren des jeweiligen Spendersubstrats zum Auslösen und/oder Führen eines Risses zum Abtrennen von jeweils mindestens einem Wafer von einem Spendersubstrat auf. Die Analyseeinrichtung kann alternativ als Messeinrichtung, insbesondere als Messeinrichtung zur Erfassung von Spendersubstrateigenschaften, bezeichnet werden.

Für die effiziente Abspaltung von Material (insbesondere Wafer/n) von einem Spendersubstrat kann somit eine rezeptbasierten Prozessführung ermöglicht werden. Diese Rezepte sind gegenüber Prozessschwankungen und Schwankungen innerhalb der Eigenschaften des Rohmaterials bevorzugt so robust und halten bevorzugt solche entsprechenden Reserven vor, die unter Berücksichtigung aller Abweichungen/ Toleranzen die Abtrennung von spezifikationstreuen Werkstücken (also stressarme Wafer geometrischer Abmessungen innerhalb der Toleranzen) erzielen.

Einzelne Prozesse können je Anlage enger toleriert werden, wenn zusätzliche Informationen zu den Eigenschaftsschwankungen vorliegen. So kann die Laseranlage beispielsweise lokale Absorptionsschwankungen und Brechzahlschwankungen intern messen und dann beispielsweise zum lokalen Anpassen der Laserenergie oder Schreibtiefe innerhalb der Anlage und des Rezeptes nutzen.

Das volle Potenzial der vorliegenden Erfindung wird einer übergeordneten Prozessführung am besten ausgenutzt, da dadurch entscheidende Wechselwirkungen der Prozesse zwischen den verschiedenen Anlagen bzw. Vorrichtungsteilen abgebildet bzw. berücksichtigt werden können.

Daher führt die vorliegende Erfindung zu einer Anlage die bei der Spendersubstratbehandlung/Festkörperabtrennung ein übergeordnetes System zur Prozessführung schafft. Messdaten mehrerer, insbesondere aller, Teilprozesse/Anlagen/Vorrichtungen werden bevorzugt in einer Datenbank gesammelt und die Anlage bzw. das System nimmt zur Prozessteuerung über den Splitverlauf Anpassungen an diesen Rezepten selbst vor. Hierfür wird die Bezeichnung "lernender Split-Prozess" verwendet.

Diese Lösung ist somit vorteilhaft, da die Erfassung der Spendersubstrat-Prozessdaten ermöglicht wird, wodurch der Bearbeitungsprozess bzw. Abtrennprozess an die individuellen Eigenschaften eines jeden Spendersubstrats individuell anpassbar ist. Es können somit z.B. Unterschiede bei den Brechungseigenschaften und/oder Dotierungen des jeweils konkreten Spendersubstrats an der jeweils konkreten Behandlungsstelle bestimmt und kompensiert werden. Dies ermöglicht es die Modifikationen sehr präzise zu erzeugen, wodurch Materialverluste aufgrund der Reduzierung von Schleif- und/oder Polieraufwand reduziert werden.

Eine übergeordnete Aufgabe der vorliegenden Erfindung ist es ferner ein optimales Konzept einer Fertigungsanlage, insbesondere einer Cold-Split-Clustertoolanlage, bereitzustellen, welches eine optimale Gesamtanlageneffektivität hinsichtlich Verfügbarkeit, Preis, Leistung und Qualität sicherstellt. Insbesondere die Verkettung von mehreren einzelnen Prozesstools bzw. Behandlungseinrichtungen kann in der Produktion zu starken Einschränkungen hinsichtlich der Gesamtanlageneffektivität führen, wenn eine zu geringe Prozessfähigkeit (zu geringer Cpk-Wert) einzelner Prozesstools und / oder keine hinreichende Pufferung der einzelnen Prozesstools im Anlagenkonzept inkludiert sind. Dies ermöglich bei einzelnen Prozessausfällen (Stau, Abriss der Prozesskette etc.) durch geplante Redundanzen die notwendige Gesamtanlageneffektivität abzusichern.

Gemäß einer bevorzugten Ausführungsform der vorliegenden Erfindung können hierfür Zuordnungsmittel eingesetzt werden. Bevorzugt ist je Wafer und/oder je Spendersubstrat mindestens ein und bevorzugt mehrere Zuordnungsmittel zum Aufnehmen von Wafer-Prozessdaten oder zum Verknüpfen von Wafer-Prozessdaten mit jeweils mindestens einem durch die Ablöseeinrichtung abgetrennten konkreten Wafer vorgesehen, wobei die Wafer-Prozessdaten zumindest Teile der Analysedaten umfassen, die für den jeweiligen Spenderwafer erzeugt wurde, von dem der konkrete Wafer abgetrennt wurde.

Zuordnungsmittel können hierbei jegliche Mittel sein, die eine Verknüpfung des jeweils konkreten Wafers mit Waferdaten, insbesondere Analysedaten zu diesem konkreten Wafer, schaffen. Somit können Zuordnungsmittel Codes, insbesondere QR-Codes oder Barcodes, sein, die eine Verknüpfung bzw. Verlinkung zu den zugeordneten Daten schafft. Zusätzlich oder alternativ können die Zuordnungsmittel als Datenträger ausgebildet sein. Bevorzugt weisen die Zuordnungsmittel dabei RFID Komponenten auf. Weiterhin können als Zuordnungsmittel zusätzlich oder alternatib z.B. Kennzeichnungen durch Datamatrixcode (DMC), RFID-Chips, Kryptochip's, Trusted Platform Module, Hologramme u.a., eingesetzt werden die individuelle spezifische Eigenschaften der eingesetzten Arbeitsmittel speichern und verfolgen können, wie z.B. magnetische Profile (Nanomagneten), Signaturen in Form von IR und / oder UV-Merkmalen der eingesetzten Folien, Bauteile und Tools. Somit besteht die Möglichkeit einer optimierten Toolsynchronisation, Rezept- und Artikelsteuerung, die das Handling von lokalen und globalen Prozessparameter und Auftragsdaten (unabhängig-flexibel, mehrere Aufträge, manuelle Prozesse, Nacharbeiten, Verpackung etc.) optimal ermöglicht und qualitäts- bzw. anforderungsgerecht sicherstellt.

Ein weiteres wichtiges Merkmal besteht in der Option der Realisierung eines Komponenten- und Zellenschutzkonzepts, insbesondere über die gesamte Herstellungskette, um die einzelnen Tools bzw. Einrichtungen, insbesondere einer konkreten Fertigungseinheit und/oder mehrerer Fertigungseinheiten, optimal vor einer unsachgemäßen Handhabung zu schützen. Somit ist ein optimaler Betrieb der einzelnen Tool's der Gesamtlinie sichergestellt und die Gesamtanlageneffektivität ist nach verfolgbar und schrittweise optimierbar. Ausgehend von einem Toolkonzept (Toolsoftware) über die Liniensteuerung (Linesoftware) bis hin zur übergeordneten Fabsteuerung (Plantsoftware) ist somit je nach Aufgaben und Fragespektrum eine optimale Tool- und Linienkonfigurationen, Rezeptverwaltung und Anlagenänderungen (Datenbanken, Authentifizierungsserver, Sicherheitskonzepte, Management of Change - MOC) möglich. Ebenso können nicht autorisierte oder manuell Änderungen erfasst und nachverfolgt werden.

Weitere bevorzugte Ausführungsformen sind Gegenstand der nachfolgenden Beschreibungsteile und/oder der Unteransprüche.

Mindestens eine Transporteinrichtung ist gemäß einer weiteren bevorzugten Ausführungsform der vorliegenden Erfindung zum Bewegen des um den abgetrennten Wafer reduzierten Spendersubstrats zu einer weiteren Analyseeinrichtung oder zu der Analyseeinrichtung zum erneuten Bestimmen der mindestens einen Eigenschaft vorgesehen, wobei die dem konkreten Spendersubstrat zuordenbaren Spendersubstrat-Prozessdaten mittels den erneut erfassten Analysedaten modifiziert werden. Bevorzugt wird das konkrete Spendersubstrat nach der Abtrennung des Wafers zu einer Messeinrichtung zur Bestimmung der Oberflächeneigenschaften der freigelegten Oberfläche des Spendersubstrats nach dem Trennschritt gefördert. Anschließend oder alternativ kann das Spendersubstrat zu einer Oberflächenaufbereitungseinrichtung, insbesondere zum Materialabtrag, insbesondere zur Glättung der infolge der Waferabtrennung freigelegten Oberfläche, transportiert werden. Von der Oberflächenaufbereitungseinrichtung wird das Spendersubstrat bevorzugt zur Analyseeinrichtung transportiert. Der Transport zwischen einer ersten Einrichtung und einer zweiten Einrichtung oder zwischen einer ersten Einrichtung und einer Messeinrichtung bzw. Analyseeinrichtung kann hierbei mittels eines Roboterarms oder Servomotoren oder Fließbändern etc. bewirkt werden. Bevorzugt wird das Spendersubstrat mit demselben Transportmechanismus innerhalb der Fertigungseinheit bewegt, wobei jedoch auch möglich ist, dass unterschiedliche Transportmechanismen für unterschiedliche Transportabschnitte eingesetzt werden. Weiterhin können einzelne oder mehrere Messungen oder Analysen unmittelbar Behandlungseinrichtungen, insbesondere in der Oberflächenbehandlungseinrichtung, der Lasereinrichtung, der Aufbringeinrichtung und/oder Ablöseeinrichtung erfolgen. Das Spendersubstrat ist somit mittels der Transporteinrichtung zumindest von der Analyseeinrichtung oder der weiteren Analyseeinrichtung zur Lasereinrichtung oder einer weiteren Lasereinrichtung und von der Lasereinrichtung oder der weiteren Lasereinrichtung zur Ablöseeinrichtung oder zur weiteren Ablöseeinrichtung und von der Ablöseeinrichtung oder von der weiteren Ablöseeinrichtung zur Oberflächenaufbereitungseinrichtung oder zu einer weiteren Oberflächenaufbereitungseinrichtung und bevorzugt danach zur weiteren Analyseeinrichtung oder zu der Analyseeinrichtung förderbar.

Bevorzugt ist mindestens eine Messeinrichtung zur Erzeugung von Messdaten vorgesehen, wobei die Messdaten die Dicke des abgetrennten Wafers beschreiben. Die Dicke des Wafers kann hierbei z.B. an vorbestimmten Stellen gemessen werden. Aus diesen Messwerten kann dann ein Mittelwert gebildet werden. Zusätzlich oder alternativ können die Dickewerte für alle vorbestimmten Stellen erfasst werden und den Spendersubstrat-Prozessdaten und/oder den Waferdaten hinzugefügt werden. Dies ist vorteilhaft, da dadurch Kenntnis über die Dicke und Topographie der untersuchten Oberfläche erhalten wird.

Bevorzugt wird zusätzlich oder alternativ die mittlere Dicke des Wafers oder mindestens eines Bereichs des Wafers, insbesondere mehrerer oder aller Bereich des Wafers erfasst, wobei mittlere Dicke hierbei bevorzugt als Mittelwert zwischen minimaler Dicke und maximaler Dicke zu verstehen ist. Die minimale Dicke und die maximale Dicke werden dabei über die gesamte Fläche des Wafers bzw. über die gesamte Fläche des jeweiligen Bereich in Längsrichtung (axialer Richtung) des Wafers erfasst.

Oberflächenrauhigkeiten, Ladungsträgerdichten, Brechindex, Absorption, Welligkeit, totale Dickenvarianz (TTV) und Gesamtwaferdicke, Risslängen und Laserprozesserfolg können allesamt optisch detektiert werden, unter anderem durch Einsatz von Autofokus- oder chromatischen Weißlichtsensoren, mittels Raman-Messungen, durch Ellipsometrie oder auch automatisierte Bildverarbeitung hochauflösender Kameras (z.B. Fourieranalysen der aufgenommenen Bilder).

Problematisch ist es, dass bei größeren Dicken der Werkstücke (bei SiC ab 2 mm) durch die starke Absorption im Material keine transmittierenden Verfahren möglich sind.

Gerade für die Brechzahl und Dotierungsbestimmung ist das von Nachteil. Hier kann aber zum Beispiel eine indirekte Messung erfolgen. Zum Beispiel kann die Ladungsträgerdiche in Reflektion über Raman, Wirbelstrom oder Oberflächenleitfähigkeit bestimmt werden. Mit der Ladungsträgerdichte können dann Dotierung, Brechzahl und andere optische Parameter berechnet werden.

Oberflächenrauheiten können jedoch auch mechanisch detektiert werden, wie auch die Dicken und ihre Varianzen, da Messfühler- und Spitzen, sowie Mikrometerschrauben verwendet werden können.

Ebenso existieren interferometrische Methoden zur Oberflächencharakterisierung, oder anregende Verfahren mit Photolumineszenz oder Röntgen- und UV-Strahlung.

Für rein geometrische Messdaten (Höhenprofil vor dem Lasern und nach dem Split) bieten sich optische Verfahren an, da dieser in der Regel deultich schneller sind als mechanische.

Die Messdaten sind gemäß einer weiteren bevorzugten Ausführungsform der vorliegenden Erfindung als Anteil der Spendersubstrat-Prozessdaten verarbeitbar, wobei mittels den zur Abtrennung eines konkreten Wafers verwendeten Spendersubstrat-Prozessdaten und den Messdaten des konkreten Wafers eine Brechzahlbestimmung zur Bestimmung von Brechzahldaten zur Anpassung der Spendersubstrat-Prozessdaten zum erneuten Erzeugen on Modifikationen im Inneren des konkreten Spendersubstrats durchführbar ist.

Diese Ausführungsform ist vorteilhaft, da durch die Anpassung der Brechzahl die Modifikationen präziser, d.h. mit weniger Abstand zur jeweils gewünschten Position, erzeugt werden können. Somit kann eine Planierungsreserve oder eine Komponente einer Planierungsreserve in Folge der Korrektur der Brechzahl reduziert werden, wodurch der Ausschuss je Spendersubstrat reduziert wird.

Die Brechzahlbestimmung umfasst bevorzugt den Schritt der Erfassung der Dicke des abgetrennten Festkörpers oder der Erfassung des tatsächlichen Abstands der Modifikationen zur Eindringoberfläche. Die Brechzahl ist in Kenntnis der Dicke des Wafers bzw. in Kenntnis des Abstands der Modifikationen zur Eindringoberfläche bestimmbar oder die Ausgangsbrechzahl (mittels der der Ort für die Modifikationen zur Abtrennung des konkreten Wafers festgelegt wurde) ist in Abhängigkeit von der sich aus der Messung ergebenden Abweichung anpassbar, insbesondere ortsaufgelöst anpassbar.

Eine Oberflächenaufbereitungseinrichtung, insbesondere eine Poliereinrichtung, ist gemäß einer weiteren bevorzugten Ausführungsform der vorliegenden Erfindung zur Aufbereitung der infolge einer Waferabtrennung freigelegten Oberfläche des Spendersubstrats vorgesehen, wobei durch die Oberflächenaufbereitungseinrichtung Aufbereitungsdaten erzeugbar sind, wobei die Aufbereitungsdaten den während der Aufbereitung abgetragenen Materialanteil, insbesondere die mittlere Dicke des abgetragenen Materialanteils, und/oder die Oberflächenrauheit beschreiben.

Die Oberflächenaufbereitungseinrichtung dient dabei zur Aufbereitung der Spaltfläche, d.h. zur Aufbereitung der am Spendersubstrat durch die Waferabtrennung freigelegten Oberfläche und/oder zur Aufbereitung der durch die Abtrennung am Wafer freigelegten Oberfläche. Dies erfolgt bevorzugt separat für die freigelegte Oberfläche des Spendersubstrats und die freigelegte Oberfläche des Wafers. Bevorzugt wird die freigelegte Oberfläche des Spendersubstrats mit einer ersten Oberflächenaufbereitungseinrichtung und die freigelegte Oberfläche des Wafers mit einer zweiten Oberflächenaufbereitungseinrichtung behandelt. Während es für das Spendersubstrat wichtig ist, dem Prozess schnellstmöglich wieder zugeführt zu werden, zählt für die dünne Scheibe bzw. den Wafer die Ausbeute. Da sich dieser Prozess auch nicht mehr innerhalb des Spaltzyklus befindet und hochparallel extern durchgeführt werden kann, ist eine schonende Bearbeitung hier zielführend und für die Fertigungsanlage nicht durchsatzmindernd.

Es existieren Planarisierungsverfahren sowohl für Einseiten- als auch Zweiseitenbearbeitung. Beim beschriebenen Ablöseverfahren mittels thermisch beaufschlagter Polymerfolie steht eine optisch polierte Oberfläche einer Sprödbruchoberfläche gegenüber, wodurch sich eine Verwölbung im Spannungsgleichgewicht einstellt.

Bevorzugt wird für die Oberflächenaufbereitung eine Schleifanlage mit verschiedenen Korngrößen und der Möglichkeit zum einseitigen Schliff verwendet, z.B. ein industrietypisches hochsteifes Grinding Tool für Halbleiterwafer bis 300mm. Typischerweise gibt es dabei zwei Schleifschritte mit unterschiedlichen Korngrößen des Schleifrads, einmal einen Grobschleifschritt mit Konrgrößen unter 2000 und einen Feinschleifschritt mit Korngrößen von über 2000.

Nach gröberen Schleifschritten kann überdies ein Polierschritt mit einer Polieranlage durchgeführt werden, um die Oberflächenqualität wieder auf optische Güte und eine Ausgangsrauhigkeit für einen folgenden CMP-Schritt zu bringen (chemisch-mechanisches Polieren). Die Menge des abgetragenen Materials im Schleifprozess ist eine Prozessgröße (Materialverlustoptimierung), die durch Laserparameter und Höhenkartenoptimierung beeinflusst werden kann. Typischerweise werden (materialabhängig) zwischen 20 und 100µm Material beim Schleifen abgetragen. Der Materialabtrag berechnet sich sehr einfach aus der Differenz der Eingangs- und der Ausgangsdicke des Wafers (Ingot, Boule) und wird in modernen Industrieanlagen schon automatisch bei der Bearbeitung gemessen.

Die Prozessgeschwindigkeiten liegen für geringe Abträge unter 100µm bei wenigen bis unter einer Minute für alle Wafergrößen.

Der Gesamtprozess kann aber auch auf Durchsatz optimiert werden, bei Inkaufnahme von eventuell höheren Materialverlusten, z.B. durch größere verwendete Laserenergien und höhere daraus resultierende Risslängen an den Lasermodifikationen.

Ziel ist, soviel Material abzutragen, dass nach dem CMP-Schritt (dem chemischmechanischen Polieren) keine Laser- oder sonstigen Schäden an der Oberfläche oder im Material verbleiben.

Das Spendersubstrat weist gemäß einer weiteren bevorzugten Ausführungsform der vorliegenden Erfindung einen kristallinen Werkstoff auf oder daraus besteht und das Spendersubstrat weist bevorzugt Kristallgitterebenen auf, die gegenüber einer ebenen Hauptoberfläche geneigt sind, wobei die Hauptoberfläche das Spendersubstrat in Längsrichtung des Spendersubstarts einerseits begrenzt, wobei sich eine Kritallgitterebenennormale gegenüber einer Hauptoberflächennormalen in eine erste Richtung neigt, wobei die Lasereinrichtung derart konfiguriert ist, dass die Einbringen von Laserstrahlung in das Innere des Spendersubstrats über die Hauptoberfläche zum Verändern der Materialeigenschaften des Spendersubstrats im Bereich von mindestens einem Laserfokus bewirkbar ist, wobei der Laserfokus durch von der Lasereinrichtung emittierten Laserstrahlen ausbildbar ist, wobei durch die Veränderung der Materialeigenschaft und durch Verändern des Eindringortes der Laserstrahlung in das Spendersubstrat, insbesondere durch eine Relativbewegung des Spendersubstrats zur Lasereinrichtung, eine linienförmige Gestalt im Spendersubstrat ausbildbar ist, wobei die Veränderungen der Materialeigenschaft auf mindestens einer Erzeugungsebene im Spendersubstrat erzeugt werden, wobei die Kristallgitterebenen des Spendersubstrats gegenüber der Erzeugungsebene geneigt ausgerichtet sind, wobei die linienförmige Gestalt gegenüber einer sich an der Schnittstelle zwischen der Erzeugungsebene und der Kristallgitterebene ergebenden Schnittlinie geneigt ist, wobei durch die veränderte Materialeigenschaft das Spendersubstrat in Form von unterkritischen Rissen einreißt.

Die Spendersubstrat-Prozessdaten weisen sonders bevorzugt Ansteuerdaten zum Ansteuern der Lasereinrichtung in Abhängigkeit von mindestens einer individuellen Eigenschaft des konkret mittels der Lasereinrichtung zu behandelnden Spendersubstrats auf, insbesondere die Brechzahl des Spendersubstrats zwischen dem Ort der Modifikationserzeugung und der Eindringstelle der Laserstrahlen in das Spendersubstrat und/oder die die Dotierung des Spendersubstrats zwischen dem Ort der Modifikationserzeugung und der Eindringstelle der Laserstrahlen in das Spendersubstrat.

Diese Ausführungsform ist vorteilhaft, da dadurch, dass die linienförmige Gestalt gegenüber einer sich an der Schnittstelle zwischen der Erzeugungsebene und der Kristallgitterebene ergebenden Schnittlinie bzw. Schnittgeraden geneigt ist, das Risswachstum senkrecht zur Schreibrichtung begrenzt wird. Die Modifikationen je Schreiblinie werden somit nicht in denselben Kristallgitterebenen erzeugt. Z.B. die ersten 1-5% der Modifikationen je Schreiblinie können somit nur noch einen Bruchteil, insbesondere weniger als 75% oder weniger als 50% oder weniger als 25% oder weniger als 10% oder keine Kristallgitterebenen, der letzten 1-5% der Modifikationen derselben Schreiblinie schneiden. Die Schreiblinie ist hierbei bevorzugt länger als 1cm oder länger als 10cm oder länger als 20cm oder bis zu 20cm lang oder bis zu 30cm lang oder bis zu 40cm lang oder bis zu 50cm lang. Er werden somit je Schreiblinie deutlich weniger Modifikationen in denselben Kristallgitterebenen erzeugt, wodurch eine Rissausbreitung entlang dieser Kristallgitterebenen begrenzt wird.

Dies führt zu einem wesentlichen weiteren Vorteil der vorliegenden Erfindung, nämlich dass die Schreibrichtung nicht zwingend derart ausgeführt werden muss, dass die weiteren erzeugten Risse die zuletzt erzeugten Risse überlagern müssen. Es ist nunmehr auch möglich, dass die Schreibrichtung entgegengerichtet ist. Aufgrund der möglichen Kürze der Risse durch das erfindungsgemäße Verfahren erfolgt nämlich kein Abschatten durch die zuletzt erfolgten Risse. Dies ermöglicht es, dass trotz der entgegengerichteten Schreibrichtung z.B. Linienabstände von weniger als 100µm, insbesondere von weniger als 75µm oder von weniger als 50µm oder von weniger als 30 µm oder von weniger als 20 µm oder von weniger als 10 µm oder von weniger als 5 µm oder von weniger als 2 µm, realisiert werden können.

Als Veränderung der Materialeigenschaft kann gemäß der vorliegenden Erfindung bevorzugt das Erzeugen einer Materialmodifikation bzw. das Erzeugen eines Kristallgitterdefekts, insbesondere das Bewirken eines lokal begrenzten Phasenwechsels, insbesondere die Umwandlung von Siliziumcarbid in Silizium und Kohlenstoff, verstanden werden.

Die Laserstrahlung wird gemäß einerweiteren bevorzugten Ausführungsform der vorliegenden Erfindung mit Pulslängen von weniger als 10ns oder weniger als 5ns oder weniger als 2ns oder weniger als 1ns, insbesondere von weniger als 800ps oder von weniger als 600ps oder von weniger als 500ps oder von weniger als 400ps oder von weniger als 300ps oder von weniger als 200ps oder von weniger als 150ps oder von weniger als 100ps oder von weniger als 50ps oder von weniger als 10ps, erzeugt. Die Laserstrahlung bewirkt im Inneren des Spendersubstrats bevorzugt mittels Mehrphotonenanregung, dass Modifikationen erzeugt werden und das Spendersubstrat im Bereich der erzeugten Modifikationen bevorzugt unterkritisch bzw. abschnittsweise unterkritisch oder abschnittsweise kritisch einreißt. Kritisches Einreißen des Spendersubstrats bedeutet, dass mindestens zwei unterkritische Risse miteinander verbunden sind und bevorzugt, dass mehrere unterkritischen Risse miteinander verbunden sind, insbesondere bis zu oder mehr als 10 Risse oder bis zu oder mehr als 50 Risse oder bis zu oder mehr als 100 Risse oder bis zu oder mehr als 250 Risse. Als kritischer Riss kann hierbei auch ein Riss angesehen werden, der eine Risslänge von mehr als 100µm aufweist, insbesondere eine Länge von bis zu oder mehr als 200µm oder eine Länge von bis zu oder mehr als 500µm oder eine Länge von bis zu oder mehr als 1000µm oder eine Länge von bis zu oder mehr als 2000µm oder eine Länge von bis zu oder mehr als 3000µm oder eine Länge von bis zu oder mehr als 5000µm aufweist.

Die unterkritischen Risse werden gemäß einer weiteren bevorzugten Ausführungsform der vorliegenden Erfindung mit einer Risslänge zwischen 10µm und 100µm, insbesondere zwischen 20µm und 70µm und bevorzugt zwischen 30µm und 50µm und besonders bevorzugt zwischen 35µm und 45µm, insbesondere 40µm, erzeugt.

Das Spendersubstrat weist somit gemäß einer weiteren bevorzugten Ausführungsform der vorliegenden Erfindung eine chemischen Verbindung, wie Siliziumcarbid, auf oder besteht daraus, wobei die chemische Verbindung bevorzugt einen Stoff oder mehrere Stoffe ausgewählt aus der dritten, vierten und/oder fünften Hauptgruppe des Periodensystems der Elemente und/oder der 12. Nebengruppe des Periodensystem der Elemente aufweist, wobei die Materialveränderung eine vorbestimmte Stoffumwandlung des Ausgangsmaterials, insbesondere Siliziumcarbid, des Spendersubstrats in ein Zielmaterial, insbesondere Silizium und Kohlenstoff, darstellt.

Die Stoffumwandlung stellt gemäß einer weiteren bevorzugten Ausführungsform der vorliegenden Erfindung eine Zerlegung der chemischen Verbindung in mehrere oder in alle einzelne Bestandteile bzw. Elemente dar. Diese Ausführungsform ist vorteilhaft, da durch die gezielte Zerlegung der chemischen Verbindung des Festkörpers die für eine Abtrennung des Festkörperanteils am besten geeignete Materialkombination definiert eingestellt werden kann.

Gemäß der vorliegenden Beschreibung wird unter einem Festkörper-Ausgangsmaterial bevorzugt ein monokristallines, polykristallines oder amorphes Material verstanden. Bevorzugt eignen sich wegen der stark anisotropen atomaren Bindungskräfte Monokristalline mit einer stark anisotropen Struktur. Das Festkörper-Ausgangsmaterial weist bevorzugt ein Material oder eine Materialkombination aus einer der Hauptgruppen 3, 4, 5 und/oder der Nebengruppe 12 des Periodensystems der Elemente, insbesondere eine Kombination aus Elementen der 3.,4., 5. Hauptgruppe und der Nebengruppe 12, wie z.B. Zinkoxid oder Cadmiumtellurid, auf.

Neben Siliziumcarbit kann das Halbleiter-Ausgangsmaterial beispielsweise auch aus Silizium, Galliumarsenid GaAs, Galliumnitrid GaN, Siliciumcarbid SiC, Indiumphosphid InP, Zinkoxid ZnO, Aluminiumnitrid AIN, Germanium, Gallium(III)-oxid Ga2O3, Aluminiumoxid Al2O3 (Saphir), Galliumphosphid GaP, Indiumarsenid InAs, Indiumnitrid InN, Aluminiumarsenid AlAs oder Diamant bestehen.

Der Festkörper bzw. das Werkstück (z.B. Wafer) bzw. das Spendersubstrat weist bevorzugt ein Material oder eine Materialkombination aus einer der Hauptgruppen 3, 4 und 5 des Periodensystems der Elemente auf, wie z.B. SiC, Si, SiGe, Ge, GaAs, InP, GaN, Al2O3 (Saphir), AIN. Besonders bevorzugt weist der Festkörper eine Kombination aus der vierten, dritten und fünften Gruppe des Periodensystems vorkommenden Elementen auf. Denkbare Materialien oder Materialkombinationen sind dabei z.B. Galliumarsenid, Silizium, Siliziumcarbid, etc. Weiterhin kann der Festkörper eine Keramik (z.B. Al2O3 - Alumiumoxid) aufweisen oder aus einer Keramik bestehen, bevorzugte Keramiken sind dabei z.B. Perovskitkeramiken (wie z.B. Pb-, O-, Ti/Zr-haltige Keramiken) im Allgemeinen und Blei-Magnesium-Niobate, Bariumtitanat, Lithiumtitanat, Yttrium-Aluminium-Granat, insbesondere Yttrium-Aluminium-Granat Kristalle für Festkörperlaseranwendungen, SAW-Keramiken (surface acoustic wave), wie z.B. Lithiumniobat, Galliumorthophosphat, Quartz, Calziumtitanat, etc. im Speziellen. Der Festkörper weist somit bevorzugt ein Halbleitermaterial oder ein Keramikmaterial auf bzw. besonders bevorzugt besteht der Festkörper aus mindestens einem Halbleitermaterial oder einem Keramikmaterial. Der Festkörper ist bevorzugt ein Ingot oder ein Wafer. Besonders bevorzugt handelt es sich bei dem Festkörper um ein für Laserstrahlen zumindest teilweise transparentes Material. Es ist somit weiterhin denkbar, dass der Festkörper ein transparentes Material aufweist oder teilweise aus einem transparenten Material, wie z.B. Saphir, besteht bzw. gefertigt ist. Weitere Materialien, die hierbei als Festkörpermaterial alleine oder in Kombination mit einem anderen Material in Frage kommen, sind z.B. "wide band gap"-Materialien, InAISb, Hochtemperatursupraleiter, insbesondere seltene Erden Cuprate (z.B. YBa2Cu3O7). Es ist zusätzlich oder alternativ denkbar, dass der Festkörper eine Photomaske ist, wobei als Photomaskenmaterial im vorliegenden Fall bevorzugt jedes zum Anmeldetag bekannte Photomaskenmaterial und besonders bevorzugt Kombinationen daraus verwendet werden können. Ferner kann der Festkörper zusätzlich oder alternativ Siliziumcarbid (SiC) aufweisen oder daraus bestehen. Der Festkörper ist bevorzugt ein Ingot, der in einem Ausgangszustand, d.h. in einem Zustand vor dem Abtrennen des ersten Festkörperanteils, bevorzugt mehr als 5 kg oder mehr als 10 kg oder mehr als 15 kg oder mehr als 20 kg oder mehr als 25 kg oder mehr als 30 kg oder mehr als 35 kg oder mehr als 50 kg wiegt. Der Festkörperanteil ist bevorzugt eine Festkörperlage, insbesondere ein Wafer mit mindestens 300mm Durchmesser.

Die Ablöseeinrichtung weist gemäß einer weiteren bevorzugten Ausführungsform der vorliegenden Erfindung eine Aufbringeinrichtung zum Aufbringen von einer mindestens ein Polymermaterial aufweisenden Schicht, insbesondere einer Polymerfolie, auf das Spendersubstrat auf oder im Transportweg des Spendersubstrats ist vor der Ablöseeinrichtung eine Aufbringeinrichtung ausgebildet und die Ablöseeinrichtung weist bevorzugt eine Anpresseinrichtung zum zumindest abschnittsweisen oder vollständigen Anpressen an die das mindestens eine Polymermaterial aufweisende Schicht auf und die Ablöseeinrichtung weist bevorzugt eine Temperiereinrichtung zum Abkühlen der an dem Spendersubstrat angeordneten und mit Druck durch die Anpresseinrichtung beaufschlagten Schicht aus mindestens einem Polymermaterial auf.

Bevorzugt werden hierbei durch die Aufbringeinrichtung Schichtdaten bezüglich mindestens eines Parameters der mindestens ein Polymermaterial aufweisenden Schicht bereitgestellt, die Schichtdaten umfassen dabei bevorzugt die Materialzusammensetzung und/oder die Schichtabmessungen, insbesondere die Schichtdicke, und/oder durch die Anpresseinrichtung werden Anpresskraftdaten bereitgestellt, wobei die Anpresskraftdaten bevorzugt die Anpresskraft der Anpresseinrichtung an die mindestens ein Polymermaterial aufweisenden Schicht pro Fläche umfasst und/oder die Kraftverteilung über die Fläche umfasst und/oder durch die Temperierungseinrichtung werden Temperierungsdaten bereitgestellt, wobei die Temperierungsdaten bevorzugt die Temperatur der das mindestens eine Polymer aufweisenden Schicht im Zeitpunkt einer Rissauslösung und/oder Rissausbreitung umfasst.

Diese Ausführungsform ist vorteilhaft, da die Spendersubstrat-Prozessdaten weiter mittels der zusätzlich erfassten Daten verfeinerbar sind und dadurch eine sehr umfassende Datenerfassung und dadurch Anpassung der Steuerung des Abtrennprozesses möglich wird. Bevorzugt werden somit bezüglich mehrerer Behandlungseinrichtungen, insbesondere der bzgl. der Mehrzahl an Behandlungseinrichtungen und besonders bevorzugt bezüglich aller Behandlungseinrichtungen, jeweils mindestens ein Prozessparameter und bevorzugt mehrere Prozessparameter erfasst und zur Ablösung eines weiteren Wafers modifiziert und als modifizierte Spendersubstrat-Prozessdaten bereitgestellt.

Eine Prozessoreinrichtung zur Modifikation der Spendersubstrat-Prozessdaten ist gemäß einer weiteren bevorzugten Ausführungsform der vorliegenden Erfindung vorgesehen, wobei durch die Modifikation der Spendersubstrat-Prozessdaten das vordefinierte Ergänzen und/oder Anpassen von Spendersubstrat-Prozessausgangsdaten mittels zumindest zweier Arten von Daten zum Anpassen von mindestens einem Betriebsparameter, insbesondere der Fokustief und/oder der Laserenergie, der Lasereinrichtung bewirkt wird, wobei die Daten aus der Gruppe an Daten ausgewählt werden, die Analysedaten, Messdaten, insbesondere Dicke, Brechzahldaten, Modifikationsmessdaten, Aufbereitungsdaten und/oder Daten der Messeinrichtung zur Bestimmung der Oberflächeneigenschaften der freigelegten Oberfläche des Spendersubstrats nach dem Trennschritt bzw. Oberflächeneigenschaftsdaten der freigelegten Oberfläche des Spendersubstrats und/oder Daten der Messeinrichtung zur Bestimmung der Oberflächeneigenschaften der freigelegten Oberfläche des Wafers nach dem Trennschritt bzw. Oberflächeneigenschaftsdaten der freigelegten Oberfläche des Wafers aufweist.

Mittels der Analyseeinrichtung sind somit bevorzugt Werkstückeigenschaften erfassbar und in Datenform überführbar. Zusätzlich oder alternativ können diese Spendersubstrateigenschaften die Spendersubstratdicke und/oder die Spendersubstratmasse und/oder das TTV der Hauptoberfläche des Spendersubstrats umfassen. Die Spendersubstrat-Prozessdaten umfassen bevorzugt Daten zur Laserdosis und/oder zum Lasermuster und/oder zur Pulsform und/oder zur Pulslänge.

Mittels einer Modifikationsmesseinrichtung wird bevorzugt mindestens die lokale Brechzahl und/oder das TTV und/oder die Schreibtiefe, insbesondere Modifikationserzeugungstiefe in Bezug zur Hauptoberfläche des Spendersubstrats, erfasst und bevorzugt an eine Datenbank bzw. Prozessoreinrichtung zum Modifizieren der Spendersubstrat-Prozessdaten und/oder zur Dokumentation übermittelt.

Im Falle des Vorhandenseins einer oder mindestens einer Reinigungs- und/oder Aktivierungseinrichtung, weisen die Spendersubstrat-Prozessdaten bevorzugt Aktivierungsintensitätsdaten auf, durch welche die von der Reinigungs- und/oder Aktivierungseinrichtung zu erzielende Aktivierungsintensität vorgegeben wird. Bevorzugt wird mindestens ein Betriebsparameter, insbesondere Oberflächenenergie und/oder Feldhomogenität und/oder Streamerhäufigkeit und/oder Plasmaparameter, der Reinigungs- und/oder Aktivierungseinrichtung während der konkreten Behandlung eines Spendersubstrats erfasst und bevorzugt an eine Datenbank bzw. Prozessoreinrichtung zum Modifizieren der Spendersubstrat-Prozessdaten und/oder zur Dokumentation übermittelt.

Im Falle des Vorhandenseins einer Aufbringeinrichtung, insbesondere einer Laminiereinrichtung zum Aufbringen einer Spannungserzeugungsschicht, wie z.B. einer Polymerfolie, insbesondere PDMS aufweisend oder daraus bestehend, weisen die Spendersubstrat-Prozessdaten bevorzugt Daten auf, durch welche ein von der Aufbringeinrichtung zu erzielender Anpressdruck und/oder eine Behandlungstemperatur zur Erwärmung der Spannungserzeugungsschicht und/oder der Hauptoberfläche und/oder eine Behandlungsdauer, insbesondere Erwärmungsdauer und/oder Anpressdauer, vorgegeben wird.

Ist die Ablöseeinrichtung als Ultraschalleinrichtung ausgebildet, dann weisen die Spendersubstrat-Prozessdaten bevorzugt Daten auf, durch welche der Ort der Ultraschallbeaufschlagung am Spendersubstrat vorgegeben wird und/oder durch welche die Intensität des Ultraschalls vorgegeben wird und/oder durch welche die Wellenlänge des Ultraschalls vorgegeben wird.

Ist die Ablöseeinrichtung als Zugeinrichtung ausgebildet, dann weisen die Spendersubstrat-Prozessdaten bevorzugt Daten auf, durch welche eine Zugkraft bzw. ein Zugkraftverlauf vorgegeben wird und/oder an welcher Stelle der Hauptoberfläche die Zugkräfte in das Spendersubstrat einzuleiten sind.

Ist die Ablöseeinrichtung als Cold-Spliteinrichtung ausgebildet, dann weisen die Spendersubstrat-Prozessdaten bevorzugt Daten auf, durch welche eine Temperierung des Spendersubstrats und/oder der Spannungserzeugungsschicht vorgegeben wird und/oder durch welche ein Temperierungsverlauf und/oder eine Temperierungsdauer vorgegeben wird.

Die Ablöseeinrichtung umfasst bevorzugt ebenfalls eine Anpresseinrichtung. Daher umfassen die Spendersubstrat-Prozessdaten bevorzugt zusätzlich oder alternativ auch Daten, durch welche ein Druck auf die Spannungserzeugungsschicht vorgegeben wird. Bevorzugt wird ein Druckverlauf in Abhängigkeit von den Oberflächenkoordinaten der Hauptoberfläche vorgegeben und/oder es wird eine minimale und/oder maximale oder konkrete Anpresskraft zur Erzeugung eines definierten Drucks vorgegeben.

Während des Cold-Splits wird bevorzugt mindesten ein Cold-Splitparameter, insbesondere die Splitkraft und/oder die Splitdauer und/oder die Splittemperatur, erfasst und bevorzugt an eine Datenbank bzw. Prozessoreinrichtung zum Modifizieren der Spendersubstrat-Prozessdaten und/oder zur Dokumentation übermittelt.

Nach der Abtrennung des Wafers vom Spendersubstrat wird bevorzugt mittels einer Messeinrichtung zur Bestimmung von mindestens einer Oberflächeneigenschaft der freigelegten Oberfläche des Wafers nach dem Trennschritt Rauheit, insbesondere lokale Rauheit bzw. Rauheitsverteilung über die freigelegte Fläche, und/oder Schadtiefe, insbesondere lokale Schadtiefen bzw. Schadtiefenverteilung über die freigelegte Fläche, erfasst und bevorzugt an eine Datenbank bzw. Prozessoreinrichtung zum Modifizieren der Spendersubstrat-Prozessdaten und/oder zur Dokumentation übermittelt.

Im Falle des Vorhandenseins einer Waferoberflächenbehandlungseinrichtung weisen die Spendersubstrat-Prozessdaten bevorzugt Daten auf, durch welche eine Bearbeitungstiefe und/oder Bearbeitungsgeschwindigkeit und/oder Bearbeitungsweg vorgegeben wird.

Bevorzugt ist eine Messeinrichtung zum Vermessen des abgetrennten und oberflächenbehandelten Wafers vorgesehen. Mittels der Messeinrichtung wird bevorzugt die Ebenheit der behandelten Waferoberfläche und/oder die Schadtiefe und/oder Spannungen (Polariskop) und/oder die Brechzahl über die Schreibtiefe erfasst bzw. bestimmt und bevorzugt an eine Datenbank bzw. Prozessoreinrichtung zum Modifizieren der Spendersubstrat-Prozessdaten und/oder zur Dokumentation übermittelt.

Abhängig von der Absorption des Materials, die stark von der Dotierung beeinflusst wird, muss für eine Bearbeitung im Laserprozess in der Zieltiefe eine gewisse kritische Intensität erreicht werden. Ist das Material also stärker absorbierend, muss bei gleicher Schreibtiefe eine höhere Eingangspulsenergie am Laser gewählt werden, damit nach Materialdurchlauf dieselbe Leistung in der Tiefe zur Lasermodifikation zur Verfügung steht. Damit ergibt sich aus der ortsaufgelösten Messung der Dotierung vor der Laserbearbeitung über eine Umrechnungstabelle oder eine vorbestimmte Funktion eine ortsaufgelöste Laserenergiekarte für das Werkstück. Diese Karte ist zunächst relativ zu verstehen und gibt an wieviel Prozent der absoluten Laserenergie an einem konkreten Ort auf der Probe verwendet werden.

Liegt die Waferoberfläche eingemessen in einer Oberflächenkarte vor, so können Verwölbungen, lokale Erhebungen und ähnliche Fehler des Substrats in einer Höhenkarte derart ausgeglichen werden, dass der Laserprozess nicht der Oberfläche folgt, sondern eine möglichst plane Bearbeitungs- und Lasermodifikationsebene erzeugt wird, die in Zukunft keine besonderen Korrekturen mehr benötigt und dadurch Schleif- und generelle Materialverluste minimiert. Die Höhenkarte kann um ortsaufgelöste Änderungen der optischen Dichte korrigiert werden (Umrechnungstabelle Dotierung -> Brechzahl oder vorbestimmte Funktion).

Durch die Absorption im Material muss die absolute Laserenergie für Schädigungen in größerer Tiefe größer sein, damit im Fokuspunkt genügend Energie für die benötigte Kristallschädigung vorhanden ist.

Gleichzeitig ist die Schreibtiefe eine Funktion der eingesetzten Laserenergie, was zu einer Kopplung von Höhenkarte, Laserenergiekarte und/oder absoluter Laserenergie führt.

Bei fester mit den optischen Aufbauten angepeilter Schreibtiefe kann die kritische Schwellenergie, ab der eine Materialmodifikation einsetzt für höhere Laserpulsenergien bereits früher im Strahlenverlauf erreicht werden, was eine Modifikation über der angestrebten Zieltiefe zur Folge hätte. Ist also eine höhere Energie als die für den Schwellwert absolut nötige Laserpulsenergie aus Gründen der Prozesssicherheit zunächst angestrebt oder wird diese eingesetzt, kann es sinnvoll sein, das frühere Erreichen der Schwelle entlang des Strahls vermittels einer Korrektur an Zieltiefe oder den optischen Aufbauten auszugleichen. Dies führt zu Korrekturen für die Laserenergiekarte, die Höhenkarte und/oder die absolute Laserenergie.

Der mindestens eine Betriebsparameter der Lasereinrichtung und/oder der Schleif- und/oder Poliervorrichtung und/oder der Laminiervorrichtung und/oder der Ablöseeinrichtung ist/sind gemäß einer weiteren bevorzugten Ausführungsform der vorliegenden Erfindung in Abhängigkeit der infolge einer konkreten Waferabtrennung erfassten Daten von der Prozessoreinrichtung bzw. Datenbank anpassbar, wobei zumindest ein Betriebsparameter der Lasereinrichtung und/oder der Schleif- und/oder Poliervorrichtung und/oder der Laminiervorrichtung und/oder der Ablöseeinrichtung bei allen oder bei mehr als 25%, insbesondere bei mehr als 40% oder mehr als 50% oder mehr als 75% oder mehr als 90% oder bei mehr als 95%, aller von einem konkreten Spendersubstrat abgetrennten Wafern zur Reduzierung einer Planarisierungsreserve angepasst wird.

Damit kann die Planarisierungsreserve, je abzutrennendem Wafer oder jeweils für eine vordefinierte Anzahl an Wafern, über den Verlauf des Boules oder Ingots sukzessive reduziert werden und daraus zusätzliche Scheiben bzw. Wafer erzeugt werden. So können rein beispielsweise 1-2 Wafer mit einer Dicke von 350µm pro 25mm Boule abgetrennt werden.

Werden dünnere Zieldicken hergestellt, so kann dieses Zusatzpotential nochmals deutlich erhöht werden.

Die Planarisierungsreserve ist diejenige Zusatzdicke (Laserschreibtiefe = Zieldicke + Planarisierungsreserve) mit der ein Splitwafer inklusive aller Dicken-, Ebenheits- und Rauhigkeitstoleranzen hergestellt wird. Diese Toleranzen werden im in nachfolgenden Planarisierungsschritten abgetragen um spezifikationstreue Scheiben zu erhalten. Aber auch diese Spezifikation lässt noch Toleranzen zu (z.B. sind SiC Wafer mit 350+/-25µm). Kann man nun gezielt/sicher an der unteren Toleranzgrenze ohne Ausschuss herstellen, lassen sich zusätzliche Teile erzeugen (50Wafer mal 23µm Reserve bedeuten 3 zusätzliche Werkstücke).

Besonders bevorzugt weisen die Spendersubstrat-Prozessdaten somit Daten, insbesondere Messdaten und/oder Analysedaten, zu einer oder mindestens einer vorangegangenen Waferabtrennung des konkreten Spendersubstrats auf. Bei der Behandlung eines konkreten Spendersubstrats zur Abtrennung eines ersten Wafers werden die Prozessdaten bevorzugt durch vordefinierte Prozessdaten, insbesondere vorangegangener Spendersubstratbehandlungen anderer Spendersubstrate, ersetzt oder ergänzt. Ferner wird für die Abtrennung von einzelnen oder mehreren Wafern Prozessdaten und/oder Waferdaten anderer Spendersubstrate und/oder von anderen Spendersubstraten abgetrennten Wafern zur Definition der konkreten Spendersubstratbehandlung und/oder Waferabspaltung verwendet bzw. hinzugezogen.

D.h., dass während der Waferabtrennung, insbesondere während des Splits, werden bevorzugt nicht nur "Erfahrungswerte" des aktuell fortschreitenden Boulesplits im Prozessleitrechner verarbeitet und gespeichert, sondern auch Messungen aus der Datenbank frühere Spendersubstratbehandlungen, insbesondere Waferabtrennungen, insbesondere Splits, einbezogen. Besonders bevorzugt werden mittels statistischer Methoden Prozessgrößen, insbesondere Vorrichtungsparameter, anhand der prozessintegrierten Messtechnik vorhergesagt bzw. ermittelt und dabei besonders bevorzugt weiter, insbesondere kontinuierlich, verfeinert.

Beispiel: Bei gleichbleibendem Dotiergehalt und gleicher Laserenergie von Wafer n und Wafer n-1 eines Boules, ist die "Post-Split"-Rauheit von Wafer n deutlich größer als bei Wafer n-1. Dies kann zum Beispiel daran liegen, dass durch die geringere Dicke des Boules bei Wafer n der Riss stärker um die Laserebene schwankt weil das Werkstück weniger steif ist. Ein Indiz dafür könnte sein, dass sich die Split-Dauer bei gleicher Kühltemperatur bei Wafer n im Vergleich zu Wafer n-1 verändert. Das bedeutend bei gleicher Laserschadschicht wird der Riss trotzdem unterschiedlich ausgelöst. Hier kann auf verschiedene Art und Weise der Prozess nachgeführt werden. Der Anpressdruck der Kälteplatten während des Cold Split wird für Wafer n+1 erhöht. Stellt sich keine Besserung ein, werden parallel z.B. die absolute Laserenergier für Wafer n+2 angepasst werden. Über die Bearbeitung von mehreren Boules des gleichen Materials können dadurch weitere Korrelationen bestimmt werden, so dass der Anpressdruck der Kältplatten generell vor der dem Split aus der Dicke des Werkstücks bestimmt wird.

Allerdings ist auch vorstellbar, dass nicht die Steifheit des Materials die Ursache des Unterschieds ist, sondern dass beim Laserprozess z.B. thermische Volumenprozesse bei dünneren Werkstücken stärker berücksichtigt werden müssen. Dann ist es sinnvoll die absolute Laserenergie für Wafer n+1 anzupassen. Dies würde über die Zeit zu einer neuen Korrelation von absoluter Laserenergie mit Werkstückdicke führen, welche vor dem Laserprozess zu Korrekturen führt.

Ein derartiges Clustertool bzw. eine derartige Anlage mit übergeordneter Prozessführung und Datenbank kann auch schon ohne "lernenden Split" mittels der statistischen Methoden einen signifikanten Mehrwert bieten. Aufgrund der sequenziellen Natur des durch die erfindungsgemäße Anlage ausgeführten Verfahrens mit der ohnehin scheibenweisen Messtechnik, insbesondere zum Dotiergehalt und/oder zur Brechzahl, kann ein Dotiertomogramm und/oder Brechzahltomogramm, des Wafers genauen Aufschluss über die Verhältnisse während des Kristallwachstums geben und somit den Kristallzüchter befähigen, seine Prozesse, insbesondere Ofen, schneller für bessere Kristalle einzustellen.

Analog zur Reduzierung der Planarisierungsreserve können Prozessreserven oder Parameterreserven zur Beschleunigung des Gesamtprozesses und/oder zum Einsparen von Energie im Gesamtprozess und/oder zur Reduzierung von Abfall vorgenommen werden.

Prozess- und/oder Parameterreserven können hierbei durch die während der jeweiligen Behandlung mittels einer Einrichtung, insbesondere Oberflächenbehandlungseinrichtung, Laseeinrichtung, Reinigungs- und/oder Aktivierungseinrichtung, Aufbringeinrichtung, Ablöseeinrichtung und/oder Waferoberflächenbehandlungseinrichtung und/oder Untereinrichtungen, wie z.B. die Anpresseinrichtung der Ablöseeinrichtung, erfassten Prozessparameter bzw. Betriebsparameter und/oder durch die mittels mindestens einer Messeinrichtung erfassten Werte bzw. Daten definiert werden. Bevorzugt ist für einzelne oder jeden Prozessparameter bzw. Betriebsparameter und/oder für einzelne oder jeden erfassten Wert ein Idealwert bestimmbar und die zu diesem Idealwert erfasste Abweichung stellt dabei bevorzugt die maximal mögliche auflösbare Reserve dar.

Als Spendersubstrat-Prozessausgangsdaten sind hierbei diese Spendersubstrat-Prozessdaten zu verstehen, die vor der Laserbehandlung zur Abtrennung des nächstens Wafers verfügbar sind. Als Spendersubstrat-Prozessausgangsdaten können somit die Spendersubstrat-Prozessdaten vor der Abtrennung des ersten Wafers eines konkreten Spendersubstrats oder vor der Abtrennung des letzten Wafers eines konkreten Spendersubstrats oder vor der Abtrennung eines Wafers zwischen dem ersten und letzten Wafer eines konkreten Spendersubstrats verstanden werden.

Die Wafer-Prozessdaten umfassen gemäß einer weiteren bevorzugten Ausführungsform der vorliegenden Erfindung zusätzlich Positionsdaten, wobei die Positionsdaten die Position des Wafers im Spendersubstrat beschreiben und/oder Messdaten der Messeinrichtung umfassen, wobei die Messdaten die Dicke des abgetrennten Wafers umfassen.

Diese Ausführungsform ist vorteilhaft, da in Kenntnis konkreter Wafereigenschaften nachgelagerte Fertigungsprozesse, wie z.B. das Aufwachsen definierter Schichten, deutlich effizienter bewirkt werden können.

Die oben genannte Aufgabe ist zusätzlich durch ein Verfahren zum Reduzieren einer beim Zerteilen eines Spendersubstrats in eine Vielzahl an Festkörperscheiben vorgesehenen Planierungsreserve gelöst. Das erfindungsgemäße Verfahren umfasst dabei bevorzugt mindestens die Schritte: Bestimmen von mindestens einer individuellen Eigenschaft, insbesondere der Dotierung, eines konkreten Spendersubstrats mittels einer Analyseeinrichtung, Erzeugen von Analysedaten mittels der Analyseeinrichtung in Abhängigkeit von der zumindest einen bestimmten individuellen Eigenschaft, Erzeugen von Spendersubstrat-Prozessdaten zu dem konkreten Spendersubstrat mittels einer Dateneinrichtung, wobei die Spendersubstrat-Prozessdaten die Analysedaten der Analyseeinrichtung umfassen, wobei die Analysedaten zumindest die eine individuelle Eigenschaft des Spendersubstrats beschreiben und wobei die Spendersubstrat-Prozessdaten eine erste Planierungsreserve definiert, Erzeugen von Modifikationen im Inneren des konkreten Spendersubstrats zum Ausbilden eines Ablösebereichs im Inneren des Spendersubstrats mittels einer Lasereinrichtung, wobei die Lasereinrichtung in Abhängigkeit der Spendersubstrat-Prozessdaten, die dem konkreten Spendersubstrat zuordenbar sind, betrieben wird, Erzeugen von mechanischen Spannungen im Inneren des konkreten Spendersubstrats zum Auslösen und/oder Führen eines Risses zum Abtrennen von einem Wafer von dem konkreten Spendersubstrat mittels einer Ablöseeinrichtung, und Bestimmen der mindestens einen individuellen Eigenschaft, insbesondere der Dotierung und/oder Brechzahl, des um den konkreten Wafer reduzierten konkreten Spendersubstrats mittels der oder einer weiteren Analyseeinrichtung, Erzeugen von neuen Analysedaten mittels der jeweiligen Analyseeinrichtung in Abhängigkeit von der zumindest einen bestimmten individuellen Eigenschaft, und Modifizieren der Spendersubstrat-Prozessdaten zum erneuten Erzeugen von Modifikationen in dem konkreten Spendersubstrat mittels der neuen Analysedaten und definieren einer zweiten Planierungsreserve als Bestandteil der Spendersubstrat-Prozessdaten, wobei die zweite Planierungsreserve geringer ist als die erste Planierungsreserve.

Die zuvor genannte Aufgabe ist weiter erfindungsgemäß durch einen Datensatz gemäß Anspruch 15 gelöst. Der erfindungsgemäße Datensatz wird dabei bevorzugt in einem zuvor genannten Verfahren erzeugt. Der Datensatz umfasst hierbei bevorzugt mindestens die vor jeder Laserbehandlung erfassten Analysedaten und/oder Brechzahldaten.

Die zuvor genannte Aufgabe wird ferner durch ein Verfahren gemäß Anspruch 13 zum Zerteilen eines Spendersubstrats in eine Vielzahl an Festkörperscheiben gelöst, mindestens umfassend die Schritte:
Bestimmen von mindestens einer individuellen Eigenschaft, insbesondere der Dotierung und/oder der Brechzahl, eines konkreten Spendersubstrats mittels einer Analyseeinrichtung, Erzeugen von Analysedaten mittels der Analyseeinrichtung in Abhängigkeit von der zumindest einen bestimmten individuellen Eigenschaft,
Erzeugen von Spendersubstrat-Prozessdaten zu dem konkreten Spendersubstrat mittels einer Dateneinrichtung, wobei die Spendersubstrat-Prozessdaten die Analysedaten der Analyseeinrichtung umfassen, wobei die Analysedaten zumindest die eine individuelle Eigenschaft des Spendersubstrats beschreiben,
Erzeugen von Modifikationen im Inneren des konkreten Spendersubstrats zum Ausbilden eines Ablösebereichs im Inneren des Spendersubstrats mittels einer Lasereinrichtung, wobei die Lasereinrichtung in Abhängigkeit der Spendersubstrat-Prozessdaten, die dem konkreten Spendersubstrat zuordenbar sind, betrieben wird,
Erzeugen von mechanischen Spannungen im Inneren des konkreten Spendersubstrats zum Auslösen und/oder Führen eines Risses zum Abtrennen von einem Wafer von dem konkreten Spendersubstrat mittels einer Ablöseeinrichtung, und Bestimmen der mindestens einen individuellen Eigenschaft, insbesondere der Dotierung, des um den konkreten Wafer reduzierten konkreten Spendersubstrats mittels einer Analyseeinrichtung, Erzeugen von neuen Analysedaten mittels der Analyseeinrichtung in Abhängigkeit von der zumindest einen bestimmten individuellen Eigenschaften, und Modifizieren der Spendersubstrat-Prozessdaten mittels der neuen Analysedaten, Erzeugen von Modifikationen im Inneren des konkreten Spendersubstrats zum Ausbilden eines Ablösebereichs im Inneren des Spendersubstrats mittels der Lasereinrichtung oder mittels einer weiteren Lasereinrichtung, wobei die Lasereinrichtung oder die weitere Lasereinrichtung in Abhängigkeit der modifizierten Spendersubstrat-Prozessdaten betrieben wird, Erzeugen von mechanischen Spannungen im Inneren des konkreten Spendersubstrats zum Auslösen und/oder Führen eines Risses zum Abtrennen von einem Wafer von dem konkreten Spendersubstrat mittels einer Ablöseeinrichtung.

Die zuvor genannte Aufgabe ist durch ein Verfahren zum Erzeugen von Prozessdaten zum Ansteuern von Komponenten einer Fertigungsanlage zur Ablösung von Wafern von Spendersubstraten gelöst, siehe Anspruch 14. Diese Verfahren umfasst bevorzugt mindestens die Schritte: Erzeugen von Analysedaten mittels einer Analyseeinrichtung in Abhängigkeit von mindestens einer Eigenschaft eines Spendersubstrats, Erzeugen von Spendersubstrat-Prozessdaten zu dem konkreten Spendersubstrat mittels einer Dateneinrichtung, wobei die Spendersubstrat-Prozessdaten zum Einstellen einer Lasereinrichtung zum Erzeugen von Modifikationen im inneren des Spendersubstrats dienen, wobei die Spendersubstrat-Prozessdaten die Analysedaten der Analyseeinrichtung umfassen, wobei die Analysedaten zumindest die eine individuelle Eigenschaft des Spendersubstrats beschreiben, Bestimmen der mindestens einen individuellen Eigenschaft, insbesondere der Dotierung, des um den konkreten Wafer reduzierten konkreten Spendersubstrats mittels einer Analyseeinrichtung, Erzeugen von neuen Analysedaten mittels der Analyseeinrichtung oder einer weiteren Analyseeinrichtung in Abhängigkeit von der zumindest einen bestimmten individuellen Eigenschaften, wobei die neuen Analysedaten für dasselbe Spendersubstrat erfasst werden, wobei das Spendersubstrat bei der Erzeugung der neuen Analysedaten zumindest um den konkreten Wafer gekürzt ist, Modifizieren der Spendersubstrat-Prozessdaten mittels der neuen Analysedaten zum Einstellen der Lasereinrichtung oder einer weiteren Lasereinrichtung, wobei in Abhängigkeit von den modifizierten Spendersubstrat-Prozessdaten Modifikationen im Spendersubstrat erzeugbar sind, die weniger weit zur Eindringoberfläche beabstandet sind als bei mindestens einer vorangegangenen Laserbehandlung desselben Spendersubstrats.

Gemäß einer bevorzugten Ausführungsform der vorliegenden Erfindung steht das Druckbeaufschlagungselement während der Druckbeaufschlagung zumindest abschnittsweise flächig mit der Spannungserzeugungsschicht in Kontakt. Bevorzugt überlagert das Druckbeaufschlagungselement dabei mehr als 20% oder mehr als 30% oder mehr als 50% oder mehr als 75% oder mehr als 90% oder vollständig die axial das Spendersubstrat begrenzende Oberfläche, die nach dem Abtrennen Bestandteil der Festkörperlage ist. Bevorzugt liegt das Druckbeaufschlagungselement dabei an der auf dieser Oberfläche angeordneten oder erzeugten Spannungserzeugungsschicht an. Bevorzugt kontaktiert das Druckbeaufschlagungselement dabei mehr als 20% oder mehr als 30% oder mehr als 50% oder mehr als 75% oder mehr als 90% der Oberfläche der das Spendersubstrat in axialer Richtung überlagernden Spannungserzeugungsschicht.

Das mindestens eine Druckbeaufschlagungselement erzeugt gemäß einer weiteren Ausführungsform der vorliegenden Erfindung den Druck in einem Randbereich, wobei der Randbereich bevorzugt die in radialer Richtung äußeren bzw. zentrumsfernen bzw. randnahen 5% oder 10% oder 15% oder 20% oder 30% oder 40% oder 50% oder 60% oder 70% oder 80% der Oberfläche der an dem Spendersubstart angeordneten Spannungserzeugungsschicht umfasst, und/oder das mindestens eine Druckbeaufschlagungselement erzeugt den Druck in einem Zentrumsbereich, wobei der Zentrumsbereich bevorzugt die in radialer Richtung inneren bzw. zentrumsnahen bzw. sich bis zum Zentrum hin erstreckenden 5% oder 10% oder 15% oder 20% oder 30% oder 40% oder 50% oder 60% oder 70% oder 80% der Oberfläche der an dem Spendersubstart angeordneten Spannungserzeugungsschicht umfasst oder das mindestens eine Druckbeaufschlagungselement erzeugt den Druck über den gesamten ebenen Anteil der Oberfläche des Spendersubstrats, an der die Spannungserzeugungsschicht angeordnet ist. Diese Ausführungsform ist vorteilhaft, da der Druck zum Beeinflussen der Rissausbreitung bedarfsgerecht beaufschlagt werden kann.

Gemäß einer bevorzugten Ausführungsform der vorliegenden Erfindung ist das Druckbeaufschlagungselement beweglich angeordnet und infolge der thermischen Beaufschlagung der Spannungserzeugungsschicht von der Spannungserzeugungsschicht relativ zum Spendersubstrat ausgelenkt wird oder das Spendersubstrat ist beweglich angeordnet und wird infolge der thermischen Beaufschlagung der Spannungserzeugungsschicht von der Spannungserzeugungsschicht relativ zum Druckbeaufschlagungselement ausgelenkt. Bevorzugt werden mittels einer Druck- oder Kraftmesseinrichtung der beaufschlagte Druck bzw. die beaufschlagte Kraft (pro Fläche) erfasst und/oder es wird die durch das Polymermaterial bzw. die Polymerschicht bzw. die Polymerfolie erzeugte Auslenkkraft erfasst und den Prozessdaten und/oder Waferdaten hinzugefügt.

Die Auslenkung des Druckbeaufschlagungselements erfolgt dabei bevorzugt erst nach Überschreiten einer vordefinierten Mindestkraft. Die vordefinierte Mindestkraft ist bevorzugt zusätzlich oder alternativ Bestandteil der Prozessdaten und/oder Waferdaten.

Die Modifikationen werden gemäß einer weiteren bevorzugten Ausführungsform der vorliegenden Erfindung entlang einer Linie, insbesondere Punktlinie/n bzw. aus Punkten erzeugten Linie/n, oder mehrerer, insbesondere paralleler, Linien zur Ausbildung von Modifikationslinien erzeugt oder wobei die Modifikationen unter Ausbildung von einer Modifikationslinie oder mehreren, insbesondere parallelen, Modifikationslinien, insbesondere Punktlinie/n bzw. aus Punkten erzeugten Linie/n, erzeugt werden. Die einzelnen Modifikationen erzeugen gemäß einer weiteren bevorzugten Ausführungsform der vorliegenden Erfindung Druckspannungen im Spendersubstrat, wodurch das Spendersubstart durch die Modifikationslinie oder die Modifikationslinien zumindest mehrheitlich in der gegenüber der Hauptoberfläche bevorzugt geneigten Erstreckungsrichtung der Kristallgitterebenen einreißt.

Gemäß einer weiteren bevorzugten Ausführungsform der vorliegenden Erfindung werden die Modifikationen je Modifikationslinie derart erzeugt, dass sich bei mehr als M Kristallgitterversetzungen (je cm2) im Spendersubstrat der Riss je Modifikationslinie in der gegenüber der Hauptoberfläche geneigten Erstreckungsrichtung der Kristallgitterebenen weniger als 50µm vom nächsten Punkt der Modifikationslinie bzw. der Erzeugung ausbreitet oder es werden die Modifikationen je Modifikationslinie derart erzeugt, dass sich bei weniger als O Kristallgitterversetzungen (je cm2) im Spendersubstrat der Riss je Modifikationslinie in der gegenüber der Hauptoberfläche geneigten Erstreckungsrichtung der Kristallgitterebenen mehr als 100µm, insbesondere mehr als 200 µm oder mehr als 250 µm oder mehr als 300 µm oder mehr als 350 µm, ausbreitet, oder die Modifikationen je Modifikationslinie derart erzeugt werden, dass sich bei mehr als O Kristallgitterversetzungen (je cm²) im Spendersubstrat und weniger als M Kristallgitterversätzen (je cm²) im Spendersubstrat der Riss je Modifikationslinie in der gegenüber der Hauptoberfläche geneigten Erstreckungsrichtung der Kristallgitterebenen zwischen 50 µm und 100 µm, insbesondere zwischen 50 µm und 100 µm oder 50 µm und 200 µm oder 50 µm und 250 µm oder 50 µm und 300 µm oder 50 µm und 350 µm, ausbreitet. Hierbei gilt besonders bevorzugt O<M.

Diese Lösung ist vorteilhaft, da eine Behandlungsvorschrift für unterschiedliche Materialqualitäten gegeben wird. Durch diese Behandlungsvorschrift lassen sich Spendersubstrate unterschiedlicher Qualität zuverlässig und mit geringen Materialverlusten teilen. Die Behandlungsvorschrift definiert dabei zusätzlich oder alternativ, dass bei steigender Materialqualität, d.h. abnehmender Versetzungsdichte, längere Risse bzw. längere unterkritische Risse vorzusehen sind. Umgekehrt sind bei geringerer Materialqualität, d.h. zunehmender Versetzungsdichte bzw. Kristallgitterversetzungsdichte, kürzere Risse vorzusehen.

Diese Lösung ist ferner vorteilhaft, da die Analyseeinrichtung zum Bestimmen von mindestens einer individuellen Eigenschaft der jeweiligen Spendersubstrate die Kristallgitterversätze eines oder mehrerer Spendersubstarte erfasst bzw. analysiert bzw. ermittelt.

Es ist jedoch möglich, dass die Dateneinrichtung zum Erzeugen von Spendersubstrat-Prozessdaten zu insbesondere individuellen Spendersubstraten die Daten der Analyseeinrichtung und Kristallgitterversetzungsdaten verwendet. Die Spendersubstrat-Prozessdaten weisen dabei bevorzugt Analysedaten der Analyseeinrichtung auf, die bevorzugt Daten zur Dotierung des Spendersubstrats umfassen oder darstellen oder aufweisen. Somit kann die Analyseeinrichtung eine Einrichtung zur bevorzugt waferaufgelösten Eigenschaftsbestimmung sein. Die Dateneinrichtung erzeugt dann bevorzugt Spendersubstrat-Prozessdaten, welche zumindest oder genau zwei Eigenschaften des Spendersubstrats umfassen, nämlich die Kristallgitterversetzungsdichte, insbesondere in Bezug auf das Gesamtspendersubstrat, und/oder die Dotierung, insbesondere waferaufgelöst, und/oder Brechzahl, insbesondere waferaufgelöst. Es ist hierbei möglich, dass die Dotierung durch die Analyseeinrichtung bestimmt wird und die Kristallgitterversetzungsdichteinformation in Datenform bereitgestellt wird. Alternativ kann die Kristallgitterversetzungsdichte ebenfalls durch die Analyseeinrichtung erfasst werden oder die Kristallgitterversetzungsdicht kann durch eine Kristallgitterversetzungseinrichtung erfasst bzw. bestimmt werden.

Die sich um die Modifikationen herum ausbreitenden Risse können hierbei auch als unterkritische Risse bezeichnet werden. Unterkritische Risse sind Risse, die erst durch einen späteren Hauptriss miteinander verbunden werden und durch das Verbinden das Spendersubstart teilen, insbesondere in eine Festkörperschicht und den Restfestkörper teilen. Unterkritische Risse können hierbei alternativ auch als Mikrorisse bezeichnet werden.

Die Versetzungen bzw. Kristallgitterversetzungen sind über Ätzverfahren auf einer Oberfläche sichtbar machbar und zählbar. Die Versetzungsdichte ist bevorzugt als mittlere Versetzungsdichte über die gesamte Fläche zu verstehen - es handelt sich besonders bevorzugt um "threading dislocation", dies bezeichnet Versetzungen, die "durch eine Fläche stoßen" bzw. bis zur Oberfläche reichen (z.B. kann man sie sehen, indem man sie dort anätzt) bzw. "Durchstoßversetzungen". Das beschreibt somit eine Klassifikation nach Versetzungsrichtung in Bezug auf die Oberfläche. Zusätzlich oder alternativ können die Versetzungen durch den Versetzungstyp (Stufen- und/oder Schraubenversetzung) beschrieben bzw. definiert sein.

Ein wichtiger Wirkmechanismus ist, dass die Mikrorisse bzw. die unterkritischen Risse, welche von der Lasermodifikation erzeugt werden, Spannungen im Inneren des Festkörpers bewirken. Diese Spannungen sorgen dafür, dass der Hauptriss sich vorteilhaft anhand der Vorschädigungen entlang fortbewegt. Dieser Effekt wird hauptsächlich dadurch erreicht, dass die vertikale Komponente der Rissausbreitung durch die eingebrachten Druckspannungen unterdrückt wird. Die Größe der eingebrachten Spannungen kann hierbei sehr stark von der Länge der Mikrorisse abhängen. Zum Beispiel haben zwei kurze Mikrorisse eine deutlich geringere Spannung als ein einzelner Mikroriss mit einer Länge, welche der Addition der Längen der beiden kurzen Mikrorisse entspricht. Dadurch ergibt sich der Effekt, dass die eingebrachte innere Spannung vieler kurzer Risse kleiner ist als die Spannung von wenigen langen Rissen auch wenn die Gesamtrisslänge in beiden Fällen gleich ist. Dies kann z.B. ebenfalls dann beobachtet werden, wenn die komplette Festkörperfläche eine Vorschädigung erfährt. Erfindungsgemäß werden daher bei Kristallen mit wenigen Versetzungen und damit verbunden einer sehr hohen Festigkeit bevorzugt mehr innere Spannungen im Festkörper erzeugt. Dies kann insbesondere durch weniger, aber dafür längere Mikrorisse erreicht werden.

Die Spannung, die nötig ist um einen Mikroriss wachsen zu lassen, nimmt mit der Größe des Mikrorisses ab.

Gemäß einer bevorzugten Ausführungsform der vorliegenden Erfindung liegt O bei 250 cm⁻², insbesondere bei 500cm⁻² oder 1000cm⁻² oder 2000cm⁻² oder 3000cm⁻². Zusätzlich oder alternativ liegt M bevorzugt bei 5000 cm⁻², insbesondere bei 7500cm⁻² oder bei 10000cm⁻² oder bei 12500cm⁻². Diese Ausführungsform ist vorteilhaft, da in Abhängigkeit der Versetzungen eines Spendersubstratmaterials, insbesondere eines konkreten Boules oder Ingots, insbesondere einer definierten Charge oder Fertigung, eine definierte Rissausbreitung resultiert bzw. erzeugt wird.

Die Ausbreitung des Risses erfolgt gemäß einer weiteren bevorzugten Ausführungsform der vorliegenden Erfindung zusätzlich oder alternativ in der gegenüber der Hauptoberfläche geneigten Erstreckungsrichtung der Kristallgitterebenen in Abhängigkeit von der Größe der einzelnen Modifikationen. Bevorzugt wird zumindest die Mehrzahl der Modifikationen mit einem Volumen von kleiner A erzeugt oder die Modifikationen einer Modifikationsline werden mit einem mittleren Modifikationsvolumen von kleiner A erzeugt, wenn die Anzahl der Kristallgitterversetzungen (je cm²) größer als M ist oder zumindest die Mehrzahl der Modifikationen wird mit einem Volumen von größer C erzeugt oder die Modifikationen einer Modifikationsline werden mit einem mittleren Modifikationsvolumen von größer C erzeugt, wenn die Anzahl der Kristallgitterversetzungen (je cm²) kleiner als O ist oder zumindest die Mehrzahl der Modifikationen wird mit einem Volumen von zwischen A und C erzeugt, wenn die Anzahl der Kristallgitterversetzungen (je cm²) zwischen M und O liegt. Hierbei gilt besonders bevorzugt A<C.

Die Größe einer Modifikation ist bevorzugt das Volumen der Modifikation. Bei SiC stellt die Schwärzung des Materials, insbesondere die durch eine Stoffumwandung veränderten Materialanteile, die Größe bzw. das Volumen der Modifikation dar.

Diese Lösung ist vorteilhaft, da eine Behandlungsvorschrift für unterschiedliche Materialqualitäten gegeben wird. Durch diese Behandlungsvorschrift lassen sich Spendersubstrate unterschiedlicher Qualität zuverlässig und mit geringen Materialverlusten teilen. Die Behandlungsvorschrift definiert dabei zusätzlich oder alternativ, dass bei steigender Materialqualität, d.h. abnehmender Versetzungsdichte, größere Modifikationsvolumen vorzusehen sind. Umgekehrt sind bei geringerer Materialqualität, d.h. zunehmender Versetzungsdichte, geringere Modifikationsvolumen vorzusehen.

Gemäß einer weiteren bevorzugten Ausführungsform der vorliegenden Erfindung ist das Volumen A oder das mittlere Volumen A kleiner oder gleich 100µm³, insbesondere kleiner oder gleich 75µm³oder kleiner oder gleich 50µm³oder kleiner oder gleich 25µm³, ist und/oder das Volumen C größer oder gleich 250 µm³, insbesondere größer oder gleich 500 µm³oder größer oder gleich 750 µm³oder größer oder gleich 1000 µm³, ist. Diese Ausführungsform ist vorteilhaft da in Abhängigkeit der Versetzungen eines Spendersubstratmaterials, insbesondere eines konkreten Boules oder Ingots, insbesondere einer definierten Charge oder Fertigung, ein definiertes Modifikationsvolumen bzw. mittleres Modifikationsvolumen resultiert bzw. erzeugt wird.

Die Ausbreitung des Risses erfolgt gemäß einer weiteren bevorzugten Ausführungsform der vorliegenden Erfindung zusätzlich oder alternativ entlang der gegenüber der Hauptoberfläche geneigten Erstreckungsrichtung der Kristallgitterebenen in Abhängigkeit von der zur Erzeugung der jeweiligen Modifikationen bereitgestellten Laserenergie. Bevorzugt wird zumindest die Mehrzahl der Modifikationen mit einer Laserenergie von kleiner D erzeugt oder die Modifikationen einer Modifikationsline werden mit einer mittleren Laserenergie von kleiner D erzeugt, wenn die Anzahl der Kristallgitterversetzungen (je cm²) größer ist als M oder zumindest die Mehrzahl der Modifikationen wird mit einer Laserenergie von größer E erzeugt oder die Modifikationen einer Modifikationsline werden mit einer mittleren Laserenergie von größer E erzeugt, wenn die Anzahl der Kristallgitterversetzungen (je cm²) kleiner als O ist oder zumindest die Mehrzahl der Modifikationen wird mit einer Laserenergie zwischen D und E erzeugt, wenn die Anzahl der Kristallgitterversetzungen (je cm²) zwischen M und O liegt. Besonders bevorzugt gilt hierbei D<E.

Diese Lösung ist vorteilhaft, da eine Behandlungsvorschrift für unterschiedliche Materialqualitäten gegeben wird. Durch diese Behandlungsvorschrift lassen sich Spendersubstrate unterschiedlicher Qualität zuverlässig und mit geringen Materialverlusten teilen. Die Behandlungsvorschrift definiert dabei zusätzlich oder alternativ, dass bei steigender Materialqualität, d.h. abnehmender Versetzungsdichte, eine größere Laserenergie vorzusehen ist, insbesondere zur Modifikation zu verwenden ist. Umgekehrt ist bei geringerer Materialqualität, d.h. zunehmender Versetzungsdichte, eine geringere Laserenergie vorzusehen, insbesondere zur Modifikationserzeugung zu verwenden.

Die Laserenergie pro Modifikation D oder die mittlere Laserenergie pro Modifikation D ist gemäß einer weiteren bevorzugten Ausführungsform der vorliegenden Erfindung kleiner oder gleich 10 µJ, insbesondere größer oder gleich 5 µJ oder größer oder gleich 3 µJ oder größer oder gleich 2 µJ, ist und/oder die Laserenergie E oder die mittlere Laserenergie E größer oder gleich 30 µJ, insbesondere größer oder gleich 50 µJ oder größer oder gleich 100 µJ oder größer oder gleich 200 µJ, ist. Diese Ausführungsform ist vorteilhaft da in Abhängigkeit der Versetzungen eines Spendersubstratmaterials, insbesondere eines konkreten Boules oder Ingots, insbesondere einer definierten Charge oder Fertigung, ein definierte Laserenergie bzw. mittleres Laserenergie resultiert bzw. erzeugt wird.

Eine Vielzahl zueinander paralleler Modifikationslinien wird gemäß einer weiteren bevorzugten Ausführungsform der vorliegenden Erfindung zusätzlich oder alternativ erzeugt, wobei der Abstand zwischen unmittelbar benachbarter Modifikationslinien zumindest bei der Mehrzahl der Modifikationslinien bei mehr als M Kristallgitterversetzungen (je cm²) kleiner J ist oder bei weniger als O Kristallgitterversetzungen (je cm²) größer K ist oder bei weniger als M Kristallgitterversetzungen (je cm²) und mehr als O Kristallgitterversetzungen (je cm²)zwischen J und K liegt. Hierbei gilt besonders bevorzugt J<K.

Diese Lösung ist vorteilhaft, da eine Behandlungsvorschrift für unterschiedliche Materialqualitäten gegeben wird. Durch diese Behandlungsvorschrift lassen sich Spendersubstrate unterschiedlicher Qualität zuverlässig und mit geringen Materialverlusten teilen. Die Behandlungsvorschrift definiert dabei zusätzlich oder alternativ, dass bei steigender Materialqualität, d.h. abnehmender Versetzungsdichte, größere Abstände zwischen jeweils zwei sich unmittelbar benachbarenden Modifikationslinien vorzusehen sind. Umgekehrt sind bei geringerer Materialqualität, d.h. zunehmender Versetzungsdichte, kleinere Abstände zwischen jeweils zwei sich unmittelbar benachbarenden Modifikationslinien vorzusehen.

Gemäß einer weiteren bevorzugten Ausführungsform der vorliegenden Erfindung ist der Abstand J kleiner oder gleich 50 µm, insbesondere kleiner oder gleich 40 µm oder kleiner oder gleich 25 µm oder kleiner oder gleich 10 µm, und/oder der Abstand K ist größer oder gleich 80 µm, insbesondere größer oder gleich 100 µm oder größer oder gleich 150 µm oder größer oder gleich 250 µm. Diese Ausführungsform ist vorteilhaft da in Abhängigkeit der Versetzungen eines Spendersubstratmaterials, insbesondere eines konkreten Boules oder Ingots, insbesondere einer definierten Charge oder Fertigung, ein definierter Abstand zwischen jeweils zwei sich unmittelbar benachbarenden Modifikationslinien resultiert bzw. erzeugt wird.

Ein weiterer wichtiger Wirkmechanismus ist, dass das Aufreißen des Festkörpers durch die Lasermodifikationen behindert wird. Dieser Effekt kann dadurch entstehen, weil die Modifikationen bevorzugt genau dort sind, wo der Festkörper bzw. das Spendersubstrat entlang der Mikrorisse abgleiten soll. Die laufenden Versetzungen des Bruches können sich zwar sehr entlang diese Mikrorisse ausbreiten, stoßen allerdings zwangsläufig irgendwann auf die Modifikation, welche ursächlich für die Entstehung der Mikrorisse ist. Offensichtlich ist innerhalb der Modifikation die Kristallstruktur zerstört, so dass der Bruch nicht weiter entlang der bisherigen Bruchebene abgleiten kann. Vielmehr muss der Bruch die Modifikation umgehen. Zum Beispiel kann dies dadurch passieren, dass der Bruch entlang einer Oberfläche der Modifikation weiterläuft, in der Nähe der Grenzfläche von Material mit Phasenumwandlung und dem "normalen" Kristall. In diesem Fall entsteht die Situation, dass das Material der Phasenumwandlung vorranging einer bestimmten Seite der Bruchfläche zugehörig wird, insbesondere befindet sich das Material der Phasenumwandlung vorrangig auf der Boule-Seite und weniger auf der Waferseite. Die Umgehung der Lasermodifikation benötigt extra Energie und es ist deswegen vorteilhaft, die Lasermodifikationen selber weiter voneinander entfernt zu erzeugen, insbesondere, wenn das Material durch wenige Versetzungen eine hohe Festigkeit besitzt. Dies kann zum Beispiel dadurch geschehen, dass der Linienabstand der Modifikationen an die Kristallqualität angepasst wird. Insbesondere, ein größerer Abstand der Modifikationen bei kleineren Versetzungsdichten.

Eine weitere Möglichkeit besteht darin, weniger Modifikationen innerhalb einer Linie auszubilden, also den Abstand zwischen zwei Modifikationen entlang einer Bearbeitungsstrecke zu erhöhen. Hier sind Abstände von >1 0µm und/oder > 15µm, und/oder > 20µm und/oder >30µm, insbesondere jedoch bevorzugt <500µm oder bevorzugt <300µm, vorteilhaft.

Die Modifikationen werden gemäß einer weiteren bevorzugten Ausführungsform der vorliegenden Erfindung auf einer Erzeugungsebene, insbesondere auf mindestens einer Erzeugungsebene oder auf genau einer Erzeugungsebene, erzeugt, die Kristallgitterebenen des Spendersubstrats sind dabei gegenüber der Erzeugungsebene bevorzugt geneigt, insbesondere in einem Winkel zwischen 0,1° und 10°, insbesondere zwischen 1° und 6°, insbesondere zwischen 2° und 4° oder in einem Winkel von 2° oder 4°, ausgerichtet, wobei sich bevorzugt eine Kritallgitterebenennormale gegenüber einer Hauptoberflächennormalen in eine erste Richtung neigt. Die Modifikationslinien sind dabei bevorzugt gegenüber einer sich an der Schnittstelle zwischen der Erzeugungsebene und der Kristallgitterebene ergebenden Schnittlinie geneigt ausgerichtet. Der Winkel ist dabei bevorzugt ungleich 0° und ungleich 90° und ungleich 180° und ungleich 270° und ungleich 360°. Diese Ausführungsform ist vorteilhaft, da bevorzugt jede Modifikation eine andere Gesamtheit aus Kristallgitterebenen schneidet. Dies bewirkt, dass die Wahrscheinlichkeit steigt bzw. sehr hoch ist, dass sich die Risse nur mit einer vordefinierten Länge ausbreiten.

Die Modifikationslinien sind gemäß einer weiteren bevorzugten Ausführungsform der vorliegenden Erfindung zusätzlich oder alternativ gegenüber der sich an der Schnittstelle zwischen der Erzeugungsebene und der Kristallgitterebene ergebenden Schnittlinie in einem Winkel kleiner dem Winkel P oder einem Winkel größer dem Winkel Q oder einem Winkel zwischen P und Q geneigt ausgerichtet. Dabei werden die Modifikationslinien bevorzugt in einem Winkel kleiner dem Winkel P erzeugt, wenn die Anzahl der Kristallgitterversetzungen (je cm²) größer als M ist oder die Modifikationslinien werden in einem Winkel größer dem Winkel Q erzeugt, wenn die Anzahl der Kristallgitterversetzungen (je cm²) kleiner als O ist oder die Modifikationslinien werden in einem Winkel zwischen den Winkeln P und Q erzeugt, wenn die Anzahl der Kristallgitterversetzungen (je cm²) zwischen M und O liegt.

Diese Lösung ist vorteilhaft, da eine Behandlungsvorschrift für unterschiedliche Materialqualitäten gegeben wird. Durch diese Behandlungsvorschrift lassen sich Spendersubstrate unterschiedlicher Qualität zuverlässig und mit geringen Materialverlusten teilen. Die Behandlungsvorschrift definiert dabei zusätzlich oder alternativ, dass bei steigender Materialqualität, d.h. abnehmender Versetzungsdichte, die Modifikationslinien bevorzugt in einem Winkel größer dem Winkel Q gegenüber der Schnittlinie erzeugt werden. Umgekehrt sind bei geringerer Materialqualität, d.h. zunehmender Versetzungsdichte, die Modifikationslinien bevorzugt in einem Winkel kleiner dem Winkel P gegenüber der Schnittlinie erzeugt werden.

Der Winkel P ist gemäß einer weiteren bevorzugten Ausführungsform der vorliegenden Erfindung kleiner oder gleich 10°, insbesondere kleiner oder gleich 8°oder kleiner oder gleich 6°oder kleiner oder gleich 4°, und/oder der Winkel Q ist größer oder gleich 10°, insbesondere größer oder gleich 15° oder größer oder gleich 20° oder größer oder gleich 25°. Diese Ausführungsform ist vorteilhaft da in Abhängigkeit der Versetzungen eines Spendersubstratmaterials, insbesondere eines konkreten Boules oder Ingots, insbesondere einer definierten Charge oder Fertigung, ein definierter Winkel zwischen den Modifikationslinien und der Schnittlinie resultiert bzw. erzeugt wird.

Gemäß einer weiteren bevorzugten Ausführungsform der vorliegenden Erfindung weist das Spendersubstrat SiC auf oder besteht draus oder das Spendersubstrat weist Saphir (Al₂O₃) auf oder besteht daraus. Diese Lösung ist vorteilhaft, da beide Materialien sehr hart sind und daher verlustarme Trennverfahren aufgrund der Materialhärte bei derartigen Materialien am effizientesten sind.

Die Verwendung der Wörter "im Wesentlichen" definiert bevorzugt in allen Fällen, in denen diese Wörter im Rahmen der vorliegenden Erfindung verwendet werden eine Abweichung im Bereich von 1%-30%, insbesondere von 1%-20%, insbesondere von 1%-10%, insbesondere von 1%-5%, insbesondere von 1%-2%, von der Festlegung, die ohne die Verwendung dieser Wörter gegeben wäre. Einzelne oder alle Darstellungen der im Nachfolgenden beschriebenen Figuren sind bevorzugt als Konstruktionszeichnungen anzusehen, d.h. die sich aus der bzw. den Figuren ergebenden Abmessungen, Proportionen, Funktionszusammenhänge und/oder Anordnungen entsprechen bevorzugt genau oder bevorzugt im Wesentlichen denen der erfindungsgemäßen Vorrichtung bzw. des erfindungsgemäßen Produkts. Weitere Vorteile, Ziele und Eigenschaften vorliegender Erfindung werden anhand nachfolgender Beschreibung anliegender Zeichnungen erläutert, in welchen beispielhaft erfindungsgemäße Vorrichtungen dargestellt sind. Elemente der erfindungsgemäßen Vorrichtungen und Verfahren, welche in den Figuren wenigsten im Wesentlichen hinsichtlich ihrer Funktion übereinstimmen, können hierbei mit gleichen Bezugszeichen gekennzeichnet sein, wobei diese Bauteile bzw. Elemente nicht in allen Figuren beziffert oder erläutert sein müssen. Nachfolgend wird die Erfindung rein beispielhaft anhand der beigefügten Figuren beschrieben.

Darin zeigen:
- Fig. 1a: schematisch eine erfindungsgemäße Fertigungsanlage, die aus einer einzelnen Fertigungseinheit besteht;
- Fig. 1b: schematisch eine erfindungungsgemäße Fertigungsanlage, die mehrere Fertigungseinheiten aufweist, wobei die Fertigungseinheiten zumindest eine Einrichtung gemeinsam bzw. zeitversetzt oder parallel nutzen;
- Fig. 1c: schematisch eine erfindungungsgemäße Fertigungsanlage, die mehrere Fertigungseinheiten aufweist, wobei die Fertigungseinheiten zumindest eine Einrichtung gemeinsam bzw. zeitversetzt oder parallel nutzen;
- Fig. 1d: schematisch eine Hintereinanderreihung mehrerer Fertigungseinheiten;
- Fig. 2: schematisch eine Fertigungsanlage bestehend aus 12 Fertigungseinheiten, wobei einzelne Einrichtungen von zwei oder mehr Fertigungseinheiten verwendet werden;
- Fig. 3: schematisch den Aufbau einer bevorzugten Fertigungseinheit;
- Fig. 4: schematisch die Fertigungseinheit ergänzt um Messeinrichtungen zur Erfassung von Messwerten bzw. zur Generierung von einrichtungsspezifischen und/oder spendersubstratspezifischen Daten;
- Fig. 5a-5d: schematische Darstellungen einer exemplarischen Lasereinrichtung mit Luftspaltlagerung;
- Fig. 6: schematische Darstellungen einer exemplarischen Lasereinrichtung mit Luftspaltlagerung und Immersionsflüssigkeit;
- Fig. 7a: schematisch ein Beispiel einer Aufbringeinrichtung;
- Fig. 7b: schematisch ein alternatives Beispiel einer Aufbringeinrichtung;
- Fig. 8: schematisch ein Beispiel einer Ablöseeinrichtung mit integrierter Anpresseinrichtung und Temperierungseinrichtung;
- Fig. 9a: schematisch ein Beispiel einer alternativen Ablöseeinrichtung in einer Ausgangskonfiguration;
- Fig. 9b: schematisch eine weitere Darstellung der alternativen Ablöseeinrichtung in einer Risserzeugungskonfiguration oder Rissausbreitungskonfiguration;

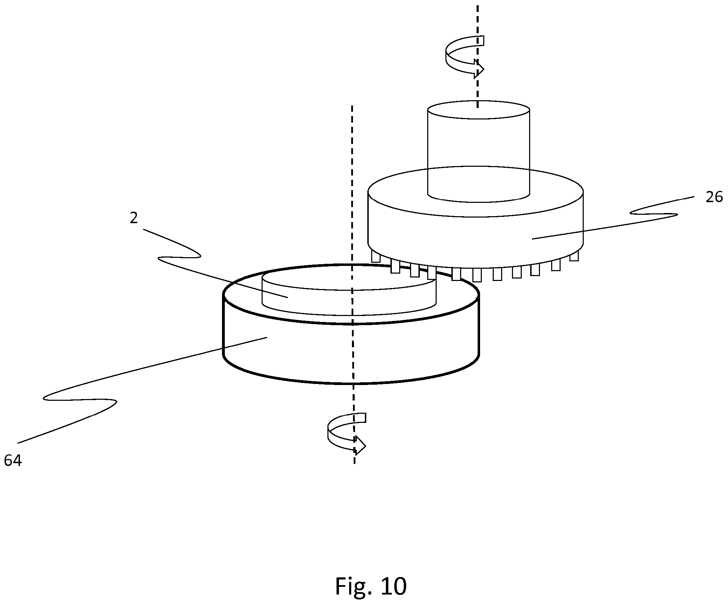

- Fig. 10: schematisch ein Beispiel einer Oberflächenbehandlungseinrichtung;
- Fig. 11: schematisch eine Höhenabweichung der erzeugten Modifikationen in Abhängigkeit von einem Dotierfleck;
- Fig. 12: schematisch den Zusammenhang zwischen Dotierfleck und Veränderung des Ortes der Modifikationserzeugung;
- Fig. 13: schematisch den Zusammenhang zwischen Maximierung des Outputs und Reduzierung von Planarisierungsreserven;
- Fig. 14a: schematisch ein erster exemplarischer Ablaufplan des erfindungsgemäßen Verfahrens;
- Fig. 14b: schematisch ein zweier (alternativer) Ablaufplan des erfindungsgemäßen Verfahrens;
- Fig. 15: schematisch ein dritter (alternativer) Ablaufplan des erfindungsgemäßen Verfahrens;
- Fig. 16: schematisch ein vierter (alternativer) Ablaufplan des erfindungsgemäßen Verfahrens;
- Fig. 17: schematisch ein fünfter (alternativer) Ablaufplan des erfindungsgemäßen Verfahrens;
- Fig. 18: schematisch ein Fertigungsanlagensteuerungskonzept basierend auf Spendersubstrat-Prozessdaten und/oder Waferdaten und
- Fig. 19: Möglichkeiten zur Brechzahlbestimmung.

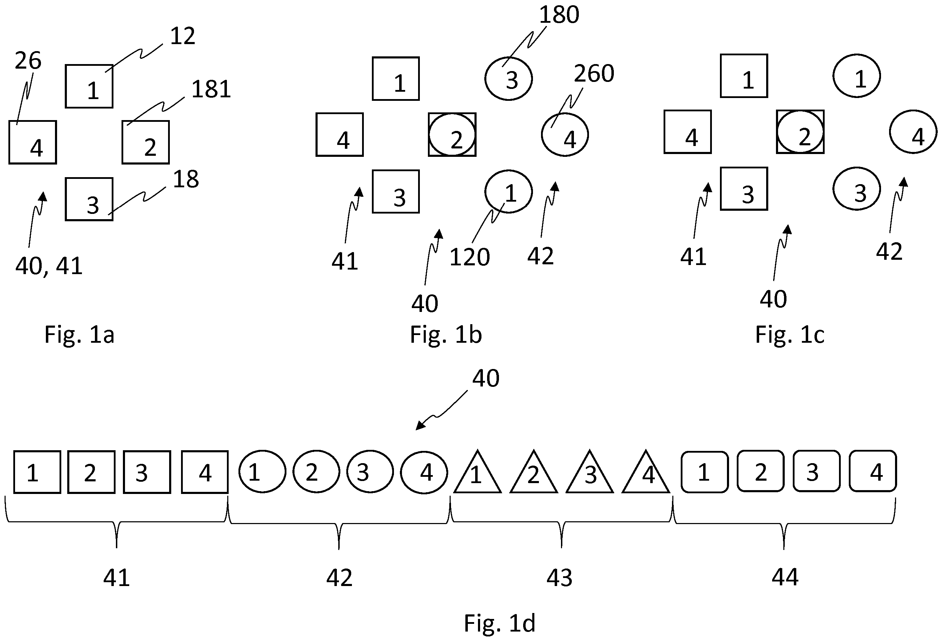

Fig. 1a zeigt schematisch eine Anordnung bevorzugter Einrichtungen einer erfindungsgemäßen Fertigungsanlage 40. Die Einrichtung 1 ist hierbei mit dem Bezugszeichen 12 gekennzeichnet und repräsentiert eine Lasereinrichtung, die Einrichtung 2 ist mit dem Bezugszeichen 181 gekennzeichnet und repräsentiert bevorzugt eine Aufbringeinrichtung, die Einrichtung 3 ist mit dem Bezugszeichen 18 gekennzeichnet und repräsentiert eine Ablöseeinrichtung und die Einrichtung 4 ist mit dem Bezugszeichen 26 gekennzeichnet und repräsentiert eine Oberflächenbehandlungseinrichtung. Bevorzugt ergibt die funktionale Einheit aus diesen vier Einrichtungen eine Funktionseinheit 41, wobei eine Fertigungsanlage 40 aus einer Vielzahl funktional miteinander gekoppelter oder unabhängig betreibbarer Fertigungseinheiten 41-44 bestehen kann.

Fig. 1b zeigt zwei exemplarische Fertigungseinheiten 41, 42 der Fertigungsanlage 40. Die Fertigungseinheit 41 und die Fertigungseinheit 42 verwenden dabei dieselbe Aufbringeinrichtung. Die Förderrichtung der Fertigungseinheit 41 ist dabei im Uhrzeigersinn orientiert und die Förderrichtung der Fertigungseinheit 42 ist entgegen orientiert.

Fig. 1c zeigt eine Variante der in Fig. 1b gezeigten Anordnung. Gemäß dieser Variante sind teilen sich die beiden Fertigungseinheiten 41 und 42 ebenfalls eine Einrichtung, wobei die Transportrichtung beider Fertigungseinheiten 41, 42 in derselben Richtung verläuft.

Die von zwei oder mehr Fertigungseinheiten gemeinsam genutzten Einrichtungen werden dabei bevorzugt über die Bearbeitungsgeschwindigkeit ausgewählt. Z.B. ist es sinnvoll eine Einrichtung, die doppelt so schnell betreibbar ist, wie eine andere Einrichtung zwei Fertigungseinheiten 41, 42 zuzuordnen. Ist eine Einrichtung dreimal so schnell oder ca. dreimal so schnell betreibbarwie eine andere Einrichtung, dann kann diese schnell betreibbare Einrichtung drei Fertigungseinheiten zugeordnet werden.

Fig. 1d zeigt eine Reihenanordnung verschiedener Fertigungseinheiten 41-44 einer Fertigungsanlage 40. Bevorzugt kann für jeden abzutrennenden Wafer eine Fertigungseinheit vorgesehen sein. Besonders bevorzugt erfolgt jedoch mit jeder Fertigungseinheit eine Bearbeitung in einem vordefinierten Höhenbereich bzw. Längenbereich des Spendersubstrats 4. Im vorliegenden Beispiel ist kann die Gesamtlänge des Spendersubstrats 4 auf beliebig viele, insbesondere auf vier, Fertigungseinheiten 41-44 aufgeteilt sein. Somit wird in diesem Beispiel durch die Fertigungseinheit 41 ein Höhenanteil bzw. Längenanteil L1 des Spendersubstrats 4 in Wafer 2 überführt. D.h. die Fertigungseinheiten 41-44 bearbeiten den jeweiligen Höhenanteil des Spendersubstrats 4 bevorzugt jeweils mindesten 2 mal und besonders bevorzugt bis zu 10 mal oder bis zu 20mal oder bis zu 50mal oder bis zu 100mal. Somit erfolgt durch die Fertigungseinheit 42 eine Bearbeitung des Langenanteils L2 und durch die Fertigungseinheit 43 erfolgt bevorzugt eine Bearbeitung des Längenanteils L3. Die Fertigungseinheit L4 dient bevorzugt zur Bearbeitung des Längenanteils L4. Die Gesamtlänge L des Spendersubstrats besteht dabei aus einer Vielzahl an Längenanteilen, insbesondere aus den Längenanteilen L1, L2, L3 und L4. Es ist hierbei möglich, dass die Längenanteile im Wesentlichen oder genau dieselbe Länge aufweichen oder in der Länge voneinander abweichen.

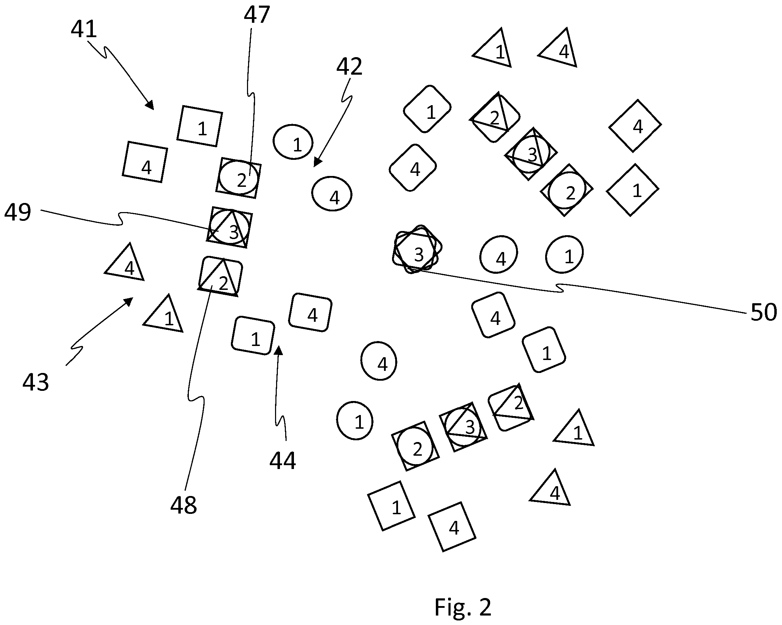

Weiterhin können die in Fig. 1b und 1c und 2 gezeigten Ausführungsformen mit dem Konzept der Fig. 1d kombiniert werden. D.h. Mehrere Fertigungseinheiten bilden eine Anordnung zum Bearbeiten eines Längenanteils eines Spendersubstrats 4, wobei die einzelnen Fertigungseinheiten 41-44 der jeweiligen Anordnung gemeinsame Einrichtungen aufweisen können.

Fig. 2 zeigt rein exemplarisch eine Darstellung gemäß der jede Fertigungseinheit die Einrichtungen 1 und 4 aufweist. Die Einrichtungen 2 und 3 werden dabei gemeinsam mit anderen Fertigungseinheiten genutzt. Die Einrichtungen 2 werden dabei von jeweils zwei Fertigungseinheiten genutzt und die Einrichtungen 3 werden dabei von 3 Fertigungseinheiten genutzt. Gemäß der vorliegenden Darstellung können somit 12 Fertigungseinheiten á 4 Einrichtung mit nur 34 Einrichtungen geschaffen werden. D.h. es kann eine Einsparung von 14 Einrichtungen bewirkt werden, wodurch die Anforderungen an die Fläche und die Maschinenkosten signifikant reduziert werden können.

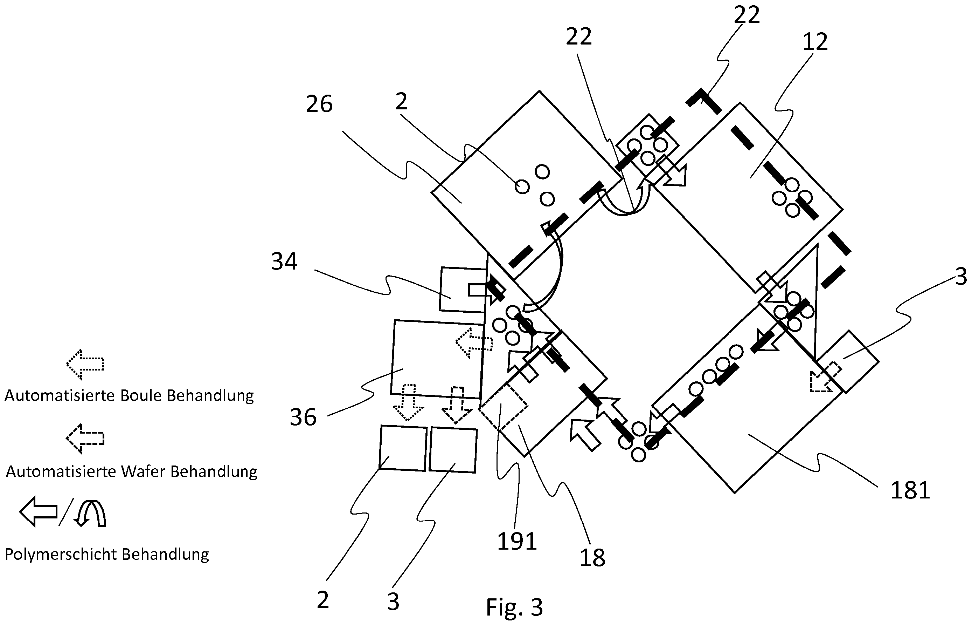

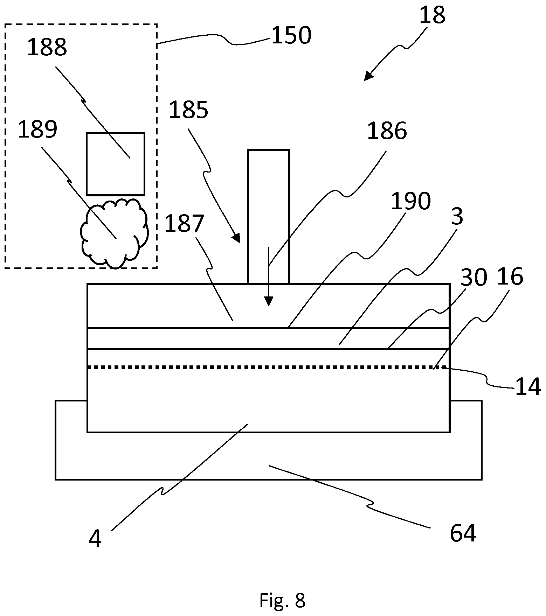

Fig. 3 zeigt eine bevorzugte Konfiguration der erfindungsgemäßen Fertigungsanlage 40 zur Ablösung von Wafern 2 von Spendersubstraten 4. Die Fertigungsanlage 40 umfasst dabei bevorzugt mindestens eine oder eine Vielzahl an Fertigungseinheiten (vgl. Fig. 1-2). Bevorzugt weist jede Fertigungseinheit 41-44 bevorzugt alleinstehend eine Lasereinrichtung 12, zum Erzeugen von Modifikationen 14 (vgl. Fig. 8, 9a, 12) im Inneren der Spendersubstrate 4 zum Ausbilden eines Ablösebereichs 16 (vgl. Fig. 8, 9a, 12) im Inneren des jeweiligen Spendersubstrats 4 auf. Die Lasereinrichtung 12 ist dabei bevorzugt in Abhängigkeit der Spendersubstrat-Prozessdaten eines konkreten Spendersubstrats 4 zur Bearbeitung des konkreten Spendersubstrats 4 betreibbar.

Ferner weist die Fertigungseinheit bevorzugt ebenfalls eine Ablöseeinrichtung 18 zum Erzeugen von mechanischen Spannungen im Inneren des jeweiligen Spendersubstrats 4 zum Auslösen und/oder Führen eines Risses zum Abtrennen von jeweils mindestens einem Wafer 2 von einem Spendersubstrat 4 entlang des Ablösebereichs 16 auf. Weiterhin kann eine jede dieser Fertigungseinheiten 41-44 eine Oberflächenaufbereitungseinrichtung 26 und/oder eine Aufbringungseinrichtung 181, insbesondere eine Laminiereinrichtung, zum Aufbringen oder Erzeugen einer Polymerschicht 3 bzw. Spannungserzeugungsschicht aufweisen. Sollte die Fertigungsanlage 40 durch mehrere Fertigungseinheiten 41-44 gebildet werden, dann können einzelne Einrichtungen, wie die Oberflächenaufbereitungseinrichtung 26 und/oder die Aufbringeinrichtung 181 und/oder die Lasereinrichtung 12 und/oder die Abtlöseeinrichtung 18, mehreren Fertigungseinheiten zugeordnet sein. D.h. dieselbe Einrichtung wird dann als Bestandteil von mehreren Fertigungseinheiten 41-44 verstanden bzw. verwendet.

Das Bezugszeichen 34 kennzeichnet hierbei eine Zuführ- und/oder Entnahmeeinrichtung zum Zuführen oder Entnehmen von Spendersubstraten auf. Das Spendersubstrat 4 wird mittels einer Transporteinrichtung 22 zur Oberflächenbehandlungseinrichtung 26 gefördert. Nach erfolgter Behandlung wird das Spendersubstrat 4 mittels der Transporteinrichtung 22 zur Lasereinrichtung 12. Nach erfolgter Behandlung wird das Spendersubstrat mittels der Transporteinrichtung 22 zur Aufbringungseinrichtung 181 gefördert. Nach erfolgreicher Behandlung wird das Spendersubstrat 4 zur Abtrenneinrichtung 18 gefördert. Der abgetrennte Wafer 2 wird mittels der Transporteinrichtung 22 oder mittels einer weiteren Transporteinrichtung bevorzugt zu einer Reinigungseinrichtung 36 und/oder Waferoberflächenbehandlungseinrichtung 29 gefördert. Die Wäaferoberflächenbehandlungseinrichtung 29 kann dabei Bestandteil der Reinigungseinrichtung 36 sein oder vice versa. Die Reinigungseinrichtung 36 bewirkt eine Separierung des Wafers 2 und der Spannungserzeugungsschicht 3.

Die zuvor aufgeführte Prozesskammer bzw. Fertigungseinheit 41-44 stellt bzgl. einer konkreten Ausführungsform bzgl. des Cold-Split-Prozesses bevorzugt eine Minimalkonfiguration dar, die durch zusätzliche Stationen bzw. Behandlungseinrichtungen erweitert werden kann. Es ist jedoch hierbei wesentlich, dass anstelle der thermisch induzierten Rissauslösung zusätzlich oder alternativ auch ein anderer Rissauslösungseffekt verwirklicht sein kann, insbesondere die alternative Einleitung einer äußeren Kraft, insbesondere mittels Ultraschall oder Zugkraftbeaufschlagung.

Im Falle des Cold-Split-Prozesses ist bevorzugt eine Aufwärmstation 191 zum Aufwärmen des infolge der Rissausbreitung zeitlich unmittelbar zuvor verjüngten Spendersubstrats 4 und/oder des abgetrennten Wafers 2 sinnvoll. Unmittelbar bedeutet hierbei bevorzugt weniger als 10min, insbesondere weniger als 5min oder weniger als 1min oder weniger als 0,5min. Die Aufwärmstation 191 kann hierbei im Behandlungsweg des Spenderwafers 4 oder des Wafers 2 nach der Abtrenneinrichtung 18 oder als Bestandteil der Abtrenneinrichtung 18 angeordnet sein.

Für das Aufheizen des Spendersubstrats 4 gilt bevorzugt das Gleiche, wie für das Abkühlen. Eine homogenere Volumentemperierung halbleitender Spendersubstrate 4 wird gemäß der vorliegenden Erfindung einer heterogenen Temperierung vorgezogen. Daher erfolgt eine Erwärmung bevorzugt z.B. im hochfrequenten Wechselfeld einer Mikrowelle und weniger bevorzugt mittels einer Heizplatte.

Bei einer Mikrowellenbehandlung handelt es sich bevorzugt um Strahlung im Wellenlängenbereich von 1m bis 1 mm bzw. 300 MHz bis 300 GHz. Um mögliche Interferenzen mit anderen Anwendungen aus der Telekomunikationstechnik oder andere Radaranwendungen auszuschließen wird für industrielle Anwendungen bevorzugt eine Festfrequenz von 2,45 (±0,05) GHz eingesetzt. Mikrowellenreaktoren werden erfindungsgemäß zeitweise oder dauerhaft im Hochfrequenzbereich HF-Bereich betrieben, wobei im Rahmen der vorliegenden Erfindung unter Hochfrequenzbereich 100 MHz bis 100 GHz verstanden wird, insbesondere zwischen 100 MHz und 50 GHz oder auch 100 MHz bis 40 GHz. Bevorzugte Frequenzbereiche liegen etwa zwischen 1 MHz bis 100 GHz, wobei 10 MHz bis 50 GHz besonders bevorzugt sind. Die Reaktoren werden dabei bevorzugt parallel betrieben. Besonders bevorzugt werden für das Aufwärmen des Spendersubstrats und/oder des Wafers Magnetrons, insbesondere mit 1,0 bis 5MHz und bevorzugt mit 2,4 MHz, eingesetzt.

Dies ist vorteilhaft, da es durch die Bestrahlung eines Festkörpers bzw. Spendersubstrats 4 in diesem Wellenlängenbereich zur Polarisationswechselwirkung von frei beweglichen Dipolmolekülen (z.B. eingelagertes Wasser - Orientierungspolarisation) oder aber zur Polarisation von elektrischen Ladungsträgern (z.B. lonenpolarisation, Elektronen) im Festkörper kommt. Somit werden im Takt des hochfrequenten Mikrowellenfeldes z.B. Valenz- oder Rotationsschwingungen angeregt die infolge der entstehenden intermolekularen Reibung die Hochfrequenzenergie absorbieren und in Wärmeenergie umwandeln und somit eine homogene Aufwärmung von Festkörpern, insbesondere Spendersubstraten und/oder Waferfn, in kurzer Zeit, insbesondere weniger als 45Min oder weniger als 30Min oder weniger als 15Min, erlauben. Im Falle von Elektronen- oder lonenpolarisation von Dielektrika wird die Hochfrequenzenergie im Mikrowellenfeld (Dielektrika) absorbiert und aufgrund des elektrischen Widerstands des Leiters in Wärmeenergie umgewandelt. Im Falle von metallischen Leitern wird ein größerer Teil der eingebrachten Strahlung schon an der Metalloberfläche reflektiert. Im Falle eines ungünstigen (großen) Verhältnisses von Oberfläche zum Volumen (z.B. Folien, Wafer) kann es zu einer starken Überhöhung der Oberflächentemperatur kommen, da hier eine starke Elektronenanregung an der Metalloberfläche auftreten kann und aufgrund des querschnittsabhängigen elektrischen Widerstands diese nicht ausreichend über das Volumen abgeleitet werden kann. Dieser Effekt ist vorteilhaft, da er gezielt zur Beeinflussung der Oberflächentopologie durch lokale Temperaturüberhöhung (Aufschmelzung) genutzt werden kann. Bevorzugt wird dies im Rahmen der vorliegenden Erfindung angewendet, um eine vorhandene Häufigkeit von Rauheitsspitzen (Rz, Sz) an der Splitoberfläche zu verringern.

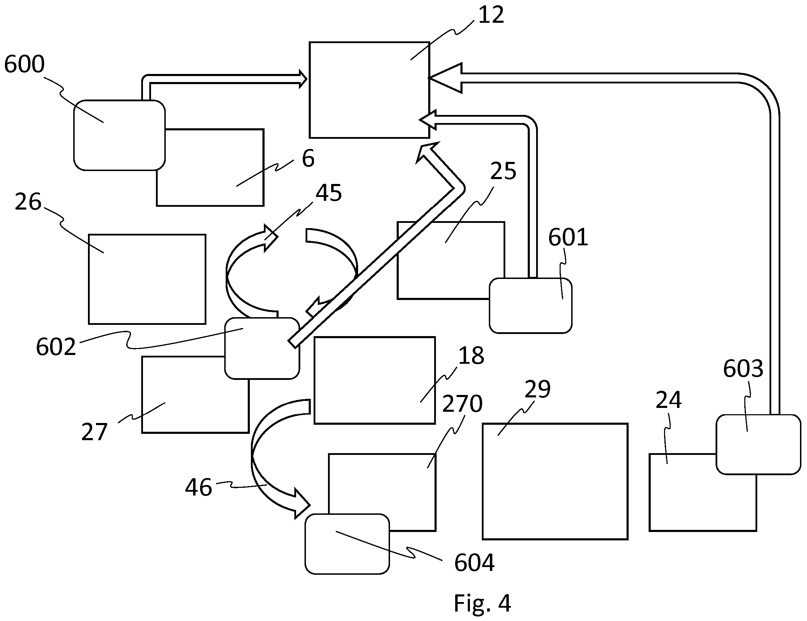

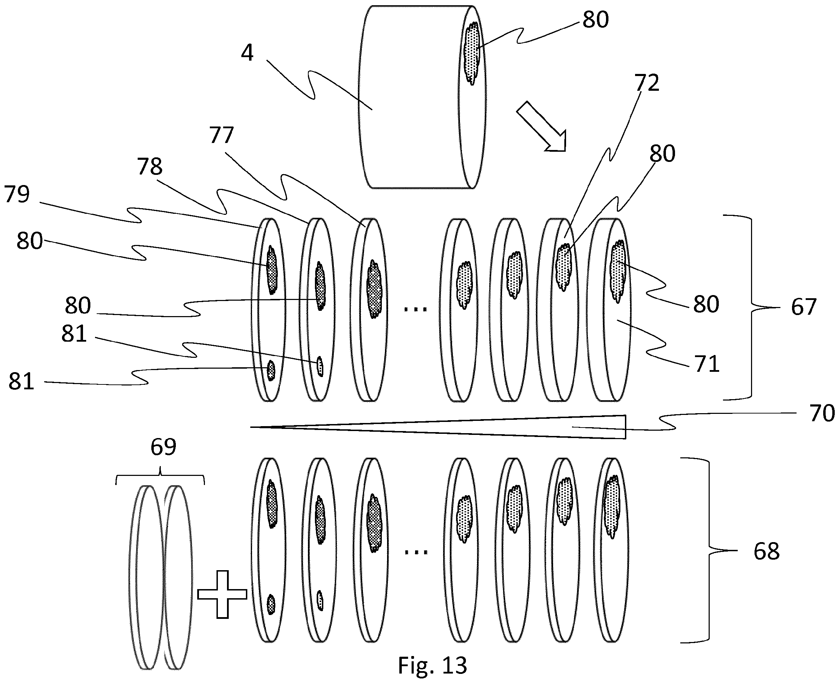

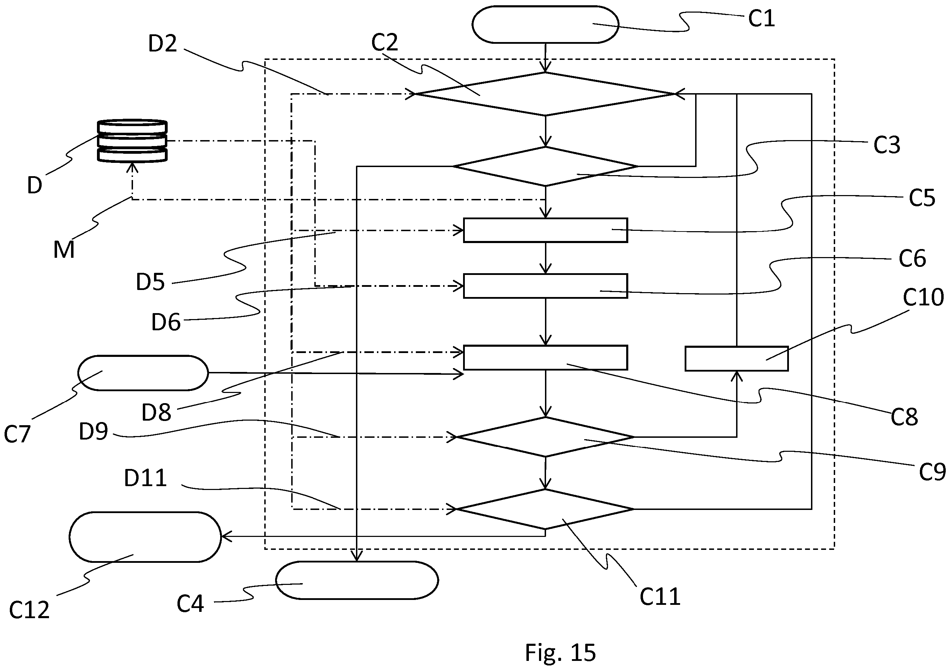

Ferner wird bevorzugt prozessbegleitende Messtechnik (vgl. Ausführungen zu Fig. 4) zur Parameterkontrolle, insbesondere zur Ermittlung von Veränderungspotentialen (vgl. Ausführungen zu Fig. 15) zur Reduzierung von Reserven (vgl. Ausführungen zu Fig. 13), und/oder zur Durchsatzüberwachung und/oder zur Dokumentation bereitgestellt. Dies ist vorteilhaft, da dadurch eine weitere Durchsatzerhöhung, selbst bei Vollautomatisierung, und eine Verbesserung des Outputs pro Spendersubstrats erzielbar ist. Bevorzugt weisen dabei mehrere Messstellen oder die Mehrzahl der Messstellen oder alle Messstellen zusätzliche Störkategorien wie "Stau" oder "Abriss der Prozesskette", etc. auf. Dies ist vorteilhaft, da dadurch ein reibungsloser und prozessübergreifender Ablauf geschaffen wird, da bevorzugt auch vor- und/oder nachgelagerte Störungen der beteiligen Prozesstools bzw. Einrichtungen und/oder Fertigungseinheit/en identifizierbar sind und somit darauf entsprechend reagiert werden kann. So ist eine hinreichend hohe Gesamtanlageneffektivität über alle Prozessschritte sicherstellbar.

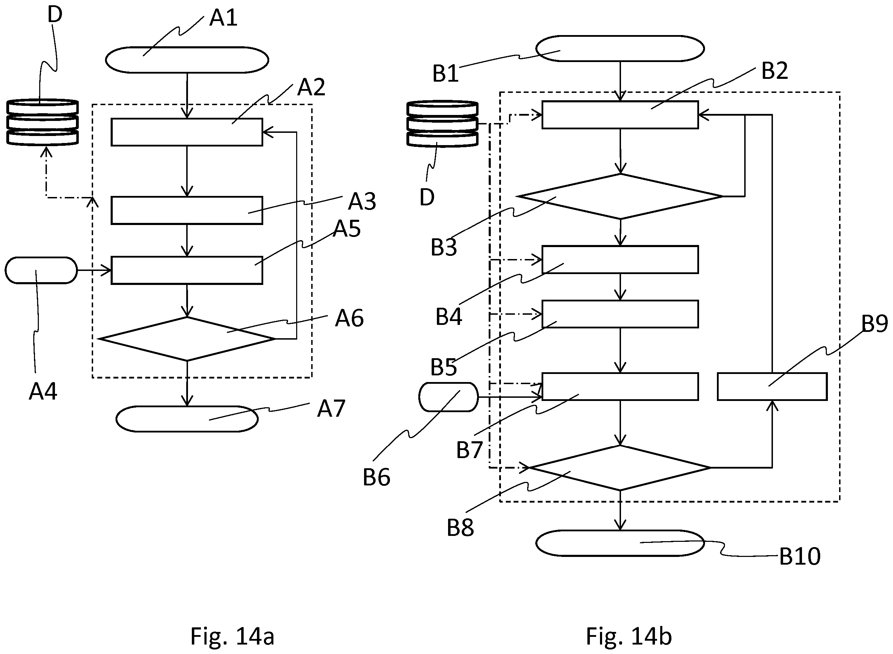

Fig. 4 zeigt, dass die Fertigungsanlage 40 bevorzugt ebenfalls eine oder mindestens eine Analyseeinrichtung 6 zum Bestimmen von mindestens einer individuellen Eigenschaft, insbesondere der Dotierung, der jeweiligen Spendersubstrate 4 aufweist. Ferner ist eine Dateneinrichtung D (vgl. Fig. 14-17) bzw. Prozessoreinrichtung zum Erzeugen von Spendersubstrat-Prozessdaten zu individuellen Spendersubstraten 4 vorgesehen. Die Spendersubstrat-Prozessdaten umfassen dabei bevorzugt Analysedaten 600 der Analyseeinrichtung 6, wobei die Analysedaten 600 zumindest die eine individuelle Eigenschaft des Spendersubstrats 4 beschreiben.

Die Spendersubstrat-Prozessdaten zur Ansteuerung der Lasereinrichtung 12 können dabei durch Daten mehrerer bevorzugt unterschiedlicher Messeinrichtungen 6, 24, 25, 26, 27, 270 modifiziert, insbesondere an die individuellen Eigenschaften des konkreten Spendersubstrats 4 angepasst, werden.

Die Messeinrichtung 25 ist hierbei bevorzugt eine Modifikationsmesseinrichtung und stellt bevorzugt Modifikationsmessdaten bereit. Die Messeinrichtung 25 ist dabei bevorzugt als Bestandteil der Lasereinrichtung 12 oder im Bearbeitungsweg nach der Lasereinrichtung 12 oder als Bestandteil der Aufbringeinrichtung 18 ausgebildet. Durch die Messeinrichtung 25 werden bevorzugt Modifikationsmessdaten 601 erzeugt, wobei die Modifikationsmessdaten 601 bevorzugt die Rauigkeit und/oder das Höhenprofil der Modifikationen, insbesondere ortsaufgelöst, und/oder der Mikrorisse, insbesondere ortsaufgelöst, und/oder die Länge der Mikrorisse, insbesondere ortsaufgelöst, beschreiben.

Die Messeinrichtung 27 ist bevorzugt als Messeinrichtung zur Bestimmung der Oberflächeneigenschaften der freigelegten Oberfläche des Spendersubstrats 4 nach dem Trennschritt bzw. der Waferablösung ausgebildet. Durch die Messeinrichtung 27 werden bevorzugt Daten 602 zur Bestimmung der Oberflächeneigenschaften der freigelegten Oberfläche des Spendersubstrats nach dem Trennschritt bereitgestellt. Die Messdaten 602 können dabei Daten zur Separationsoberfläche des Spendersubstrats 4, insbesondere zur Rauheit (x,y) und/oder dem Höhenprofil, insbesondere ortsaufgelöst, aufweisen. Die Messeinrichtung 27 ist im Spendersubstratbehandlungsablauf bevorzugt nach der Ablöseeinrichtung 18 oder als Bestandteil der Ablöseeinrichtung 18 ausgebildet. Alternativ kann die Messeinrichtung 27 als Bestandteil der Oberflächenaufbereitungseinrichtung 26 ausgebildet sein.

Die Messeinrichtung 270 ist bevorzugt als Messeinrichtung zur Bestimmung der Oberflächeneigenschaften der freigelegten Oberfläche des Wafers 2 nach dem Trennschritt bzw. der Waferablösung ausgebildet. Durch die Messeinrichtung 270 werden bevorzugt Daten 604 zur Bestimmung der Oberflächeneigenschaften der freigelegten Oberfläche des Wafers 2 nach dem Trennschritt bereitgestellt. Die Messdaten 604 können dabei Daten zur Separationsoberfläche des Wafers 2, insbesondere zur Rauheit (x,y) und/oder dem Höhenprofil, insbesondere ortsaufgelöst, aufweisen. Die Messeinrichtung 270 ist im Spendersubstratbehandlungsablauf bevorzugt nach der Ablöseeinrichtung 18 oder als Bestandteil der Ablöseeinrichtung 18 ausgebildet. Alternativ kann die Messeinrichtung 270 als Bestandteil der Waferoberflächenaufbereitungseinrichtung 29 ausgebildet sein.

Die Messeinrichtung 24 ist bevorzugt als Messeinrichtung zur Erfassung der finalen Dicke des Wafers ausgebildet. Durch die Messeinrichtung 24 werden bevorzugt Daten der Messeinrichtung, insbesondere Strukturdaten, die z.B. die Dicke des Wafers nach der Behandlung mittels der Waferoberflächenaufbereitungseinrichtung 29 widergeben, erzeugt. Die Messeinrichtung 24 ist im Waferbehandlungsablauf bevorzugt nach der Waferoberflächenbehandlungseinrichtung 29 oder als Bestandteil davon ausgebildet.

Die Analyseeinrichtung 6 ist bevorzugt zur Analyse von direkten optischen Eigenschaften, insbesondere der örtlich aufgelösten Brechzahl- und Absorptionswerte (des n und k Profils (x,y) der Waferoberfläche) und/oder zur Analyse von indirekten optischen Eigenschaften, insbesondere des Dotierprofils (x,y), und/oder zur Bestimmung der Restdicke des nach der Oberflächenaufbereitung mittels der Oberflächenaufbereitungseinrichtung 26 behandelten Restspendersubstrats bzw. Spendersubstrats 4 ausgebildet. Die Brechzahlwerte bestimmen die Berechnung der Schreibtiefe, und die Absorptionswerte müssen verwendet werden, um in einer gegebenen Schreibtiefe eine fest vorgegebene Laserpulsenergie zu erreichen. Die Analyseeinrichtung 6 erzeugt bevorzugt Analysedaten 600, wobei die Analysedaten bevorzugt die direkten optischen Eigenschaften, insbesondere des "n und k Profils (x,y)" und/oder die indirekten optischen Eigenschaften, insbesondere des Dotierprofil (x,y), und/oder die Restdicke des Spendersubstrats 4, insbesondere Boule oder Ingot, repräsentieren. Die Analyseeinrichtung 6 ist im Spendersubstratbehandlungsablauf bevorzugt nach der Oberflächenaufbereitungseinrichtung 26 oder als Bestandteil der Oberflächenaufbereitungseinrichtung 26 ausgebildet. Alternativ kann die Analyseeinrichtung Bestandteil der Lasereinrichtung 12 sein.

Einzelne oder mehrere der zuvor genannten Daten 600, 601, 602, 603, 604 können zur Modifikation der Spendersubstrat-Prozessdaten, insbesondere zum Ansteuern der Lasereinrichtung 12, verwendet werden. Die Lasereinrichtung 12 wird bevorzugt zumindest in Abhängigkeit von Daten bzgl. des Höhenprofils der Hauptoberfläche des konkreten Spendersubstrats 4 und/oder von Daten zu einer Energiekarte (x, y) und/oder von Daten zur Schreibtiefe angesteuert. Je Spendersubstrat 4 wird somit bevorzugt ein Look-Up-Table zur Umsetzung einer, insbesondere kontinuierlichen, Datenanpassung, insbesondere Anpassung der Spendersubstrat-Prozessdaten und/oder Waferdaten, geschaffen, insbesondere zur bevorzugt kontinuierlichen Annäherung der mit der Lasereinrichtung 12 erzeugten Modifikationen 14 an eine ideale Zielposition bzw. Ziellage. Dies ist vorteilhaft, da so Planarisierungsreserven reduzierbar sind. Bevorzugt werden die mittels der Messeinrichtungen erzeugten Daten mit den tatsächlichen Werten von der vorherigen Bearbeitung des gleichen oder desselben Spendersubstrats 4 kombiniert (bzw. korrigiert). Das "gleiche vorherige Spendersubstrat 4" ist dabei bevorzugt ein früher verarbeitetes Spendersubstrat 4 (z.B. gleiche Kunde, Ofen, Boule-Dicke, Material, Durchmesser und/oder Dotierverlauf).

Zur Erhöhung der Gesamtanlageneffektivität inklusive der Prozesssicherheit / Ausbeute und zur Verringerung der manuellen Interaktionsdauer werden bevorzugt zumindest teilautomatisierte Prozesse verwendet. Das bedeutet, dass eine Fertigungseinheit 41-44 der Fertigungsanlage 40 eine Anordnung alleinstehender Anlagen (bevorzugt mindestens Laseranlage/Lasereinrichtung, Plasmalaminator/Laminereinrichtung, Ablöseeinrichtung/Cold Split Kammer) mit manueller oder teilautomatisierter oder vollautomatisierter Be- und Entladung aufweist.

Die Prozessführung (z.B. Temperatur-Zeitsteuerung, motorisierte Lamination etc.) innerhalb einer Fertigungseinheit 41-44 läuft jedoch bevorzugt automatisch (programmgesteuert/sensorgestützt geregelt) ab. Somit können Rezepte bzw. Handlungsanweisungen bzw. Verfahrensabfolgen erstellt/definiert, optimiert und sehr genau reproduziert werden.

Bevorzugt weist jede Fertigungseinheit 41-44 eine automatisierte Übergabe der Werkstücke/Substrate 4 und/oder Wafer 2 innerhalb der einzelnen Einheiten und/oder Einrichtung/en auf. Dies ist vorteilhaft, da man dadurch eine vollautomatische Fertigungseinheit 41-44 und somit eine vollautomatische Fertigungsanlage 40 bzw. Clustertool schafft, bei dem bevorzugt nur oder mindestens ein Werkstück/Spendersubstrat 4 geladen und solange bearbeitet wird, bis es vollständig aufgezehrt in Form von Scheiben/Wafern 2 vorliegt.

Der Zyklus zum Abspalten einer Scheibe bzw. eines Wafers 2 kann bevorzugt sofort nach der Aufbereitung der Oberfläche des Reststückes bzw. des um den Wafer reduzierten Spendersubstrats 4 starten. Werden Polymerschichten 3 auf dem Spendersubstrat 4 aufgebracht, dann werden diese nach dem jeweiligen Abspalten des jeweiligen Wafers 2 bevorzugt in der jeweiligen Fertigungseinheit 41 oder in einer anderen Fertigungseinheit 42-44 oder außerhalb der Fertigungseinheiten 41-44 vom Wafer 2 abgelöst. Weiterhin ist bevorzugt eine Aufbereitungseinrichtung, insbesondere eine Polymeraufbereitungseinrichtung zum Aufbereiten der verwendeten Polymerschichten bzw. Polymerfolien 3, vorgesehen. Zusätzlich oder alternativ ist bevorzugt eine Waferaufbereitungseinrichtung 29, insbesondere zum Glätten und/oder Säubern, der freigelegten Waferoberfläche vorgesehen. Die Aufbereitungseinrichtung und/oder die Waferaufbereitungseinrichtung 29 kann/können dabei Bestandteil einer Fertigungseinheit 41-44 sein oder dazu beabstandet angeordnet sein. Weiterhin ist denkbar, dass die Polymerschichten 3 an den Wafern 2 verbleiben.

Für eine vollautomatische Fertigungsanlage 40 oder Fertigungseinheit 41-44, wie schematisch in Fig. 1 gezeigt, ist demnach bevorzugt nach der Beladung des Spendersubstrats 4 bevorzugt auch eine automatische Handhabung, insbesondere inklusive Pufferlager, vorgesehen. Zudem ist es sinnvoll, wichtige Charakterisierungen bzw. Messungen bzw. Datenerzeugung auch automatisiert innerhalb der Anlage 40, insbesondere innerhalb einer Fertigungseinheit 41-44, insbesondere innerhalb einer Einrichtung der jeweiligen Fertigungseinheit 41-44, auszuführen.

Das Spendersubstrat 4 bzw. Werkstück wird bevorzugt in einer Aufnahmeeinrichtung, insbesondere einem Arbeitstisch 63 oder einer Trägereinrichtung fixiert, insbesondere eingespannt. Nach der Fixierung bzw. dem Spannvorgang wird das Spendersubstrat 4 in der Fertigungsanlage 40 bevorzugt vermessen. Die Messwerte, die bevorzugt die Ausrichtung der Hauptoberfläche 30 bzw. Eindringoberfläche des Spendersubstrats gegenüber der Lasereinrichtung 12 beschreiben, werden bevorzugt zur Modifikation der Spendersubstrat-Prozessdaten bereitgestellt. Dies ist vorteilhaft, da so der Autofokus entsprechende bzw. erfasste Abweichungen nicht unterscheiden muss.

Gemäß einer weiteren bevorzugten Ausführungsform wird eine interferometrische vollflächige Vermessung der Werkstückoberfläche bzw. der Spendersubstratoberfläche, insbesondere der Hauptoberfläche 30 durchgeführt oder die interferometrische vollflächige Vermessung wird außerhalb der Fertigungseinheit 41-44 durchgeführt und Daten, welche die Messergebnisse repräsentieren, werden zu dem konkreten Sendersubstrat 4, insbesondere zur konkreten Hauptoberfläche des Spendersubstrats 4, insbesondere zur Modifikation der Spendersubstrat-Prozessdaten und/oder Dokumentation bereitgestellt. Dies ist vorteilhaft, da durch die interferometrische vollflächige Vermessung bevorzugt Messzeit gegenüber der Bearbeitungszeit verringert wird.

Aufgrund der Toleranzketten innerhalb der Fertigungsanlage 40, insbesondere innerhalb der Lasereinrichtung 12, wird die Bearbeitungsebene bevorzugt direkt innerhalb der Führungsebene gewählt oder parallel dazu.

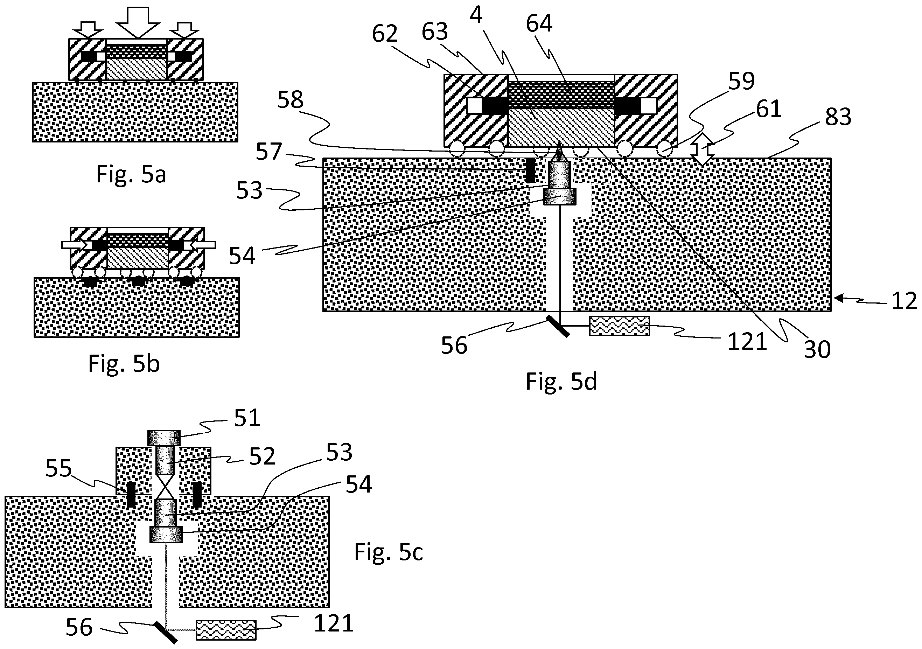

Fig. 5a-5d zeigen ein invertiertes Lasereinrichtungskonzept. Diese Anordnung verfügt über die Eigenschaften, die vorgenannten Nachteile zu überwinden und ist im Wesentlichen durch die Merkmale gekennzeichnet, dass keine z-Zustellung nötig ist und/oder das AF-Konzept bei Bedarf anwendbar ist und/oder eine optimale Steifigkeit ohne Portal besteht.

Fig. 5a zeigt eine Situation während der Einbringung des Spendersubstrats 4 in den Arbeitstisch 63, in dieser Situation ist der durch ein Luftlagersystem erzeugbare Luftspalt bevorzugt reduziert oder vollständig deaktiviert. Die Hauptoberfläche 30, d.h. die Oberfläche des Spendersubstrats 4, über welche die Laserstrahlen in das Spendersubstrat 4 eindringen und die nach der Abtrennung des Wafers 2 Bestandteil des Wafers 2 ist, liegt in dieser Situation bevorzugt flächig an der Lagereinrichtungsoberfläche 83 an. Das Spendersubstrat 4 ist dabei bevorzugt an einem Spendersubstratträger 64 angeordnet oder angekoppelt.

Fig. 5b zeigt eine Situation in der zunächst eine Fixierung des Spendersubstratträgers 64 und/oder des Spendersubstrats 4 mittels einer Fixiereinrichtung, insbesondere einer Spanneinrichtung 62, am Arbeitstisch erfolgt. Nach der Fixierung wird der Luftspalt erzeugt.

Fig. 5c zeigt eine Situation, in der eine Kalibrierung des Fokus erfolgt bzw. der Fokus eingerichtet wird. Hierbei wird bevorzugt mittels eines Messobjektivs 52 erfasste Strahlung, insbesondere Laserstrahlung einer Laserstrahlenquelle 121 einer Messkamera 51 zugeführt. In Abhängigkeit der erfassten Strahleigenschaften wird dann mittels eines oder mehrerer Justagemittel, insbesondere Justagestiften 55, die Ausrichtung des Arbeitstisches 63 bzw. des Spendersubstrats 4 gegenüber dem Objektiv 53 bzw. dem Fokussteller 54 bewirkt.

Das Bezugszeichen 56 kennzeichnet bevorzugt einen Umlenkspiegel zum Umlenken von Laserstrahlung. Die Laserstrahlung kann alternativ jedoch auch direkt, d.h. ohne Umlenkung, dem Fokussteller 54 bzw. dem Objektiv 53 zugeführt werden.

Fig. 5d zeigt bevorzugt einen Zustand während der Modifikationserzeugung im Inneren des Spendersubstrats 4. Die Laserstrahlung 58 wird dabei derart fokussiert, dass an vorbestimmten Stellen des Spendersubstrats 4 die Modifikationen erzeugt werden.

Das Bezugszeichen 57 kennzeichnet hierbei bevorzugt einen Abstandssensor zur Kontrolle des Abstands.

Bevorzugt wird somit ein Luftlagersystem verwendet. Ein Luftlagersystem ist vorteilhaft, da es Führungsgenauigkeiten mit vernachlässigbaren Abweichungen im Mikrometerbereich ermöglicht, wodurch z.B. die zuvor genannte bevorzugt externe Messung sehr präzise durchführbar ist. Luftlagersysteme sind ferner vorteilhaft, da bei diesen eine sehr starke Zyklenfestigkeit erzielt werden kann. Bei dem Luftlagersystem wird der Luftspalt 61 bevorzugt für die verschleißfreie Manipulation über Druckregelung und Vakuumvorspannung eingestellt.

Im Beladezustand ist das Luftlager 59 bevorzugt ausgeschaltet oder gedrosselt. Das Werkstück bzw. Spendersubstrat 4 wird demnach direkt auf eine bevorzugt sehr ebene Lagereinrichtungsoberfläche 83, insbesondere einer Hartgesteinplatte, gedrückt und im Werkstückhalter 64 fixiert. Dabei stellt sich automatisch die Position einer Ausgleichsebene der sehr planen Werkstückoberfläche bzw. Spendersubstratoberfläche, insbesondere Hauptoberfläche 30, ein. Bevorzugt wird das Spendersubstrat 4 in einem weiteren Schritt in der Halterung fixiert. Das Luftlager 59 wird dann bevorzugt in Betrieb genommen bzw. die Drosselung wird reduziert. Die Luftlagerung 59 wird dabei auf der Lagervorrichtungsoberfläche bevorzugt genau auf der Hartgesteinebene, erzeugt bzw. aufgebaut. Der Abstand der Spendersubstratoberfläche (zur Lagerwird bevorzugt sensorisch kartiert und besonders bevorzugt mit dem Fokussteller 54 nachgeführt. Dies ist vorteilhaft, da eine Zustellung für unterschiedliche Werkstückdicken bzw. Spendersubstratdicken bevorzugt entfällt. Ist die Ebenheitsabweichung der Spendersubstratoberfläche innerhalb einer vordefinierten Toleranz, so kann bei Bedarf auch ohne Fokussteller 54 gearbeitet werden, insbesondere dann, wenn der Führungsfehler/Gangfehler (z-Toleranz bei Manipulation) vernachlässigbar ist. Langwellige Abweichungen können z.B. auch über die Luftspaltregelung 61 ausgeglichen werden.

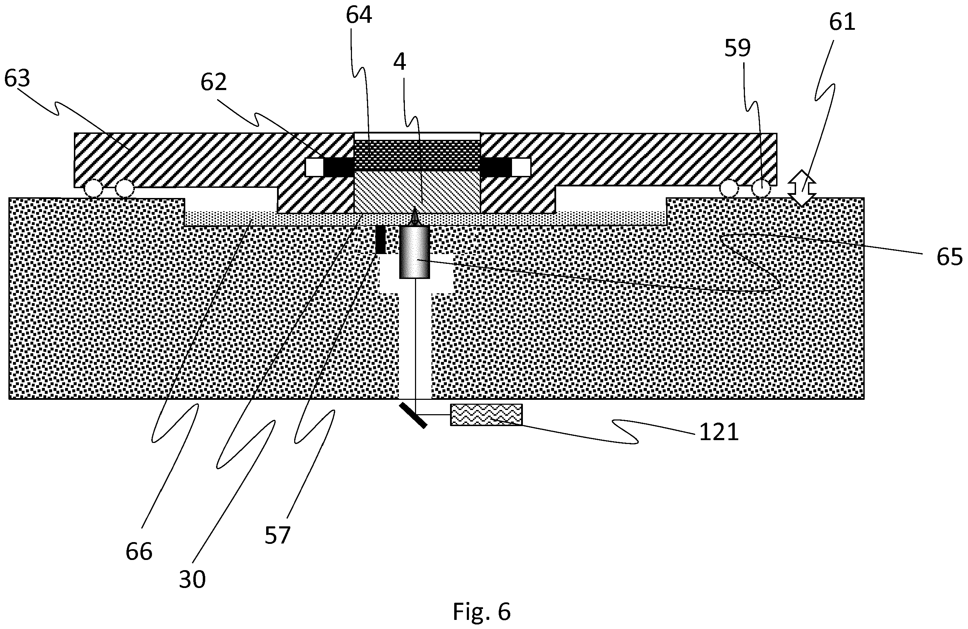

Die mittels der Lasereinrichtung 12 erzeugten Lasermodifikation 14 bringt eine geeignete Vorschädigung als Sollbruchstelle in das Volumen des Spendersubstrats 4 ein. Je nach gewünschter Oberflächenqualität im Abtausch mit Prozessdauer bestimmt bevorzugt dieser Prozess (d.h. der Prozess der Modifikationserzeugung) den Takt des Gesamtzyklus, d.h. der einmaligen oder mehrfachen Abtrennung von Wafern 2 desselben Spendersubstrats 4. Das Einbringen einer flächigen Schädigung mit gepulster Laserstrahlung 58 (vgl. Fig. 6c und 6d) erfordert eine engmaschige Perforation mit vielen tausenden Überfahrten. Der Durchsatz der Lasermodifizierung wird daher bevorzugt durch Parallelbearbeitung erhöhen.

In einer weiteren Ausführungsvariante kann in Abhängigkeit vom Spendersubstrat 4 auch ein Dauerstrichlaser (cw-Laser) vorteilhaft sein. Dies ist vorteilhaft, da dadurch der Verschleiß an Linearmanipulatoren der Lasereinrichtung 12 verringert wird.

Bevorzugt sind diffraktive Strahlteiler für Mehrfachfoki und/oder mehrere Laserköpfe je Lasereinrichtung 12, insbesondere zur Behandlung desselben Spendersubstrats 4, vorhanden. Diese Ausführungsform ist vorteilhaft, da dadurch die Anzahl der Überfahrten stark reduziert werden kann.

Durch die Parallelisierung wird zudem eine hyperlineare Verbesserung erreicht während im Gegenzug die Erhöhung der Bearbeitungsgeschwindigkeit hypolinear wirkt. Dies begründet sich mit den, insbesondere bei X-Y-Tischen, benötigten Beschleunigungs- und Bremsbewegungen bei der Bewegungsumkehr, die nicht für die Bearbeitung nutzbar sind. Während sich bei Erhöhung der Geschwindigkeit auch die Beschleunigungen erhöhen, so verschlechtert sich das Verhältnis von Bearbeitungszeit zu Umkehrzeit. Bei Parallelisierung hingegen werden die Umkehrzeiten durch Parallelisierungsfaktoren (Anzahl Köpfe und Anzahl Foki) geteilt. Dies ist vorteilhaft, da bei Mehrfachfoki die Zerstörschwelle und Transmission und Bildfeldgröße die Anzahl maximal möglicher Foki bestimmt. Bevorzugt wird die benötigte Laserleistung auf mehrere Bearbeitungsköpfe aufgeteilt, um ein Optimum erzielt werden. Es ist jedoch ebenfalls im Rahmen der vorliegenden Erfindung möglich, dass das Spendersubstrat 4 während der Modifikationserzeugung durch die Lasereinrichtung 12 mit einer Rotationseinrichtung, insbesondere einem Rotationstisch, gegenüber der Lasereinrichtung 12 bewegt, insbesondere rotiert wird.

Eine vorteilhafte Ausprägung dieser Lasereinrichtung 12 besteht, wenn die Mehrkopfanordnung den Aufwand zur bevorzugt sensorgestützen Abstandskontrolle verringert.

Enthält das Werkstück bzw. Spendersubstrat 4 inhomogene optische Eigenschaften (z.B. Dotierinhomogenitäten), so ist deren Erfassung innerhalb der Fertigungsanlage vorteilhaft. Mithilfe geeigneter Messtechnik können neben der Oberflächentopographie für den Autofokus auch optische Eigenschaften einbezogen werden.

Der Autofokus regelt die Oberflächentopographie während der Überfahrten, d.h. beim Erzeugen der Modifikationen 14 im Inneren des Spendersubstrats 4, nach. Derartige Achsen haben gewöhnlich keine großen Arbeitswege. Daher ist die z-Bewegung bevorzugt auf verschiedene Achsen verteilt. So wird die Grobzustellung der Werkstückdicke bzw. Spendersubstratdicke bevorzugt mit einer Linearachse (z.B. Servoantrieb) vorgenommen. Die Fokusfeinstellung wird bevorzugt mit einem Antrieb, der bevorzugt gegenüber einem Servoantrieb eine hohe Steifigkeit und geringe Masse (z.B. Piezosteller/Tauchspulantrieb mit Festkörpergelenk) aufweist, realisiert.

Gemäß einer vorteilhaften Ausführungsform der vorliegenden Erfindung können zeitgleich bzw. in einem Arbeitsschritt unterschiedlich dicke Werkstücke bzw. Spendersubstrate 4 mit derselben Lasereinrichtung 12 bearbeitet werden.

Für die exakte Lage der Laserschadschicht bzw. des Ablösebereichs 16 (vgl. Fig. 8-9b) innerhalb des Spendersubstratvolumens wird bevorzugt zusätzlich oder alternativ zur Oberflächentopographie (Ebenheitsabweichungen, Verkippungen) die Führungscharakteristik einzelner oder aller Manipulatoren erfasst und ausgewertet, insbesondere in Datenform überführt und zur Modifikation der Spendersubstrat-Prozessdaten und/oder zur Dokumentation bereitgestellt.

Ein weiterer Vorteil dieser Anordnung ist die sehr einfache Implementierung einer Immersionslaserbearbeitung (vgl. Fig. 6). Immersion bedeutet, dass der Luftspalt zwischen Immersionsobjektiv 65 und Spendersubstrat 4 mit einer Immersionsflüssigkeit 66 gefüllt ist, die deutliche höhere Aperturwinkel der Laserstrahlung 58 ermöglicht und damit noch höhere Selektivität auch bei sehr kleinen Schichtdicken ermöglicht. Aufgrund der Anordnung unterstützt die Schwerkraft den Verbleib des Immersionsmediums 66 im Bearbeitungsspalt.

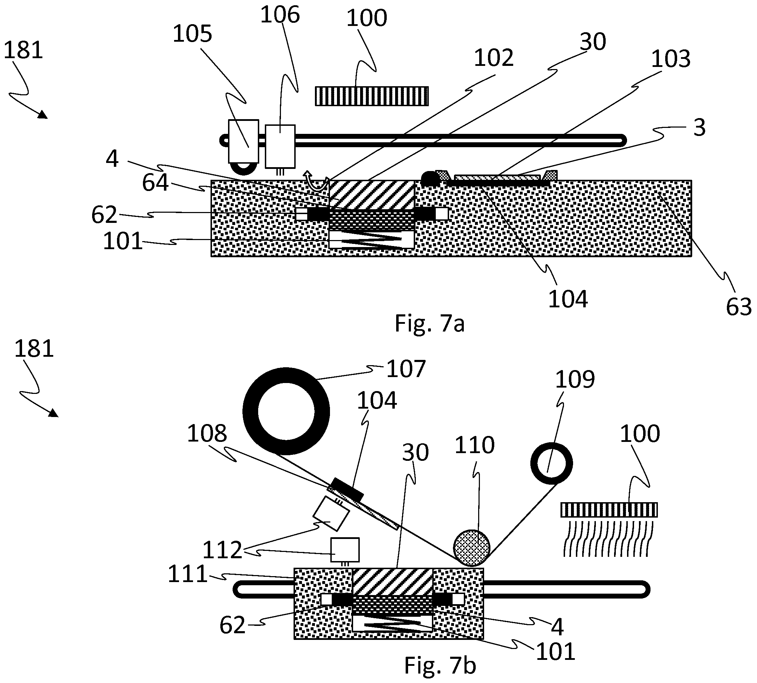

Fig. 7a und 7b zeigen zwei Beispiele von Aufbringungseinrichtungen 181.

Die gezeigten Aufbringungseinrichtungen 181 sind dabei bevorzugt als Laminereinrichtungen ausgeführt. Die Verwendung einer Laminiereinrichtung bzw. eines Folienlaminators ist vorteilhaft, da dadurch eine Vereinfachung der Prozessfolge bewirkt wird, da die Anzahl der benötigten Einzelschritte und Werkzeuge minimiert wird und somit der Gesamtprozess funktionssicher ausgestaltet ist. Es ist ferner vorteilhaft, dass thermisch basierte Klebeverfahren dadurch ersetzt werden können, da bei diesen viele fehleranfällige Einzelprozessschritte notwendig werden (reinigen, vorbehandeln, applizieren, fügen, aushärten, tempern, reinigen, nachbearbeiten).

Eine besonders vorteilhafte Ausführungsform besteht in der Anwendung einer plasmabasierten Reinigung und Aktivierung und anschließenden Verbindung der beteiligten Funktionsflächen, d.h. der Spendersubstratoberfläche 30 und der Oberfläche der Polymerfolie 3. Somit weist die Aufbringeinrichtung 181 bevorzugt eine Reinigungs- und/oder Aktivierungseinrichtung auf. Hierdurch reduzieren sich ebenfalls die Anzahl der notwendigen Prozessschritte, insbesondere da z.B. keine Nacharbeiten von Klebstoffresten etc. anfallen. Ferner können einzelne Prozessschritte, insbesondere Reinigung und Aktivierung, mit dem identischen Anlagentool sehr effizient ausgeführt werden. Die Reinigungs- und/oder Aktivierungseinrichtung ist bevorzugt Bestandteil der Laminiereinrichtung. Alternativ kann die Reinigungs- und/oder Aktivierungseinrichtung im Transportweg bzw. Behandlungsweg des Spendersubstrats 4 vor bzw. unmittelbar vor der Laminiereinrichtung 181 angeordnet sein.

Zusätzlich oder alternativ zu einer Plasmabehandlung können weitere Behandlungsvarianten zur Oberflächenbehandlung zum Einsatz kommen.

Beispielsweise ist eine Korona-Behandlung möglich. Die Korona-Behandlung setzt ein elektrochemisches Verfahren zur Oberflächenmodifikation von Kunststoffen um. Hierbei wird die Oberfläche einer elektrischen Hochspannungs-Entladung ausgesetzt z.B. zur Haftvermittlung bei Kunststoffen, Folien u.a. (PE, PP).

Zusätzlich oder alternativ ist eine Flammenbehandlung möglich. Hierbei kommt vor allem eine oberflächennahe Oxidation der jeweiligen Verbindungen zum Tragen. Im Wesentlichen erfolgen Oxidationsprozesse, durch die je nach Material und Versuchsbedingungen verschiedene polare funktionelle Gruppen gebildet werden (z.B. Oxide, Alkohole, Aldehyde, Carbonsäuren, Ester, Ether, Peroxide).

Zusätzlich oder alternativ ist eine Behandlung durch dielektrische Barriereentladung (Nichtgleichgewichtskaltplasma): Die dielektrische Barriereentladung (DBE, Wechselspannungs-Gasentladung, dielectric barrier discharge, auch DBD Behandlung) ist ähnlich einem Niedertemperaturplasma bzw. einer Glimmentladung (z.B. GDMS). Bei der DBE-Behandlung wird die Oberfläche mit uni- oder bipolaren Pulsen mit Pulsdauern von wenigen Mikrosekunden bis hinunter zu einigen zehn Nanosekunden und Amplituden im einstelligen Kilovoltbereich beaufschlagt. Hierbei sind keine metallischen Elektroden im Entladungsraum und somit keine metallischen Verunreinigungen oder Elektrodenverschleiß zu erwarten. Vorteile der DBE je nach Anwendung: keine metallischen Elektroden im Entladungsraum, somit keine metallischen Verunreinigungen oder Elektrodenverschleiß; hohe Effizienz, da an den Elektroden keine Ladungsträger aus- oder eintreten müssen (Wegfall des Kathodenfalls, keine Glühemission nötig); dielektrische Oberflächen können bei niedrigen Temperaturen modifiziert und chemisch aktiviert werden. Die Oberflächenmodifikation erfolgt dabei durch eine Wechselwirkung und Reaktion der Oberflächenspezies durch ein lonenbombardement und der Einwirkung der Ultraviolettstrahlung auf die Oberflächenspezies (z.B. 80nm - 350 nm, inkohärentes Licht UV und VUV, durch Leistungs-Hochfrequenzgeneratoren).

Zusätzlich oder alternativ ist auch eine Fluorierung oder eine Ozonierung möglich.

Zusätzlich oder alternativ ist auch eine UV-Behandlung - Eximer Bestrahlung möglich. Dabei wird bevorzugt UV-Strahlung, insbesondere Strahlung mit Wellenlängen zwischen 120 nm und 380 nm, verwendet. Die Gasentladung wird dabei durch ein elektromagnetisches Hochfrequenzfeld hervorgerufen. Dies ist vorteilhaft, da keine Elektroden bei der Gasentladung benötigt werden.

Zusätzlich oder alternativ ist eine Verwendung von Offsetdruckmaschinen und Plottmaschinen möglich. Hierdurch wird ein mechanisches Aufbringen von Mustern aus unterschiedlichen Verbindungen zur iterativen Oberflächenbehandlung ermöglicht.

Gemäß einer besonders bevorzugten Ausführungsform der vorliegenden Erfindung wird anstelle des Auftrages eines thermisch aushärtenden flüssigen Klebstoffes eine plasmabasierte Reinigung, Aktivierung und Verklebung angewendet. Hierbei wird eine Polymerfolie 3 auf einen Nichtgleichgewichtskaltplasmaprozess optimiert. Die (piezoelektrische) Kaltplasmaquelle arbeitet bevorzugt bei Gastemperatur im Plasmavolumen von 300 +/-20 K und schädigt die Polymeroberfläche daher nur sehr wenig und nur oberflächennah. Eine spezielle Anordnung dieser Plasmaquellen erlaubt eine linienhafte Bearbeitung. So kann die Spendersubstratoberfläche und die Folienoberfläche durch einfache Überfahrten der linearen Plasmaquelle gereinigt und anschließend aktiviert werden.

Ebenfalls vorteilhaft für eine Erhöhung des Durchsatzes ist der Übergang von scannenden zu Durchlaufverfahren. Eine wichtige Voraussetzung dafür ist bevorzugt die Funktion an Atmosphäre, d.h. ohne Evakuierung einer irgendwie gearteten Kammer.

Die aktivierten Oberflächen können dadurch ohne zusätzlichen Klebstoff direkt im Laminationsverfahren frei von Gaseinschlüssen laminiert werden. Für die Lamination eignen sich Laminatoren, insbesondere Heissroll-Laminatoren, flächige Vakuum-Laminatoren mit Heizplatte oder Membran-Laminatoren an der Atmosphäre mit anschließender Temperung.

Das Laminationsverfahren ohne Flüssigklebstoff kommt zudem ohne exakten Zuschnitt der Folien aus.

Für die Abtrennung infolge einer temperaturinduzierten Rissausbreitung, infolge der thermisch veranlassten Erzeugung mechanischer Spannungen im Spendersubstrat, ist es essentiell, dass kein Klebstoffmeniskus den Risseintritt an der Spendersubstratseite verhindert. Dies ist vorteilhaft, da Klebemenisken somit nicht manuell mechanisch entfernt werden müssen und somit eine Reduzierung der Gefahr der Kantenausbrüche bewirkt wird. Derartige Kantenausbrücke sind höchst negativ, da diese leicht zum Bruch der dünnen Scheibe bzw. des Wafers 2 während des Abtrennvorganges führen können.

Fig. 7a zeigt hierbei eine Aufbringungseinrichtung 181, bei der ein Spendersubstrat 4 mittels einer Fixiereinrichtung, insbesondere einer Spanneinrichtung 62 und einem Spendersubstrathalter 64 und einer Höhenverstellung 101 an einem Arbeitstisch 63 angeordnet ist. Das Bezugszeichen 104 kennzeichnet eine bevorzugte Folienunterlage, auf der eine Polymerfolie mit Trägerfilm 103 bevorzugt in einem Rahmen angeordnet ist.

Mittels einer Plasmaquelle, insbesondere Linienplasmaquelle 106, wird bevorzugt die Hauptoberfläche 30 und/oder die mit der Hauptoberfläche 30 in Kontakt bringbare Oberfläche der Spannungserzeugungsschicht 3 vorbehandelt bzw. konditioniert. Ferner ist eine Heizeinrichtung, insbesondere ein Heizstrahler 100, zum Temperieren des Hauptoberfläche 30 und/oder der Spannungserzeugungsschicht 3 vorgesehen. Ferner ist mindestens ein Laminatorelement, insbesondere mindestens ein Rolllaminator 105 zum Auflaminieren der Spannungserzeugungsschicht 3 auf die Hauptoberfläche 30 des Spendersubstrats 4 vorgesehen. Der Rollaminator 105 und/oder die Plasmaquelle 106 sind bevorzugt über die Hauptoberfläche 30 bewegbar bzw. in einer oder mehreren Richtungen verfahrbar. Das Bezugszeichen 102 kennzeichnet ferner noch ein Vakuumventil zum Erzeugen eines Unterdrucks.

Fig. 7b zeigt eine alternative Ausgestaltungsform der Aufbringeinrichtung 181. Gemäß dieser Ausführungsform wird das Spendersubstrat 4 mittels einer Fixiereinrichtung, insbesondere einer Spannvorrichtung 62, einem Spendersubstrathalter 64 und einer Höhenverstellung 101 an einem Verfahrtisch 111 angeordnet. Der Verfahrtisch 111 ist bevorzugt in einer Richtung und besonders bevorzugt in xy-Richtung, insbesondere entlang einer Führung, verfahrbar. Das Bezugszeichen 112 kennzeichnet bevorzugt ortsfest angeordnete Plasmaquellen, insbesondere Linienplasmaquellen. Mittels der Plasmaquellen erfolgt bevorzugt eine Konditionierung, insbesondere Aktivierung und/oder Reinigung, der Hauptoberfläche 30 und/oder der Oberfläche der Spannungserzeugungsschicht 3, die mit der Hauptoberfläche 30 des Spendersubstrats 4 in Kontakt gebracht wird. Die Spannungserzeugungsschicht 3 wird hierbei bevorzugt als auf einem Trägerfilm 108 angeordnete Polymerfolie bereitgestellt. Die Bereitstellung erfolgt dabei bevorzugt mittels einer Vorratsrolle 107. Die Kompositfolienanordnung bestehend aus der Trägerfolie bzw. dem Trägerfilm 108 und der Polymerschicht 3 läuft bevorzugt über eine (Heiss-) Laminationsrolle 110. Durch die (Heiss-) Laminationsrolle 110 wird die Polymerschicht 3 auf das Spendersubstrat 3 aufgebracht und somit vom Trägerfilm 108 getrennt. Der Trägerfilm 108 läuft dann zu einer Trägerfilmroll 109 und wird von dieser aufgenommen. Das Bezugszeichen 100 kennzeichnet eine Heizeinrichtung, insbesondere mindestens einen Heizstrahler, zur Temperierung der Polymerschicht 3 und/oder zur Temperierung des Spendersubstrats 4.

Das Bezugszeichen 104 kennzeichnet eine Folienunterlage. Die Folienunterlage ist dabei bevorzugt gegenüber der Plasmaquelle 112 als Support für die Kompositfolie angeordnet.

Die Figuren 8-9b zeigen schematisch Beispiele für Ablöseeinrichtungen 18.

Die Ablöseeinrichtung 18 dient zum Abtrennen des Wafers 2 von dem Spendersubstrat 4.

Die Ablöseeinrichtung 18 kann zum Einleiten einer äußeren Kraft in das Spendersubstrat 4 ausgebildet sein.

Bevorzugt wird die äußere Kraft durch das Temperieren einer am Spendersubstrat 4 angeordneten Polymerschicht 3, insbesondere ein Polymer aufweisenden Folie, erzeugt. Bevorzugt erfolgt dabei eine "Verglasung" der Polymerschicht bei Temperaturen, die bevorzugt unterhalb von 20°C oder unterhalb von 10°C oder unterhalb von 0°C oder unterhalb von -50°C oder unterhalb von -100°C, insbesondere unterhalb der Glasübergangstemperatur des Polymermaterials der Polymerschicht, liegen. Unterhalb der Glasübergangstemperatur verhält sich die Polymerfolie oder Elastomerfolie wie eine unterkühlte Flüssigkeit z.B. wie Glas. Hierbei sind die Polymerketten durch schwache van-der-Waals-Kräfte mit einander reversibel verbunden (Festkörperzustand mit vorwiegender Nahordnung). Beim Glasübergang eines Polymers steigt der Elastizitätsmodul sehr stark an und es wirken sehr starke aber dennoch homogene Kräfte auf die vorgeschädigte Zone, wodurch sich ein kritischer Riss zur Ablösung des Wafers von dem Spendersubstrat löst und/oder ausbreitet.

Zur Umsetzung dieses Prozessschrittes weist die Krafterzeugungseinrichtung 150 bevorzugt eine Temperierungseinrichtung 188 zum Abkühlen des Polymermaterials der Polymerschicht 3 bzw. der Spannungserzeugungsschicht auf. Die Temperierungseinrichtung 188 ist besonders bevorzugt zum Ausgeben eines Funktionsfluids 189, insbesondere einer Flüssigkeit oder eines Gases mit einer Temperatur von weniger als 20°C, insbesondere von weniger als 0°C oder von weniger als -30°C oder von weniger als -50°C oder von weniger als -100°C, ausgebildet.

Der Durchsatz dieses Prozessschrittes ist maßgeblich durch die Thermodynamik vorgegeben. Der Prozess funktioniert im Allgemeinen schneller, wenn kleine Wärmekapizitäten, große Wärmeleitfähigkeiten und große Temperaturgradienten vorhanden sind. Damit sind die wesentlichen Stellgrößen bzw. Parameter für die Einstellung des Abtrennschritts:
Polymer: Glasübergangstemperatur verändern, insbesondere erhöhen und/oder Foliendicke verändern, insbesondere verringern und/oder Wärmeleitfähigkeit durch Füllstoffe verbessern (ohne die Homogenität und Intensität der Kraftwirkung, Aktivierbarkeit für den Klebeprozess zu verschlechtern)

Die Spannungserzeugungsschicht weist gemäß einer weiteren bevorzugten Ausführungsform der vorliegenden Erfindung ein Polymermaterial auf oder besteht daraus, wobei das Polymermaterial eine Glasübergangstemperatur von unter 20°C, insbesondere von unter 10°C oder von unter 0°C, aufweist und wobei das Polymermaterial auf eine Temperatur unterhalb der Glasübergangstemperatur abgekühlt wird, wobei durch den erfolgenden Glasübergang die mechanischen Spannungen im Spendersubstrat erzeugt werden.

Gemäß einer weiteren bevorzugten Ausführungsform der vorliegenden Erfindung weist die Spannungserzeugungsschicht massemäßig zumindest mehrheitlich und bevorzugt vollständig ein Polymermaterial auf oder besteht daraus, wobei der Glasübergang des Polymermaterials zwischen -100°C und 0°C, insbesondere zwischen -85°C und -10°C oder zwischen -80°C und -20°C oder zwischen -65°C und -40°C oder zwischen -60°C und -50°C, liegt.

Die Spannungserzeugungsschicht bzw. die Polymerschicht bzw. die Polymerfolie besteht bevorzugt aus einem Polymer-Hybrid-Material oder weist ein solches auf, das besonders bevorzugt eine Polymermatrix ausbildet, wobei sich in der Polymermatrix ein Füllstoff befindet, wobei die Polymermatrix bevorzugt eine Polydimethylsiloxan-Matrix ist und wobei der Masseanteil der Polymermatrix am Polymer-Hybrid-Material bevorzugt 80 % bis 99 % und besonders bevorzugt 90 % bis 99 % beträgt.

Die Spannungserzeugungsschicht wird bevorzugt als vorgefertigte Folie bereitgestellt und an den Festkörper angekoppelt, insbesondere angeklebt oder angebondet.

Erfindungsgemäß wird daher ein Polymer-Hybrid-Material zur Verwendung in einem Splitting-Verfahren angegeben, bei welchem aus einem Festkörper-Ausgangsmaterial zumindest zwei Festkörper-Teilstücke erzeugt werden. Das erfindungsgemäße Polymer-Hybrid-Material umfasst eine Polymermatrix und zumindest einen darin eingebetteten ersten Füllstoff. Insofern im Folgenden von einem bzw. dem Füllstoff die Rede ist, soll gleichfalls die Möglichkeit mehrerer Füllstoffe mit einbezogen sein. Beispielsweise kann der Füllstoff eine Mischung verschiedener Materialien umfassen, z. B. Metallpartikel und anorganische Fasern.

Als Polymermatrix kann jedes Polymer oder eine Mischung verschiedener Polymere genutzt werden, mit dessen Hilfe sich die für eine Teilung des Festkörper-Ausgangsmaterials notwendigen Spannungen erzeugen lassen. Beispielsweise kann die Polymermatrix als Elastomermatrix, bevorzugt als Polydiorganolsiloxan-Matrix, besonders bevorzugt als Polydimethylsiloxan-Matrix, ausgebildet sein. Derartige Polymermaterialien lassen sich besonders einfach als Matrixmaterial in Kombination mit Füllstoffen nutzen, da die Eigenschaften aufgrund des variierbaren Vernetzungsgrads flexibel eingestellt und an den jeweiligen Füllstoff sowie das zu teilende Festkörper-Ausgangsmaterial angepasst werden können. Gemäß einer Ausführungsvariante beträgt der Masseanteil der Polymermatrix am Polymer-Hybrid-Material 80 % bis 99 %, 10 bevorzugt 90 % bis 99 %.

Spendersubstrat/Werkstück: Laserschädigung kann im Abhängigkeit mit den Parametern der Polymerfolie angepasst werden

Substratträger/Werkstückträger: kleine spezifische Wärmekapazität, bei geringer Dicke, Wärmeausdehnungskoeffizient an Werkstück angepasst. Der Substratträger in einer Kühleinrichtung muss immer als thermische Masse mitgekühlt werden, verursacht also Energie-(Kühl-)kosten und verlängert Prozesszeiten. Dementsprechend ist hier eine möglichst geringe Dicke bei möglichst geringer Wärmekapazität wünschenswert. Keramische Materialien sind hier besonders geeignet. Überdies sollte der Wärmeausdehnungskoeffizient des Substratträgers nahe dem des Substrats sein um Spannungen zwischen Träger und Substrat zu vermeiden. Idealerweise ist hier z.B. eine Siliziumkarbidkeramik als Substratträger für Siliziumkarbidsubstrate in Verwendung.

Eine über die Gasphase basierte Konvektionskühlung (z.B. über Stickstoffnebel oder über ein flüssiges Stickstoffbad) hat den Vorteil, dass sich eine homogene Temperaturverteilung im Falle einer nicht turbulenten Kühlgasführung ergibt. Für eine zeitoptimierte Ausführungsform ist eine wärmeleitungsbasierte Ausführungsform möglich, da hier schnelle Abkühlungsraten erzielbar sind.

Der Wärmetransport wird bevorzugt mittels Wärmeleitung, insbesondere durch Kontakt, ermöglicht. Gelingt ein schnellerer Wärmetransport als Wärmeleitung intern ausgleichen kann, so wird die Homogenität der Temperatur und damit der Kraftverteilung relevanter.

Eine Kühlung durch eine von Kühlmittel durchflossene Kühlplatte ist vorteilhaft, wenn ein guter Kontakt zu einem guten Wärmeleiter existiert. Vorteile der aufgepressten Kühlplatte sind die bessere Regelbarkeit im geschlossenen Kühlmittelkreislauf und die Vermeidung zu großer Verwölbungen der Polymerfolie, die die dünne Scheibe (Wafer) zerbrechen lassen könnte.

Die Kühlplatte wird jedoch auf die Polymerschicht und somit den schlechtesten Wärmeleiter im Verbund gepresst. Will man die Verglasung der Folie also schnell herbeiführen, so kann eine Wärmeleitungskühlung über das Werkstück erfolgen, das dazu z.B. abschnittsweise in ein Kühlmittel getaucht wird. Kältemischungen haben den Vorteil, dass die Prozesstemperatur sehr genau eingehalten wird.

Vorteilhaft ist kann daher auch eine Kombination aus Kühlplatte (zur Vermeidung der Verwölbung) und einem Kühlmittel zur Wärmeleitung in Folie und Werkstück sein.

Ist der Trennschritt vollzogen, so gilt es, das Werkstück schnellstmöglich wieder für die übrigen Prozesse des Verfahrens verfügbar zu machen, während der Verbund aus Cold Split Folie und dünner Scheibe möglich stressfrei/schonend auf Raumtemperatur gebracht werden muss. Das Ziel ist hierbei, die Zeit zwischen zwei Prozessschritten am selben Werkstück (aufeinanderfolgende Wafer vom selben Substrat) möglichst zu minimieren.

Fig. 8 zeigt ferner ein Beispiel einer Anpresseinrichtung 185. Die Anpresseinrichtung 185 weist dabei bevorzugt ein Verfahr- bzw. Zustellteil 186 zum in Kontakt bringen von mindestens einem Druckbeaufschlagungselement 187 mit der Spannungserzeugungsschicht bzw. Polymerschicht 3. Das Bezugszeichen 190 kennzeichnet dabei eine Kontaktstelle zwischen dem Druckbeaufschlagungselement 187 und der Polymerschicht 3. Das Druckbeaufschlagungselement 187 wird bevorzugt mittels einer vordefinierten Kraft bzw. einem vordefinierten Kraftverlauf (über die Fläche und/oder über die Zeit) eingeleitet. Die vordefinierte kraft bzw. der vordefinierte Kraftverlauf kann hierbei in Abhängigkeit der Spendersubstrat-Prozessdaten bestimmt werden.

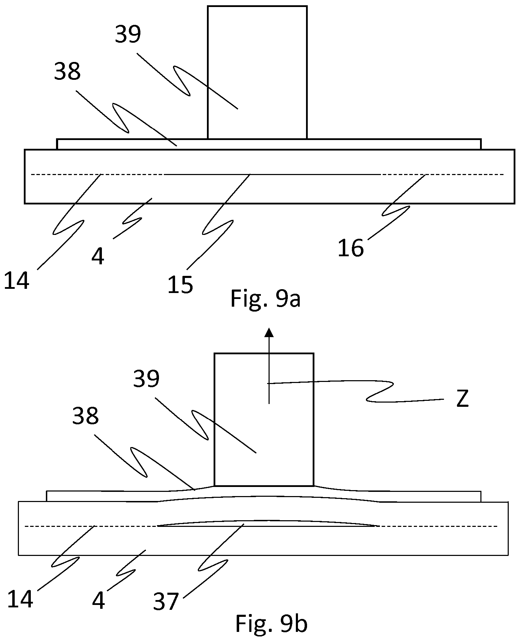

Bevorzugt kann die äußere Kraft zusätzlich oder alternativ durch die Einleitung von Zugkräften (vgl. Fig. 9a und 9b) in dem Spendersubstrat 4 erzeugt werden.

In diesem Fall wird vor der Einleitung der äußeren Kraft ebenfalls bevorzugt ein Ablösebereich 16 im Inneren des Spendersubstrats 4 durch die Einbringung bzw. Erzeugung von Modifikationen 14 definiert. Die Einbringung bzw. Erzeugung von Modifikationen erfolgt hierbei bevorzugt mittels einer Lasereinrichtung, wobei die Laserstrahlen bevorzugt über die Hauptoberfläche 30 des Spendersubstrats 4 in das Spendersubstrat 4 eingebracht werden. Bevorzugt wird mittels der Modifikationen 14 eine vorbestimmte Schwächung der inneren Struktur des Spendersubstrats geschaffen bzw. bewirkt. Besonders bevorzugt werden durch die Modifikationen 14 in einem vorbestimmten Bereich innerhalb des Spendersubstrats Risse ausgelöst, die eine zusammenhängende Trennung (Spalt 37) des Wafers 2 von dem Spendersubstrat 4 bewirken. Die zusammenhängenden Risse 15 (Trennstelle) erstrecken sich dabei über einen Anteil der freizulegenden Oberfläche von 1% bis 90%, insbesondere von 2% bis 80% oder 5% bis 75% oder 10% bis 60% oder 15% bis 50% oder 15% bis 35%, insbesondere ausschließlich im Inneren des Spendersubstrats 4. Bevorzugt wird an der Hauptoberfläche 30 des Spendersubstrats 4 und bevorzugt zumindest abschnittsweise oder teilweise oder vollständig die zusammenhängenden Risse überlagernd eine Krafteinleitungseinrichtung 39 zum Einleiten von Zugkräften in das Spendersubstrat 4 mittels einer Kopplungseinrichtung 38, insbesondere einer Vakuumeinrichtung oder einer Bondingschicht, angekoppelt.

Fig. 9b zeigt die Einleitung von Zugkräften mittels des Zugelements 39.

Der Wafer 2 wird in einem Bereich der Materiaschwächungen, insbesondere im Bereich der zusammenhängenden Risse bzw. vollständigen Trennung, auseinandergezogen, wodurch sich ein Riss nach außen hin zum Rand des Spendersubstrats 4 entlang dem Ablösebereich 16 ausbreitet. Der Ablösebereich 16 erstreckt sich bevorzugt nur innerhalb des Spendersubstrats 4, bevorzugt ist der Ablösebereich 16 zur Umfangsoberfläche des Spendersubstrats 4 beabstandet, insbesondere in einem Abstand von mehr als 0,001 mm oder von mehr als 0,01 mm oder von mehr als 0,1mm oder von mehr als 1mm.

Alternativ kann eine Ablöseeinrichtung 18 bereitgestellt werden, durch die die Beaufschlagung des Spendersubstrats 4 mit Wellen, insbesondere Schallwellen, wie z.B. Ultraschallwellen, erfolgen kann.

Das Bezugszeichen 26 kennzeichnet hierbei eine Oberflächenaufbereitungseinrichtung, insbesondere ein Schleif- oder Polierrad.

Für die Oberflächenaufbereitung des Werkstückes bzw. des Spendersubstrats oder Wafers 2 ist die Einseitenbearbeitung zwingend. Werkstück bzw. Spendersubstrat und Werkstückträger weisen eine ausreichende Steifigkeit auf und werden bevorzugt auf einem Werkstückhalter / Spendersubstrathalter / Waferhalter 64 angeordnet, wobei der Werkstückhalter / Spendersubstrathalter / Waferhalter 64 Bestandteil eines Rotationstisches sein kann oder durch diesen ausgebildet wird oder einen solchen darstellt. Für einen schnellen Abtrag wird daher bevorzugt ein Topfschleifverfahren verwendet. Dies ist vorteilhaft, da dabei jeweils nur ein kleiner Schleifkörper im Kontakt mit dem Werkstück ist, kann mit sehr hohen Drücken und daher hohen Abtragsraten im Vergleich zum ganzflächigen Läppen gearbeitet werden. Hierbei muss die Anlage anders als beim Waferschleifen lediglich mit dem Werkstückträger und der sich vermindernden Werkstückdicke umgehen lernen. Vorteilhaft sind mehrstufige Schleifprozesse mit unterschiedlicher Korngröße. Es wird bevorzugt in einem Grobschleifvorgang der nötige Planarisierungsabtrag vorgenommen, während in einem sich bevorzugt anschließenden Feinschleifprozess die Oberflächenrauhigkeit optimiert und Mikrorisse schonend entfernt werden.

Beide Prozesse werden bevorzugt so eingestellt, dass in etwa gleiche Prozesszeiten entstehen. Wichtiger ist jedoch die Gesamtkostenoptimierung, da feinkörnige Schleifmittel deutlich höhere Kosten je Abtrag bedeuten.

Für die maximale Ausbeute bei den dünnen Scheiben bzw. Wafern wird eine maschinelle Handhabung bevorzugt. Besonders bevorzugt werden Handlingschritte minimiert, um möglichst wenig Stress beim Handling der mit Mikrorissen versehenen Oberfläche einzubringen.

Für eine Zweiseitenbearbeitung müsste also die Folie von der geschädigten dünnen Scheibe abgelöst werden. Eine Ablösung des Polymers erfolgt aber bevorzugt erst nach einem Stressrelease, d.h. der Entfernung (schleifen/polieren) der Modifikationsanteile. Dies bedeutet, dass ein Verbund aus Polymerschicht, insbesondere der elastischen Folie, und einer je nach Material hartspröden dünner Scheibe (Wafer) behandelt, insbesondere geschliffen oder poliert, werden muss. Bevorzugt erfolgt diese Materialentfernung mittels eines flächig wirkenden spanenden Verfahrens, insbesondere einem flächigen Feinschleifverfahren, bevorzugt ähnlich oder identisch dem Läppen.

Die Schleifkosten stellen einen sehr wesentlichen Anteil an den Gesamtprozesskosten dar, daher ist es eine weitere Aufgabe der vorliegenden Erfindung den Bedarf an Materialentfernungsaufwand, insbesondere an Schleifaufwand, zu reduzieren. Erfindungsgemäß erfolgt dies durch die Reduzierung von Planarisierungsreserve/n und/oder durch die Reduzierung bzw. Begrenzung der Ausbreitung von Mikrorisse in Festkörperlängsrichtung.

Neben den abrasiven Methoden zum Abtrag der geschädigten Oberfläche bzw. der Modifikationsanteile kann gemäß der vorliegenden Erfindung zusätzlich oder alternativ ein Ätzschritt durchgeführt werden. Der Ätzschritt umfasst dabei bevorzugt eine nasschemische oder chemisch physikalisch geätzt werden.

Gemäß einer weiteren bevorzugten Ausführungsform der vorliegenden Erfindung kann vor der materialentfernenden Behandlung bzw. abrasiven Behandlung des bevorzugt aus SiC bestehenden oder SiC aufweisenden Spendersubstrats z.B. eine Karbonisierung der durch das Abtrennen des Wafers freigelegten Waferoberfläche und/oder der freigelegten Spendersubstratoberfläche.

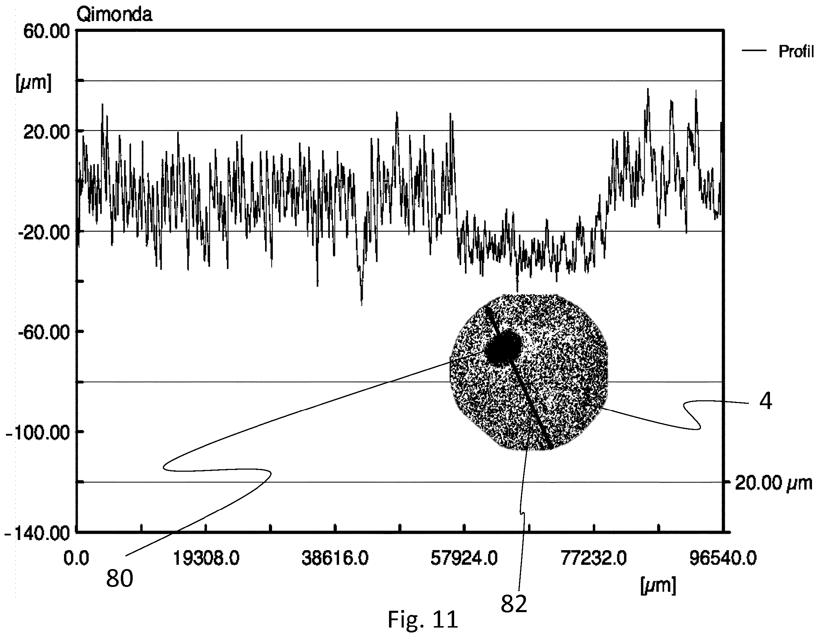

Fig. 11 zeigt Dotierungen eines Spendersubstrats 4 und Abweichungen der Modifikationsorte in Abhängigkeit von der Dotierung. Das Bezugszeichen 82 kennzeichnet dabei eine Analyserichtung, entlang der die Ortsveränderungen bzw. Einbringhöhenveränderungen erfasst sind. Die Veränderung der gezeigten Kurve repräsentiert dabei den Ort des Dotierflecks 80. Zur Schaffung eines Split bzw. einer Rissausbreitung, der/die reduzierte oder keinen Nacharbeitungsbedarf ermöglicht, wird bevorzugt an der höchstdotierten Stelle im Spendersubstrat die höchste bzw. maximaler Laserenergie angewendet. Die Höhenabweichung im Dotierfleck resultiert aus der höheren optischer Dichte (Brechzahl erhöht). Wird jedoch der gesamte Ablösebereich 16 mit maximaler Laserenergie bearbeitet, so stellt dies eine Überbelichtung dar, woraus eine erhöhte Rauhheit in den nicht mit Dotierflecken betroffenen Bereichen. Somit wird erfindungsgemäß eine ortsaufgelöste Laserenergiekarte bzw. Laserenergiedaten zur optimalen "Belichtung" (insbesondere Laserenergiebeaufschlagung) zur Reduzierung der Rauheit bestimmt. Zusätzlich oder alternativ wird erfindungsgemäß eine ortsaufgelöste Brechzahlkarte bzw. Brechzahldaten für Korrekturen der Autofokushöhen bestimmt. Die Brechzahldaten und/oder Laserenergiedaten sind dabei bevorzugt Bestandteil der Spendersubstrat-Prozessdaten und bevorzugt ebenfalls der Waferdaten.

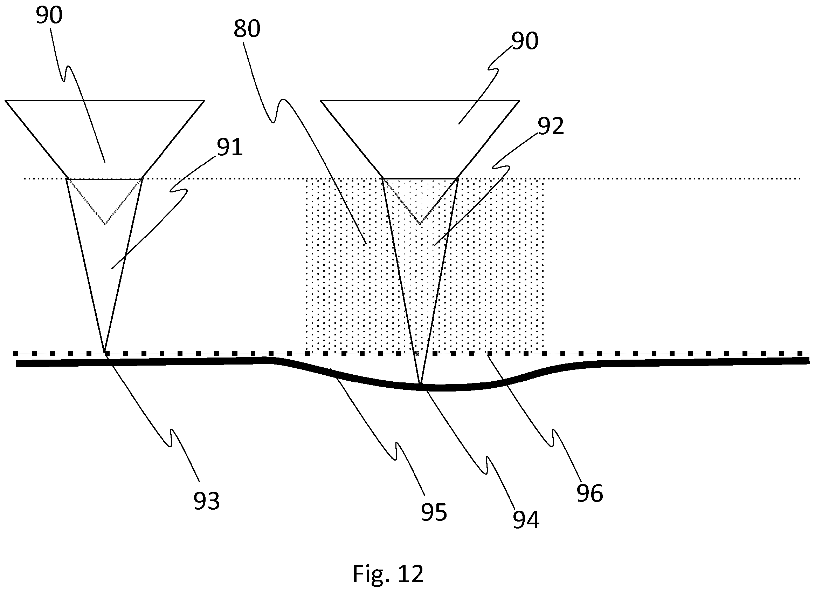

Fig. 12 visualisiert die infolge eines Dotierflecks auftretende Ortsveränderung des Modifikationsortes. Dies geschieht dadurch, dass der Dotierfleck 80 eine höhere optische Dichte aufweist und dadurch gegenüber einem undotierten oder schwachdotierten Bereich eine andere Brechung der Laserstrahlung bewirkt.

Im linken Bildteil liegt keine Dotierung vor, wodurch der von außen auf das Spendersubstrat auftreffende Laserstrahlung 90 entsprechend des vorbestimmten Wegs 91 zur vorbestimmten Modifikationsstelle 93 geleitet wird.

Im rechten Bildteil ist eine Dotierung vorhanden, wodurch sich der Weg der Strahlung im Spendersubstrat 4 verändert. Aufgrund der höheren Dichte wird die Modifikation 94 bei gewöhnlichem Autofokus weiter von der Hauptoberfläche 30 beabstandet erzeugt. Es entsteht dabei eine unebene Modifikationslage 95. Besteht nun Kenntnis über die Dotierverteilung so kann die Fokussierung dotierabhängig und/oder ortsabhängig und/oder modifikationsgenau angepasst werden, wodurch eine Modifikationslage 96 mit brechzahlkompensiertem Autofokus erzeugt wird.

Fig. 13 visualisiert den Zusammenhang zwischen der Reduzierung einer Planarisierungsreserve 70 und der dadurch möglichen Ertragssteigerung.

Durch das Bezugszeichen 67 werden Rissführungen gekennzeichnet, die mit einer konstanten und bevorzugt mit einer abnehmenden Planarisierungsreserve durchgeführt werden. Das Spendersubstrat 4 weist dabei mindestens einen Dotierfleck 80 auf. Von dem Spendersubstrat 4 wird gemäß dieser Variante zunächst ein erster Wafer 71 mit einer vorbestimmten Planarisierungsreserve 70 abgetrennt. Es ist ersichtlich, dass sich die Dotierflecken 80, 81 über die Spendersubstrathöhe verändern können. Dotierinhomogenitäten als auch die Grunddotierung können sich über die Spendersubstrathöhe bzw. den Boule/Ingot (während des Wachstums) in Lage, Größe, Intensität, Anzahl und Verteilung verändern. Die Spendersubstrat-Prozessdaten werden bevorzugt daran angepasst, wodurch eine deutliche Outputsteigerung erzielbar ist. Infolge der Analyse der Eigenschaften des abgetrennten Wafers 2 und/oder infolge der Analyse der Eigenschaften der freigelegten Oberfläche des Spendersubstrats 4 und/oder infolge der Einbeziehung von Daten weiterer Messeinrichtungen 24, 25, 27, 270 kann eine Reduzierung der Planarisierungsreserve für eine oder mehrere weitere Waferabtrennungen von demselben Spendersubstrat 4 bewirkt werden. Basierend auf den erzeugten Mess- und/oder Analysedaten 600, 601, 602, 603 und/oder 604 sind die Spendersubstrat-Prozessdaten zur Ansteuerung der Lasereinrichtung 12 und/oder zur Ansteuerung einer eventuell vorhandenen Aufbringeinrichtung 181 und/oder zur Ansteuerung der Abtrenneinrichtung 18 und/oder zur Ansteuerung einer eventuell vorhandenen Oberflächenaufbereitungseinrichtung 26 modifizierbar.

Besonders bevorzugt erfolgt eine sukzessive Approximation der mittleren Substratbrechzahl (entspricht Schreibtiefe) mit einer Genauigkeit besser 0,1% oder besser 1% oder besser 2%. Die Bestimmung der Substratbrechzahl erfolgt dabei bevorzugt über Schleifrückmeldungen und/oder über chromatische Dickenmessungen, insbesondere mit zwei Punkten.

Im Splitrezept wird der im Kühlschritt zu verwendende Parametersatz zusammengefasst. Hierunter fallen der Split-Anpressdruck, der Temperaturverlauf bis zum Erreichen der Zieltemperatur, die Zieltemperatur und/oder der Temperaturverlauf im darauffolgenden Wiederaufwärmschritt.

Im Laserrezept werden die im Laserschritt zu verwendenden Parameter und die Bearbeitungsstrategie zusammengefasst. Dies beinhaltet unter anderem Laserpulsabstände, Linienabstände, Pulsenergien in Abhängigkeit vom Dotiergrad, Linienorientierungen, die Schreibfolge des Einbringens von Linien (z.B. mehrstufiger Prozess), die Laserpolarisation, die Laserwiederholrate, Laserpulsdauer und auch Werkstückdickenabhängigkeit der Laserpulsenergien.

Bevorzugt werden die Spendersubstrat-Prozessdaten kontinuierlich iterativ modifiziert.

In anderen Worten wird somit ein lernender Split bzw. eine angepasste Risserzeugung bereitgestellt, wodurch eine Planarisierungsreserve 70 sukkzessive verkleinerbar ist, wodurch mit dieser Materialersparnis zusätzliche Wafer ausdemselben Spendersubstrat 4 gewonnen werden können.

Es kann der Darstellung entnommen werden, dass die Planarisierungsreserve 70 bevorzugt kontinuierlich reduziert wird. Es ist alternativ jedoch ebenfalls möglich die Planarisierungsreserve 70 in Schritte zu reduzieren, d.h. dass eine Reduzierung der Planarisierungsreserve 70 jeweils erst nach der Abtrennung einer jeweils vordefinierten Anzahl an Wafern 2 erfolgt. Zusätzlich oder alternativ ist es ferner möglich die Planarisierungsreserve 70 erst dann zu reduzieren, wenn eine vorbestimmte Mindestreduzierung der Planarisierungsreserve 70 überschritten wird.

Besonders bevorzugt weisen die Spendersubstrat-Prozessdaten Ausgangsdaten bzgl. Spendersubstraten gleicher Herkunft und/oder gleicher Herstellungsart und/oder gleicher Größe und/oder gleicher Materialien und/oder gleicher Masse und/oder des gleichen Herstellers auf. Bevorzugt werden die Spendersubstrat-Prozessdaten für jeden Wafer 2 desselben Spendersubstrats 4 bereitgestellt oder gespeichert und besonders bevorzugt werden die Veränderungen der Spendersubstrat-Prozessdaten von einem Wafer zum nächsten und/oder über mehrere Wafer hinweg, insbesondere über alle Wafer hinweg, erfasst, dokumentiert und/oder abgespeichert, insbesondere auf einen Datenträger übertragen. Somit ist z.B. aus den Spendersubstrat-Prozessdaten ein Dotiertomogramm für das gesamte Spendersubstrat 4 ableitbar. Ein solches Dotiertomogramm kann z.B. zur Steuerung von Wachstumsprozessen von Spendersubstraten verwendet werden.

Durch das Bezugszeichen 68 werden Wafer eines Spendersubstrats 4 gekennzeichnet, die alle im Wesentlichen oder genau ohne Planarisierungsreserve 70 abgetrennt wurden, wodurch eine weitere Ertragssteigerung 69 erzielbar ist.

Fig. 14a zeigt schematisch die Schritte in einem bevorzugten Verfahren gemäß der vorliegenden Erfindung. Es wird hierbei im Schritt A1 ein Spendersubstrat 4 der Fertigungsanlage zugeführt. Dieses Spendersubstrat 4 erhält in Schritt A2 eine Oberflächenbehandlung bevor in Schritt A3 eine Laserbehandlung, insbesondere die Erzeugung von Modifikationen 14 im Inneren des Spendersubstrats 4, durchgeführt wird. In Schritt A5 wird eine Polymerschicht, insbesondere PDMS aufweisend, auf einer freiliegenden Oberfläche des Spendersubstrats 4 angeordnet oder erzeugt. Bevorzugt kennzeichnet das Bezugszeichen A4 eine Bereitstellung einer Polymerfolie, wobei die Polymerfolie dann auf das Spendersubstrat 4 als Polymerschicht aufgebracht, insbesondere angeklebt bzw. angebondet, wird. Gemäß dem Bezugszeichen A6 wird ein Trennschritt zum Abtrennen eines Wafers 2 von dem Spendersubstrat 4 vorgenommen. Der Trennschritt umfasst dabei besonders bevorzugt die thermische Beaufschlagung des Polymerschichts, insbesondere eine Abkühlung der Polymerschicht auf eine Temperatur unterhalb der Glasübergangstemperatur der Polymerschicht. Durch die thermische Beaufschlagung werden durch die Polymerschicht bzw. Aufnahmeschicht mechanische Spannungen im Spendersubstrat 4 erzeugt, wodurch eine Rissausbreitung entlang der zuvor erzeugten Modifikationen 14 bewirkt wird. Das verbleibende Restsubstrat wird gemäß wieder einer Oberflächenbehandlung gemäß A2 zugeführt. Die Behandlungsstation kann hierbei dieselbe oder eine andere sein. Der Zyklus aus A2-A6 wird dabei bevorzugt solange durchlaufen, bis das Spendersubstrat 4 eine vorbestimmte Restdicke unterschreitet. Gemäß A7 werden die abgetrennten Wafer 2 mit daran angeordneter Polymerfolie weiterprozessiert.

Bevorzugt werden von der Datenbank D oder Prozessoreinrichtung 32 einzelne oder alle der Prozessdaten bzw. Betriebsparameter einzelner oder aller beim Durchlaufen des Zyklus (A2-A6) eingesetzter Behandlungseinrichtung/en erfasst und in Bezug zu dem Spendersubstrat 4 und/oder zu dem jeweiligen konkreten Wafer 2 abgespeichert.

Fig. 14b zeigt schematisch die Schritte in einem alternativen bevorzugten Verfahren gemäß der vorliegenden Erfindung. Gemäß dem Schritt B1 wird analog zu dem Schritt A1 das Spendersubstrat 4 bereitgestellt. Der Schritt B2 stellt ebenfalls analog zu dem Schritt A2 eine Oberflächenbehandlung, insbesondere eine Oberflächenoptimierung, dar. Als Schritt B3 wird bevorzugt eine Analyse des Spendersubstrats 4 durchgeführt, insbesondere zur Bestimmung der lokalen Oberflächengüte und/oder der lokalen Dotierung und/oder der lokalen Brechzahl und/oder Kristallgitterversetzungen. Je nach Analyseergebnis kann das Spendersubstrat 4 zur erneuten Oberflächenaufbereitung (B2) zugeführt werden oder zur Laserbehandlung (B4) weitergeleitet bzw. gefördert werden. Die Laserbehandlung entspricht hierbei bevorzugt der Laserbehandlung A3, d.h. es werden bevorzugt Modifikationen 14 im Inneren des Spendersubstrats 4 zum Führen eines Risses erzeugt. Nach der Laserbehandlung (B4) erfolgt bevorzugt im Schritt B5 eine Oberflächenbehandlung des Spendersubstrats 4, insbesondere eine Reinigung und/oder Aktivierung der Hauptoberfläche. Die Schritte B6 bis B8 entsprechen hierbei den Schritten A4 bis A6. Das verbleibende Rest-Spendersubstrat wird bevorzugt erneut der Oberflächenbehandlung B2 zugeführt. Besonders bevorzugt erfolgt (zeitlich) vor der Oberflächenbehandlung eine Temperierung, insbesondere Aufwärmung, des Spendersubstrats 4. Das Spendersubstrat 4 wird dabei bevorzugt um mindestens 10° oder um mindestens 20°C oder um mindestens 30°C oder um mindestens 50°C, insbesondere auf bis zu 20°C oder auf bis zu 30°C oder auf bis zu 50°C aufgewärmt (vgl. Bezugszeichen B9). Das Bezugszeichen B10 kennzeichnet einen Schritt, der bevorzugt analog zum Schritt A7 ausgebildet ist. Das Bezugszeichen D kennzeichnet hierbei ebenfalls eine Datenbank oder Prozessoreinrichtung 32. Die Datenbank D oder Prozessoreinrichtung 32 bewirkt besonders bevorzugt eine Anpassung eines oder mehrerer Behandlungsparameter einer oder mehrerer Behandlungseinrichtungen, insbesondere die Anpassung an eine in jedem Zyklus reduzierte Dicke und/oder Dotierung. Bevorzugt werden zumindest zwei Schritte B2, B3, B4, B5, B7 und/oder B8 durch die Datenbank D oder Prozessoreinrichtung 32 angesteuert und/oder mit Prozessdaten versorgt.

Bevorzugt werden von der Datenbank D oder Prozessoreinrichtung 32 einzelne oder alle der Prozessdaten bzw. Betriebsparameter einzelner oder aller beim Durchlaufen des Zyklus (A2-A6) eingesetzter Behandlungseinrichtung/en erfasst und in Bezug zu dem Spendersubstrat 4 und/oder zu dem jeweiligen konkreten Wafer 2 abgespeichert.

Fig. 15 zeigt schematisch die Schritte in einem alternativen bevorzugten Verfahren gemäß der vorliegenden Erfindung. Die Schritte C1 bis C3 entsprechen hierbei bevorzugt den Schritten B1 bis B3. Das Bezugszeichen C4 kennzeichnet einen Schritt des Vermessens und/oder Analysierens des abgetrennten Wafers 2. Die hierbei gewonnenen Mess- und/oder Analyseergebnisse können in der Datenbank D oder Prozessoreinrichtung 32 mit Bezug zu dem konkreten Spendersubstrat 4 und/oder dem konkreten Wafer 2 gespreichert werden. Die Schritte C5 bis C10 entsprechen dabei bevorzugt den Schritten B4 bis B9 (vgl. Fig. 14b). In Schritt C11 wird die Polymerschicht bevorzugt von dem Wafer 2 entfernt. Der Wafer 2 kann dann zur weiteren Aufbereitung zur Station C2 zurückgeführt werden bzw. zu einer alternativen Oberflächenaufbereitungsstation gefördert werden. Anschließend erfolgt bevorzugt eine Analyse des Wafers 2 und der Wafer wird daran anschließend entsprechend dem Schritt C4 ausgegeben bzw. zur weiteren Behandlung freigegeben, insbesondere in einer nachgelagerten Anlage.

Das Bezugszeichen C12 kennzeichnet, eine Weiterbehandlung, insbesondere Aufbereitung oder Entsorgung, der abgetrennten Polymerschicht.

In einzelnen oder mehreren oder allen zuvor benannten Schritten werden bevorzugt zumindest während der Behandlung oder Prozessierung des Spendersubstrats und/oder des abgetrennten Wafers Betriebsparameter und/oder Spendersubstratparameter und/oder Waferparameter und/oder Polymerschichtparameter erfasst und an die Datenbank D oder Prozessoreinrichtung 32 übermittelt. Dies wird durch das Bezugszeichen M verdeutlicht.

Die Bezugszeichen D2 bis D11 stelle bevorzugt Daten zur Ansteuerung der einzelnen Einrichtungen dar. Das Bezugszeichen D2 kennzeichnet bevorzugt die Bereitstellung von Prozessparametern, wobei diese Prozessparameter bevorzugt spezifisch für das Spendersubstrat und den jeweils abzutrennenden Wafer sind. Das Bezugszeichen D5kennzeichnet bevorzugt Spendersubstrat-Prozessdaten zur Ansteuerung der Lasereinrichtung. Das Bezugszeichen D6 kennzeichnet bevorzugt Spendersubstrat-Prozessdaten zur Ansteuerung der Reinigungs- und/oder Aktivierungseinrichtung. Das Bezugszeichen D8 kennzeichnet bevorzugt Spendersubstrat-Prozessdaten zur Ansteuerung der Aufbringeinrichtung, insbesondere Laminiereinrichtung. Das Bezugszeichen D9 kennzeichnet bevorzugt Spendersubstrat-Prozessdaten zur Ansteuerung der Ablöseeinrichtung und das Bezugszeichen D11 kennzeichnet bevorzugt Spendersubstrat-Prozessdaten zur Ansteuerung einer Einrichtung zum Entfernen der Folie.

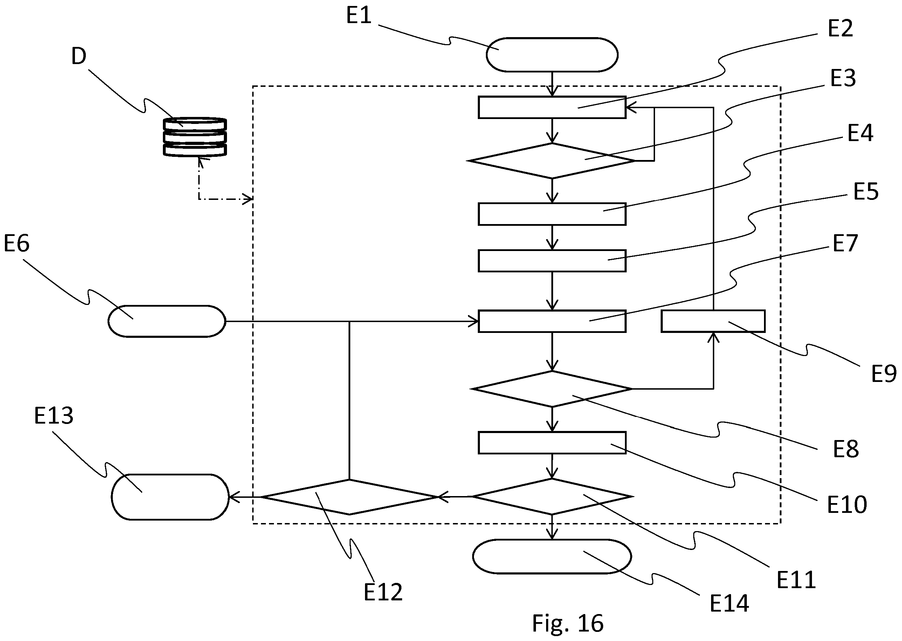

Fig. 16 zeigt schematisch die Schritte in einem alternativen bevorzugten Verfahren gemäß der vorliegenden Erfindung. Die Schritte E1 bis E9 entsprechen bevorzugt den Schritten B1 bis B9. Der Schritt E10 wird bevorzugt durch eine Einrichtung zum Materialabtrag bewirkt. Bevorzugt wird somit eine Oberflächenbehandlung durchgeführt, wobei die Oberflächenbehandlung besonders bevorzugt das Abtragen, insbesondere spanendes Abtragen, von Material des Wafers umfasst. Bevorzugt wird dabei ausschließlich oder zumindest der mittels der Laserstrahlung modifizierte Materialanteil abgetragen. Dies ist vorteilhaft, da dieser Materialanteil aufgrund der Modifikationen unter Spannungen, insbesondere Druckspannungen, steht. Durch den Materialabtrag werden somit die Spannungen im Wafer reduziert, wodurch dieser besser vor einer Beschädigung geschützt wird. Bevorzugt erfolgt gemäß dem Schritt E11 anschließend and den Schritt E10 oder vor dem Schritt E10 eine Abtrennung der Polymerschicht vom Wafer 2. Die Polymerschicht wird dann gemäß dem Schritt E12 aufbereitet oder Entsorgt (vgl. Schritt E13). Die aufbereitetet Schicht kann dann über den Schritt E6 wieder zur Anbringung an das Spendersubstrat verwendet werden. Der Wafer 2 wird bevorzugt gemäß dem Schritt E14 ausgegeben.

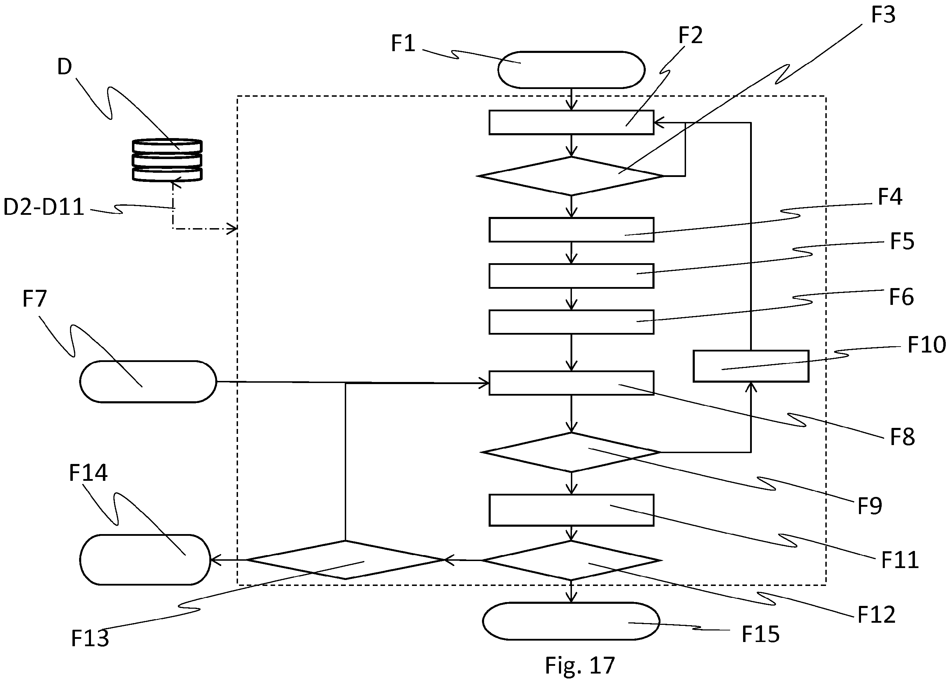

Fig. 17 zeigt schematisch die Schritte in einem alternativen bevorzugten Verfahren gemäß der vorliegenden Erfindung. Die Schritte F1 bis F4 entsprechen dabei den Schritten B1 bis B4. Der Schritt F5 repräsentiert eine Behandlung des Spendersubstrats 4 mittels eines Pre-Split-Werkzeugs, insbesondere eines Ablationslasers oder eines Fräswerkzeugs oder eines Schleifwerkzeugs. Die Schritte F6 bis F10 entsprechen dabei bevorzugt den Schritten B5 bis B9. Gemäß dem Schritt F11 wird bevorzugt eine Oberflächenbehandlung analog zum Schritt E10 durchgeführt. Die Schritte F12 bis F15 entsprechen bevorzugt den Schritten E11 bis E14. Es ist hierbei zusätzlich oder alternativ denkbar, dass der Trennschritt F9 eine Schallbeaufschlagung, insbesondere eine Ultraschallbeaufschlagung des Spendersubstrats 4, zum Auslösen den Risses umfasst.

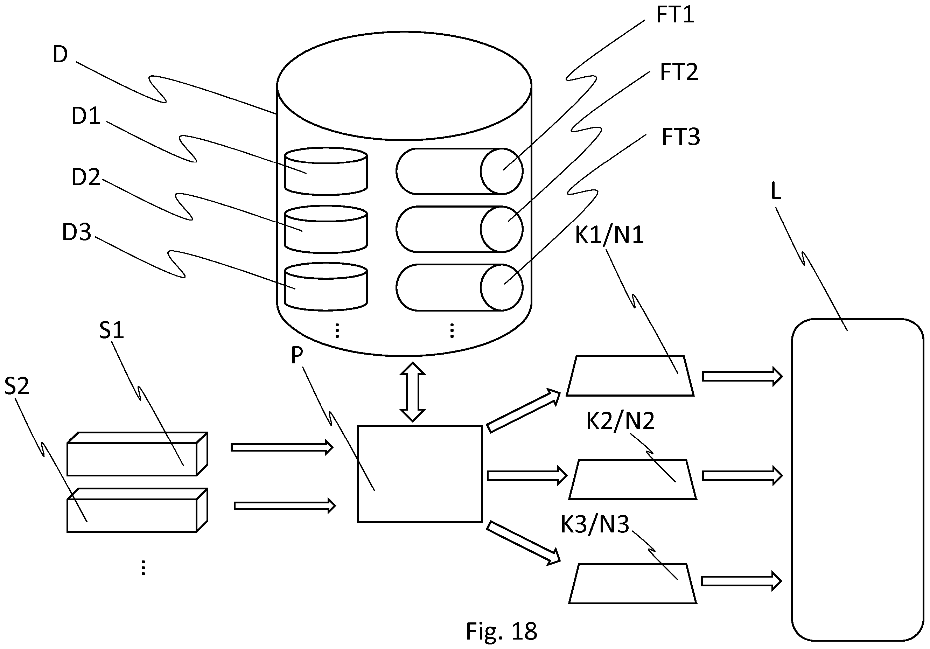

Fig. 18 zeigt schematisch die Anpassung der Laserparameter über die Gesamtheit der von einem Spendersubstrat abgetrennten Festkörperschichten bzw. Wafern.

Hierzu wird eine Datenbank D bereitgestellt. Diese Datenbank D hält bevorzugt Standarddaten zur Dotierung, der Lasertiefe, der Laserenergieverteilung und/oder der Schadschicht von mindestens einem Spendersubstrat.

Zusätzlich oder alternativ kann die Datenbank Ist-Daten bzgl. der Dotierung, der Lasertiefe, der Laserenergieverteilung, der Schadschicht, der Höhe des Spendersubstrats vor dem Abtrennen einer konkreten Festkörperschicht, die Höhe des Spendersubstrats nach der Abtrennung der Festkörperschicht, die mittlere Dicke der abgetrennten Festkörperschicht, die Dickenverteilung der Festkörperschicht nach dem Split und/oder die Dicke der Festkörperschicht nach einer Oberflächenaufbereitung, insbesondere einem Grindingschritt, von mindestens einem zuvor von demselben Spendersubstrat abgetrennten Wafer vorhalten.

Bevorzugt werden die bezüglich der Abspaltung eines jeden Wafers eines konkreten Spendersubstrats erfassten Daten bzgl. der Dotierung D1, der Lasertiefe D2, der Laserenergieverteilung D3, der Schadschicht, der Höhe des Spendersubstrats vor dem Abtrennen einer konkreten Festkörperschicht, die Höhe des Spendersubstrats nach der Abtrennung der Festkörperschicht, die mittlere Dicke der abgetrennten Festkörperschicht, die Dickenverteilung der Festkörperschicht nach dem Split und/oder die Dicke der Festkörperschicht nach einer Oberflächenaufbereitung, insbesondere einem Grindingschritt in der Datenbank D vorgehalten.

Werden n-Wafer bzw. Festkörperschichten von einem Spendersubstrat m abgespaltet, so erfolgt bevorzugt n-mal bzw. bis zu n-mal oder bis zu n-x mal (wobei x bevorzugt 1 ist) eine Anpassung der Laserparameter. Die zuvor beschriebenen Daten umfassen dabei bevorzugt Daten zum abgetrennten Wafer n und zum Spendersubstrat m vor der Abtrennung des Wafers n und zum Spendersubstrat m nach der Abtrennung des Wafers n.

Die Daten zum abgetrennten Wafer n und zum Spendersubstrat nach der Abtrennung des Wafers n werden bevorzugt durch die Sensor- bzw. Messeinrichtungen S1-S3 erfasst. So kennzeichnet das Bezugszeichen S1 z.B. einen Höhensensor, mittels dem bevorzugt eine Höhenmessung /-profildaten vor der Erzeugung der Modifikationen zum Abtrennen der Festkörperschicht n+1 vom Spendersubstrat (insbesondere Boule) m durchgeführt wird. Das Bezugszeichen S2 kennzeichnet z.B. einen Dotiersensor oder einen Brechzahlbestimmungssensor. Mittels dem Dotiersensor S2 wird bevorzugt vor der Erzeugung der Modifikationen zum Abtrennen der Festkörperschicht n+1 ortsaufgelöst die Dotierung des Spendersubstrats, insbesondere in einer vorbestimmten Ebene, erfasst.

D.h., dass vor der Erzeugung der Modifikationen im Inneren des Restspendersubstrats zum Abtrennen des Wafers n+1 bevorzugt die Dotierung des Restspendersubstrats, die Höhe des Restspendersubstrats nach der Abtrennung der Festkörperschicht n, die mittlere Dicke der abgetrennten Festkörperschicht n, die Dickenverteilung der Festkörperschicht n nach dem Split und/oder die Dicke der Festkörperschicht n nach einer Oberflächenaufbereitung, insbesondere einem Grindingschritt, erfasst bzw. bestimmt wird. Basierend auf diesen Ist-Daten zum Restspendersubstrat und/oder zum Wafer n und bevorzugt mit den in der Datenbank D vorgehaltenen Daten zum konkreten Spendersubstrat m vor der Abtrennung des Wafers n und/oder mit den in der Datenbank D vorgehaltenen Daten zum Wafer n-1 erfolgt bevorzugt mittels in der Datenbank vorgehaltenen Funktionen und/oder Umrechnungstabellen FT1-FT3 die Bestimmung von Korrekturwerten zu den Laserparametern, insbesondere zur Lasertiefeneinstellung, Laserenergieverteilung und/oder zur absoluten Laserenergie. Alternativ kann anstelle der Bestimmung der Korrekturwerte auch eine Neubestimmung der Laserparameter, insbesondere der Lasertiefeneinstellung, Laserenergieverteilung und/oder zur absoluten Laserenergie, erfolgen. Besonders bevorzugt werden neu bestimmten Laserparameter bzw. die Korrekturwerte zu den Laserparametern ebenfalls in der Datenbank D abgespeichert, insbesondere dem jeweils konkreten Spendersubstrat m und/oder Wafer n zugeordnet. Die Bestimmung der Korrekturwerte K1-K3 oder die Neubestimmung der Laserparameter N1-N3 wird dabei bevorzugt durch eine Prozessoreinrichtung bzw. Datenverarbeitungseinrichtung P bewirkt. K1 kann somit eine Korrektur der Lasertiefeneinstellungen für den Wafer n+1 vom konkreten Spendersubstrat m bezeichnen und K2 kann somit eine Korrektur der Laserenergieverteilung für den Wafer n+1 vom konkreten Spendersubstrat m bezeichnen und K3 kann somit eine Korrektur der absoluten Laserenergie für den Wafer n+1 vom konkreten Spendersubstrat m bezeichnen. Die Korrekturwerte K1-K3 oder die alternativ neu bestimmten Laserparameter N1-N3 werden dann als Eingangssteuerparameter für den Betrieb der Lasereinrichtung zum Erzeugen der Modifikationen zum Ablösend des Wafers n+1 verwendet. Die in der Datenbank vorgehaltenen Funktionen und/oder Umrechnungstabellen FT1-FT3 definieren bevorzugte Zusammenhänge zwischen einzelnen erfassten und/oder gespeicherten Daten. So kann FT1 (Lasertiefe) z.B. die Bestimmung der Lasertiefe die Daten Spendersubstrathöhe vor dem Split zur Abtrennung des Wafers n+1, den Laserkorrekturdaten hinsichtlich der Lasertiefeneinstellung vom Wafer n-1 hin zu Wafer n und die Dicke (insbesondere mittlere Dicke) des Wafers n umfassen. FT2 (Laserenergieverteilung) kann z.B. die Dotierdaten des Spendersubstrats vor der Abtrennung des Wafers n+1, die bei der Erzeugung der Modifikationen für die Abtrennung des Wafers n verwendete Laserenergiekarte, die von der Abtrennung des Wafers n-1 nach n erfolgten Korrekturen der Laserenergieverteilung und die Dickenverteilung des Wafers n nach dem Split umfassen. FT3 (Schadschicht) kann z.B. die von der Abtrennung von n-1 nach n bestimmten Korrekturwerte der absoluten Laserenergie, die Differenzdicke des Spendersubstrats nach der Abtrennung von Wafer n und die Dicke des Wafers n nach einer Oberflächenbehandlung, insbesondere Grinding, umfassen.

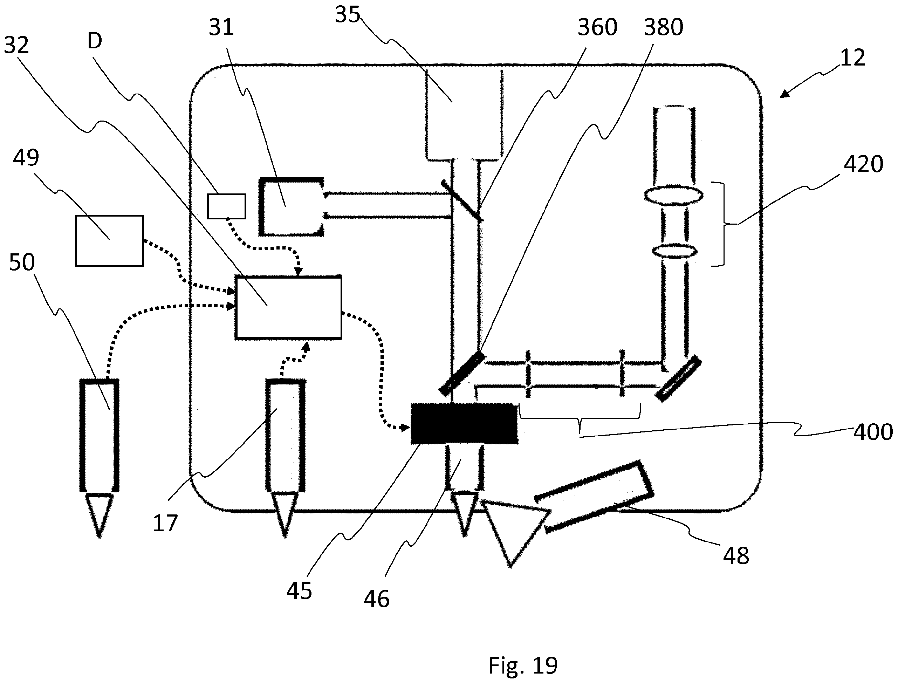

Fig. 19 zeigt einen erfindungsgemäße Laserbeaufschlagungseinrichtung bzw. Lasereinrichtung 12, wie sie bevorzugt in dem erfindungsgemäßen Verfahren und der erfindungsgemäßen Vorrichtung bzw. Fertigungsanlage 40 zum Erzeugen von Modifikationen 14 in einem Festkörper 4 vorgesehen ist.

Die Laserbeaufschlagungseinrichtung 12 weist hierbei mindestens eine Laserstrahlenquelle 31, insbesondere mit Fokusmarkierung, auf. Bei der Laserstrahlenquelle 31 kann es sich somit bevorzugt konkret um eine koaxiale Lichtquelle mit Fokusmarkierung handeln. Die durch die Laserstrahlenquelle 31 erzeugten Lichtstrahlen 58 werden bevorzugt auf einem vorbestimmten Weg von der Laserstrahlenquelle 31 zu einer Fokuseinrichtung 45 bzw. einer Einstelleinrichtung 45 zum Einstellen einer Fokusgröße und einer Fokusposition in dem Festkörper 4 geleitet. Bei der Einstelleinrichtung 45 kann es sich hierbei bevorzugt um eine Feinfokussiereinrichtung, insbesondere in Z-Richtung bzw. in Laserstrahlverlaufsrichtung, handeln. Bevorzugt kann die Einstelleinrichtung 45 als Piezofeinfokussiereinrichtung ausgebildet sein. Die durch die Einstelleinrichtung 45 hindurch gegangenen Laserstrahlen 58 passieren bevorzugt ein Mikroskop mit langem Arbeitsabstand 46. Besonders bevorzugt wird durch das Mikroskop mit dem langen Arbeitsabstand 46 und die Einstelleinrichtung 45 die Laserstrahlung derart angepasst bzw. eingestellt bzw. modifiziert, dass die Modifikation 14 an der vordefinierten Stelle erzeugt wird. Es ist hierbei denkbar, dass die Modifikation 14 an einer Stelle erzeugt wird, die z.B. weniger als 5µm und bevorzugt weniger als 2µm und besonders bevorzugt weniger als 1 µm von der vordefinierten Stelle abweicht bzw. dazu beabstandet ist. Die Einstelleinrichtung 45 wird bevorzugt mittels einer Steuereinrichtung 32 angesteuert, wobei die Steuereinrichtung 32 bevorzugt die Relativposition und Orientierung des Festkörpers 4 gegenüber der Laserbeaufschlagungseinrichtung 12 oder den Abstand des aktuellen Oberflächenanteils, in den Laserstrahlung eingeleitet werden soll, zu der Laserbeaufschlagungseinrichtung 12 sowie die lokale Brechzahl oder mittlere Brechzahl des Festkörpermaterials und die Bearbeitungstiefe des Festkörpers 4 an der jeweiligen Stelle für die Einstellung der Laserbeaufschlagungseinrichtung 12, insbesondere zumindest der Einstelleinrichtung 45, berechnet bzw. bestimmt bzw. verwendet. Die Steuerungseinrichtung 32 kann die erforderlichen Daten in Echtzeit durch entsprechende und damit kommunizierend verbundene Sensoreinrichtungen bzw. Sensormittel erfassen bzw. empfangen. Alternativ ist jedoch ebenfalls denkbar, dass z.B. für einen oder beide der Parameter Brechzahl und Bearbeitungstiefe vor Bearbeitungsbeginn eine Analyse der Oberfläche vorgenommen bzw. durchgeführt wird, über welche die Laserstrahlen 58 in den Festkörper 4 zur Erzeugung der Modifikationen 14 eindringen. Die Parameter können dann in Form entsprechender ortsabhängiger Daten in einer Speichereinrichtung bzw. einem Datenspeicher D vorgehalten werden bzw. darin eingelesen werden. Der Datenspeicher D kann hierbei als Wechselmedium, insbesondere eine Speicherkarte, oder als fest verbauter Speicher ein Teil der Laserbeaufschlagungseinrichtung 12 sein.

Alternativ ist jedoch ebenfalls denkbar, dass der Datenspeicher D außerhalb der Laserbeaufschlagungseinrichtung 12 angeordnet ist und zumindest zeitweise kommunizierend mit der Laserbeaufschlagungseinrichtung 12 verbindbar ist. Zusätzlich oder alternativ kann der Steuereinrichtung 32 durch einen Nutzer 49 Arbeitsabläufe oder Änderungen im Arbeitsablauf vorgegeben werden. Ferner ist denkbar, dass der Datenspeicher bzw. Die Datenbank D als Bestandteil der Steuerungseinrichtung 32 ausgebildet ist. Zusätzlich oder alternativ können mittels einer Sensoreinrichtung 17 Distanzdaten zum Abstand zwischen vorgegebenen Oberflächenpunkten des Festkörpers 4 und der Laserbeaufschlagungseinrichtung 12 erfasst werden. Diese Distanzdaten werden bevorzugt ebenfalls der Steuerungseinrichtung 32 zur Verarbeitung bereitgestellt.

Weiterhin ist vorstellbar, dass die Laserstrahlbeaufschlagungseinrichtung 12 eine Kamera 35, insbesondere eine koaxiale Fokuskamera, aufweist. Die Kamera 35 ist bevorzugt in Richtung des Strahlengangs der aus der Laserbeaufschlagungseinrichtung 12 austretenden Laserstrahlen 58 angeordnet. Es ist hierbei denkbar, dass ein optisches Element 360, insbesondere ein teilweise transparenter Spiegel in dem optischen Feld der Kamera 35 angeordnet ist. Bevorzugt wird durch das optische Element 35 die Laserstrahlung 58 in das optische Feld der Kamera eingeschleust.

Weiterhin ist vorstellbar, dass ein weiteres optisches Element 380 bzw. ein diffraktives optisches Element, insbesondere ein Strahlteiler 380, vorgesehen ist. Durch den Strahlteiler 380 kann hierbei ein Teil des Laserstrahls 58 von dem Hauptstrahl ausgeleitet bzw. abgetrennt werden. Ferner kann der abgetrennte bzw. ausgeleitete Anteil der Laserstrahlung durch eine optionale sphärische Aberrationskompensation 400 und/oder durch eine optionale Strahlerweiterung 420 bzw. Strahlaufweitung modifiziert werden.

Ferner kennzeichnet das Bezugszeichen 48 eine bevorzugt vorgesehenen Fluidbereitstellungseinrichtung 48, insbesondere zum Bereitstellen eines Kühlfluides. Bevorzugt kann mittels der Fluidbereitstellungseinrichtung 48 eine Temperierung, insbesondere Abkühlung, des Festkörpers 4 und/oder des Mikroskops, bewirkt werden.

Das Bezugszeichen 50 kennzeichnet ein Brechzahlbestimmungsmittel, das bevorzugt auch transparente und reflektierende Oberflächen analysieren kann. Bevorzugt erfolgt die Brechzahlbestimmung mit dem Brechzahlbestimmungsmittel 50 im Vorfeld der Modifikationserzeugung. Es ist hierbei alternativ denkbar, dass die Brechzahlbestimmung an einer anderen Anlage durchgeführt wird und die erfassten Daten der vorliegenden Laserbeaufschlagungseinrichtung 12 mittels Datentransfer zugeführt wird.

Die in Fig. 19 dargestellten Punktlinien mit einem Pfeilende kennzeichnen hierbei bevorzugt Daten und/oder Signal Übertragungen.

### Bezugszeichenliste

| | | | |
|---|---|---|---|
| 2 | Wafer | 25 | Modifikationsmesseinrichtung |
| 3 | Polymerschicht | 26 | Oberflächenaufbereitungseinrichtung |
| 4 | Spendersubstrat | | |
| 6 | Analyseeinrichtung | 27 | Messeinrichtung zur Bestimmung der Oberflächeneigenschaften der freigelegten Oberfläche des Spendersubstrats nach dem Trennschritt |
| 12 | Lasereinrichtung | | |
| 14 | Modifikation | | |
| 15 | Trennstelle durch Modifikation erzeugt | 29 | Waferoberflächenbehandlungseinrichtung |
| 16 | Ablösebereich | 30 | Hauptoberfläche |
| 17 | Sensoreinrichtung | 31 | Laserstrahlenquelle |
| 18 | Ablöseeinrichtung | 32 | Prozessoreinrichtung / Steuereinrichtung |
| 20 | Zuordnungsmittel | | |
| 22 | Transporteinrichtung | 34 | Zuführeinrichtung / Abführeinrichtung |
| 24 | Messeinrichtung (bevorzugt zur Erfassung der finalen Dicke des Wafers) | | |
| | | 35 | Kamera |
| 36 | Reinigungseinrichtung | 64 | Werkstückhalter / Spendersubstrathalter |
| 37 | Spalt | | |
| 38 | Kopplungselement | 65 | Immersionsobjektiv |
| 39 | Zugelement | 66 | Immersionsfüssigkeit |
| 40 | Fertigungsanlage | 67 | Split mit Planarisierungsreserve |
| 41 | erste Fertigungseinheit | 68 | Split ohne Planarisierungsreserve |
| 42 | zweite Fertigungseinheit | 69 | Zusatzertrag |
| 43 | dritte Fertigungseinheit | 70 | Planarisierungsreserve |
| 44 | vierte Fertigungseinheit | 71 | Wafer 1 |
| 45 | Einstelleinrichtung | 72 | Wafer 2 |
| 46 | Abstand | 77 | Wafer 7 |
| 48 | Fluidbereitstellungseinrichtung | 78 | Wafer 8 |
| 49 | Nutzer | 79 | Wafer 9 |
| 50 | Brechzahlbestimmungsmittel | 80 | Dotierfleck mit höherer optischer Dichte |
| 51 | Kamera | 81 | Weiterer Dotierfleck |
| 52 | Messobjektiv | 82 | Analyserichtung |
| 53 | Objektiv | 83 | Lagereinrichtungsoberfläche |
| 54 | Fokussteller | 90 | Laserstrahlung außerhalb des Spendersubstrats |
| 55 | Justagestift | | |
| 56 | Umlenkspiegel | 91 | Laserstrahlung innerhalb des Spendersubstrats ohne Dotierfleck |
| 57 | Abstandssensor | | |
| 58 | Laserstrahlung | 92 | Laserstrahlung innerhalb des Spendersubstrats mit Dotierfleck |
| 59 | Luftlager | 93 | Modifikationsstelle ohne Dotierfleck |
| 61 | geregelter Luftspalt | 94 | Modifikationsstelle mit Dotierfleck |
| 62 | Spannvorrichtung | 95 | Modifikationslage mit gewöhnlichem Autofokus |
| 63 | Arbeitstisch | | |
| 96 | Modifikationslage mit brechzahlkompensiertem Autofokus | 189 | Funktionsfluid |
| | | 190 | Kontaktstelle zwischen Druckbeaufschlagungselement und Polymerschicht |
| 100 | Heizstrahler | | |
| 101 | Höhenverstellung | 190 | Aufheizeinrichtung |
| 102 | Vakuumventil | 260 | weitere Oberflächenaufbereitungseinrichtu ng |
| 103 | Polymerschicht / Splitfolie auf Trägerfilm im Rahmen | | |
| 104 | Folienunterlage | 270 | Messeinrichtung zur Bestimmung der Oberflächeneigenschaften der freigelegten Oberfläche des Wafers nach dem Trennschritt |
| 105 | Rolllaminator | | |
| 106 | Linienplasmaquelle | | |
| 107 | Vorratsrolle | 360 | Optisches Element |
| 108 | Trägerfilm | 380 | Strahlteiler |
| 109 | Trägerfilmrolle | 400 | Abrationskompensation |
| 110 | (Heiss-) Laminationsrolle | 420 | Strahlerweiterung |
| 111 | Fahrtisch | 600 | Daten der Analyseeinrichtung |
| 112 | Linienplasmaquelle | 601 | Daten der Modifikationsmesseinrichtung bzw. Modifikationsmessdaten Daten der Messeinrichtung zur Bestimmung der Oberflächeneigenschaften der freigelegten Oberfläche des Spendersubstrats nach dem Trennschritt |
| 120 | weitere Lasereinrichtung | | |
| 121 | Laserstrahlenquelle | 602 | |
| 150 | Krafterzeugungseinrichtung der Ablöseeinrichtung | | |
| 180 | weitere Ablöseeinrichtung | | |
| 181 | Aufbringeinrichtung bevorzugt Laminiereinrichtung | | |
| | | 603 | Daten der Messeinrichtung (bevorzugt zur Erfassung der finalen Dicke des Wafers) |
| 185 | Anpresseinrichtung | | |
| 186 | Verfahrteil der Anpresseinrichtung | | |
| 187 | Druckbeaufschlagungselement | 604 | Daten der Messeinrichtung zur Bestimmung der Oberflächeneigenschaften der |
| 188 | Temperiereinrichtung | | |
| | freigelegten Oberfläche des Wafers nach dem Trennschritt | B5 | Oberflächenbehandlung des Spendersubstrats, insbesondere Reinigung und/oder Aktivierung der Hauptoberfläche des Spendersubstrats, insbesondere mit einer Reinigungs- und/oder Aktivierungseinrichtung |
| A1 | Zuführung des Spendersubstrats / Rohmaterials (Boule/Ingot, etc.) | | |
| A2 | Oberflächenbehandlung, insbesondere Oberflächenoptimierung | | |
| A3 | Laserbehandlung, insbesondere Erzeugen von Modifikationen im Inneren des Spendersubstrats | B6 | bereitstellen der Polymerschicht, insbesondere als Folie |
| | | B7 | aufbringen oder erzeugen der Polymerschicht auf der Hauptoberfläche des Spendersubstrats, insbesondere auch aushärten der bevorzugt als Folie bereitgestellten Polymerschicht |
| A4 | bereitstellen der Polymerschicht, insbesondere als Folie | | |
| A5 | aufbringen oder erzeugen der Polymerschicht auf der Hauptoberfläche des Spendersubstrats | | |
| | | B8 | durchführen des Trennschritts, insbesondere durch Einleitung einer äußeren Kraft, insbesondere mittels Cold-Split |
| A6 | durchführen des Trennschritts, insbesondere durch Einleitung einer äußeren Kraft, insbesondere mittels Cold-Split | | |
| | | B9 | Temperieren des verbleibenden Spendersubstrats, insbesondere aufwärmen, insbesondere mittels der Temperiereinrichtung 188 |
| A7 | Handling des abgetrennten Wafers mit daran angebrachter Folie | | |
| B1 | Zuführung des Spendersubstrats / Rohmaterials (Boule/Ingot, etc.) | | |
| | | B10 | Handling des abgetrennten Wafers mit daran angebrachter Folie |
| B2 | Oberflächenbehandlung, insbesondere Oberflächenoptimierung | C1 | Zuführung des Spendersubstrats / Rohmaterials (Boule/Ingot, etc.) |
| B3 | Durchführung einer Analyse des Spendersubstrats, insbesondere mittels der Analyseeinrichtung | C2 | Oberflächenbehandlung, insbesondere Oberflächenoptimierung |
| B4 | Laserbehandlung, insbesondere Erzeugen von Modifikationen im Inneren des Spendersubstrats | C3 | Durchführung einer Analyse des Spendersubstrats, insbesondere mittels der Analyseeinrichtung |
| C4 | Vermessen und/oder analysieren des abgetrennten Wafers | D | Datenbank |
| | | D2 | Bereitstellung von Prozessparametern spezifisch für das Spendersubstrat und den jeweils abzutrennenden Wafer |
| C5 | Laserbehandlung, insbesondere Erzeugen von Modifikationen im Inneren des Spendersubstrats | | |
| C6 | Oberflächenbehandlung des Spendersubstrats, insbesondere Reinigung und/oder Aktivierung der Hauptoberfläche des Spendersubstrats, insbesondere mit einer Reinigungs- und/oder Aktivierungseinrichtung | D5 | Spendersubstrat-Prozessdaten zur Ansteuerung der Lasereinrichtung |
| | | D6 | Spendersubstrat-Prozessdaten zur Ansteuerung der Reinigungs- und/oder Aktivierungseinrichtung |
| | | D8 | Spendersubstrat-Prozessdaten zur Ansteuerung der Aufbringeinrichtung, insbesondere Laminiereinrichtung |
| C7 | bereitstellen der Polymerschicht, insbesondere als Folie | | |
| C8 | aufbringen oder erzeugen der Polymerschicht auf der Hauptoberfläche des Spendersubstrats, insbesondere auch aushärten der bevorzugt als Folie bereitgestellten Polymerschicht | D9 | Spendersubstrat-Prozessdaten zur Ansteuerung der Ablöseeinrichtung |
| | | D11 | Spendersubstrat-Prozessdaten zur Ansteuerung einer Einrichtung zum Entfernen der Folie |
| | | E1 | Zuführung des Spendersubstrats / Rohmaterials (Boule/Ingot, etc.) |
| C9 | durchführen des Trennschritts, insbesondere durch Einleitung einer äußeren Kraft, insbesondere mittels Cold-Split | | |
| | | E2 | Oberflächenbehandlung, insbesondere Oberflächenoptimierung |
| C10 | Temperieren des verbleibenden Spendersubstrats, insbesondere aufwärmen, insbesondere mittels der Temperiereinrichtung 188 | E3 | Durchführung einer Analyse des Spendersubstrats, insbesondere mittels der Analyseeinrichtung |
| C11 | Abtrennen der Polymerschicht von dem Wafer | E4 | Laserbehandlung, insbesondere Erzeugen von Modifikationen im Inneren des Spendersubstrats |
| C12 | Weiterbehandeln der entfernten Polymerschicht | E5 | Oberflächenbehandlung des Spendersubstrats, insbesondere Reinigung und/oder Aktivierung der |
| | Hauptoberfläche des Spendersubstrats, insbesondere mit einer Reinigungs- und/oder Aktivierungseinrichtung | E14 | Bereitstellung des Wafers |
| | | F1 | Zuführung des Spendersubstrats / Rohmaterials (Boule/Ingot, etc.) |
| E6 | bereitstellen der Polymerschicht, insbesondere als Folie | F2 | Oberflächenbehandlung, insbesondere Oberflächenoptimierung |
| E7 | aufbringen oder erzeugen der Polymerschicht auf der Hauptoberfläche des Spendersubstrats, insbesondere auch aushärten der bevorzugt als Folie bereitgestellten Polymerschicht | F3 | Durchführung einer Analyse des Spendersubstrats, insbesondere mittels der Analyseeinrichtung |
| | | F4 | Laserbehandlung, insbesondere Erzeugen von Modifikationen im Inneren des Spendersubstrats |
| E8 | durchführen des Trennschritts, insbesondere durch Einleitung einer äußeren Kraft, insbesondere mittels Cold-Split | F5 | Behandeln des Spendersubstrats mittels eines Pre-Split-Werkzeugs, insbesondere zur Kantenpräparation, insbesondere mittels Schleifkerbwerkzeug oder Laserritzer Oberflächenbehandlung des Spendersubstrats, insbesondere Reinigung und/oder Aktivierung der Hauptoberfläche des Spendersubstrats, insbesondere mit einer Reinigungs- und/oder Aktivierungseinrichtung |
| E9 | Temperieren des verbleibenden Spendersubstrats, insbesondere aufwärmen, insbesondere mittels der Temperiereinrichtung 188 | | |
| | | F6 | |
| E10 | durchführen einer Oberflächenbehandlung, insbesondere abtragen von Material, insbesondere Abtragen von modifizierten Anteilen zum Spannungsabbau | | |
| | | F7 | bereitstellen der Polymerschicht, insbesondere als Folie |
| E11 | Abtrennen der Polymerschicht von dem Wafer | F8 | aufbringen oder erzeugen der Polymerschicht auf der Hauptoberfläche des Spendersubstrats, insbesondere auch aushärten der bevorzugt als Folie bereitgestellten Polymerschicht |
| E12 | Weiterbehandeln der entfernten Polymerschicht, insbesondere recyceln | | |
| E13 | Materialrecycling / Abfall | | |
| F9 | durchführen des Trennschritts, insbesondere durch Einleitung einer äußeren Kraft, insbesondere mittels Cold-Split | F12 | Abtrennen der Polymerschicht von dem Wafer |
| | | F13 | Weiterbehandeln der entfernten Polymerschicht, insbesondere recyceln |
| F10 | Temperieren des verbleibenden Spendersubstrats, insbesondere aufwärmen, insbesondere mittels der Temperiereinrichtung 188 | | |
| | | F14 | Materialrecycling / Abfall |
| | | F15 | Bereitstellung des Wafers |
| F11 | durchführen einer Oberflächenbehandlung, insbesondere abtragen von Material, insbesondere Abtragen von modifizierten Anteilen zum Spannungsabbau | M | Bereitstellung von Messdaten und/oder Analysedaten an die Datenbank |
| | | Z | Zugkraft |

## Patentansprüche

1. Fertigungsanlage (40) zur Ablösung von Wafern (2) von Spendersubstraten (4), mindestens umfassend
eine Analyseeinrichtung (6) zum Bestimmen von mindestens einer individuellen örtlich aufgelösten, direkten optischen oder indirekten optischen Eigenschaft, insbesondere der Dotierung und/oder der Kristallgitterversetzungen, der jeweiligen Spendersubstrate (4),
eine Dateneinrichtung (10) zum Erzeugen von Spendersubstrat-Prozessdaten zu individuellen Spendersubstraten (4), wobei die Spendersubstrat-Prozessdaten Analysedaten der Analyseeinrichtung (6) umfassen, wobei die Analysedaten zumindest die eine individuelle örtlich aufgelöste, direkte optische oder indirekte optische Eigenschaft des Spendersubstrats (4) beschreiben,
eine Lasereinrichtung (12) zum Erzeugen von Modifikationen (14) im Inneren der Spendersubstrate (4) zum Ausbilden eines Ablösebereichs (16) im Inneren des jeweiligen Spendersubstrats (4), wobei die Lasereinrichtung (12) in Abhängigkeit der Spendersubstrat-Prozessdaten eines konkreten Spendersubstrats (4) zur Bearbeitung des konkreten Spendersubstrats (4) betreibbar ist,
eine Ablöseeinrichtung (18) zum Erzeugen von mechanischen Spannungen im Inneren des jeweiligen Spendersubstrats (4) zum Auslösen und/oder Führen eines Risses zum Abtrennen von jeweils mindestens einem Wafer (2) von einem Spendersubstrat (4).

2. Fertigungsanlage nach Anspruch 1,
**dadurch gekennzeichnet, dass**
Zuordnungsmittel (20) zum Aufnehmen von Wafer-Prozessdaten oder zum Verknüpfen von Wafer-Prozessdaten mit jeweils mindestens einem durch die Ablöseeinrichtung (18) oder eine weitere Ablöseeinrichtung (180) abgetrennten konkreten Wafer (2) vorgesehen sind, wobei die Wafer-Prozessdaten zumindest Teile der Analysedaten umfassen, die für den jeweiligen Spenderwafer (4) erzeugt wurde, von dem der konkrete Wafer (2) abgetrennt wurde.

3. Fertigungsanlage nach Anspruch 1 oder 2,
**dadurch gekennzeichnet, dass**
mindestens eine Transporteinrichtung (22) zum Bewegen des um den abgetrennten Wafer (2) reduzierten Spendersubstrats (4) zu einer weiteren Analyseeinrichtung oder zu der Analyseeinrichtung (6) zum erneuten Bestimmen der mindestens einen individuellen örtlich aufgelösten, direkten optischen oder indirekten optischen Eigenschaft, wobei die dem konkreten Spendersubstrat (4) zuordenbaren Spendersubstrat-Prozessdaten mittels den erneut erfassten Analysedaten modifiziert werden.

4. Fertigungsanlage nach einem der vorangegangenen Ansprüche,
**dadurch gekennzeichnet, dass**
mindestens eine Messeinrichtung (24) zur Erzeugung von Messdaten vorgesehen ist, wobei die Messdaten die Dicke des abgetrennten Wafers (2) beschreiben,wobei die Messdaten als Anteil der Spendersubstrat-Prozessdaten verarbeitbar sind, wobei mittels den zur Abtrennung eines konkreten Wafers verwendeten Spendersubstrat-Prozessdaten und den Messdaten des konkreten Wafers (2) eine Brechzahlbestimmung zur Bestimmung von Brechzahldaten zur Anpassung der Spendersubstrat-Prozessdaten zum erneuten Erzeugen on Modifikationen (14) im Inneren des konkreten Spendersubstrats (4) durchführbar ist.

5. Fertigungsanlage nach einem der vorangegangenen Ansprüche,
**dadurch gekennzeichnet, dass**
eine Oberflächenaufbereitungseinrichtung (26), insbesondere eine Poliereinrichtung, zur Aufbereitung der infolge einer Waferabtrennung freigelegten Oberfläche des Spendersubstrats (4) vorgesehen ist, wobei durch die Oberflächenaufbereitungseinrichtung Aufbereitungsdaten erzeugbar sind, wobei die Aufbereitungsdaten den während der Aufbereitung abgetragenen Materialanteil, insbesondere die mittlere Dicke des abgetragenen Materialanteils, und/oder die Oberflächenrauheit beschreiben.

6. Fertigungsanlage nach einem der vorangegangenen Ansprüche,
**dadurch gekennzeichnet, dass**
das Spendersubstrat (4) einen kristallinen Werkstoff aufweist oder daraus besteht und wobei das Spendersubstrat (4) Kristallgitterebenen aufweist, die gegenüber einer ebenen Hauptoberfläche (30) geneigt sind, wobei die Hauptoberfläche (30) das Spendersubstrat (4) in Längsrichtung des Spendersubstarts (4) einerseits begrenzt, wobei sich eine Kritallgitterebenennormale gegenüber einer Hauptoberflächennormalen in eine erste Richtung neigt, wobei die Lasereinrichtung (12, 120) derart konfiguriert ist, dass die Einbringen von Laserstrahlung in das Innere des Spendersubstrats (4) über die Hauptoberfläche (30) zum Verändern der Materialeigenschaften des Spendersubstrats (4) im Bereich von mindestens einem Laserfokus bewirkbar ist, wobei der Laserfokus durch von der Lasereinrichtung (12, 120) emittierten Laserstrahlen ausbildbar ist, wobei durch die Veränderung der Materialeigenschaft und durch Verändern des Eindringortes der Laserstrahlung in das Spendersubstrat (4), insbesondere durch eine Relativbewegung des Spendersubstrats (4) zur Lasereinrichtung (12, 120), eine linienförmige Gestalt im Spendersubstrat (4) ausbildbar ist, wobei die Veränderungen der Materialeigenschaft auf mindestens einer Erzeugungsebene im Spendersubstrat (4) erzeugt werden, wobei die Kristallgitterebenen des Spendersubstrats (4) gegenüber der Erzeugungsebene geneigt ausgerichtet sind, wobei die linienförmige Gestalt gegenüber einer sich an der Schnittstelle zwischen der Erzeugungsebene und der Kristallgitterebene ergebenden Schnittlinie geneigt ist, wobei durch die veränderte Materialeigenschaft das Spendersubstrat (4) in Form von unterkritischen Rissen einreißt.

7. Fertigungsanlage nach einem der vorangegangenen Ansprüche,
**dadurch gekennzeichnet, dass**
die Ablöseeinrichtung (18) eine Aufbringeinrichtung (181) aufweist oder im Transportweg des Spendersubstrats (4) vor der Ablöseeinrichtung eine Aufbringeinrichtung (181) zum Aufbringen von einer mindestens ein Polymermaterial aufweisenden Schicht, insbesondere einer Polymerfolie, auf das Spendersubstrat (4) vorgesehen ist und die Ablöseeinrichtung (18) eine Anpresseinrichtung (185) zum zumindest abschnittsweisen oder vollständigen Anpressen an die das mindestens eine Polymermaterial aufweisende Schicht aufweist und die Ablöseeinrichtung (18) eine Temperiereinrichtung (188) zum Abkühlen der an dem Spendersubstrat (4) angeordneten und mit Druck durch die Anpresseinrichtung (185) beaufschlagten Schicht aus mindestens einem Polymermaterial aufweist.

8. Fertigungsanlage nach einem der vorangegangenen Ansprüche,
**dadurch gekennzeichnet, dass**
durch die Aufbringeinrichtung (181) Schichtdaten bezüglich mindestens eines Parameters der mindestens ein Polymermaterial aufweisenden Schicht bereitgestellt werden, die Schichtdaten umfassen dabei bevorzugt die Materialzusammensetzung und/oder die Schichtdicke
und/oder
durch die Anpresseinrichtung (185) Anpresskraftdaten bereitgestellt werde, wobei die Anpresskraftdaten bevorzugt die Anpresskraft der Anpresseinrichtung (185) an die mindestens ein Polymermaterial aufweisenden Schicht pro Fläche umfasst und/oder die eine Kraftverteilung über die Fläche umfasst
und/oder
durch die Temperierungseinrichtung (188) Temperierungsdaten bereitgestellt werden, wobei die Temperierungsdaten bevorzugt die Temperatur der das mindestens eine Polymer aufweisenden Schicht im Zeitpunkt einer Rissauslösung und/oder Rissausbreitung umfasst.

9. Fertigungsanlage nach einem der vorangegangenen Ansprüche,
**dadurch gekennzeichnet, dass**
eine Prozessoreinrichtung (32) zur Modifikation der Spendersubstrat-Prozessdaten vorgesehen ist, wobei durch die Modifikation der Spendersubstrat-Prozessdaten das vordefinierte Ergänzen und/oder Anpassen von Spendersubstrat-Prozessausgangsdaten mittels zumindest zweier Arten von Daten zum Anpassen von mindestens einem Betriebsparameter, insbesondere der Fokustief und/oder der Laserenergie, der Lasereinrichtung (12, 120) bewirkt wird, wobei die Daten aus der Gruppe an Daten ausgewählt werden, die Analysedaten, Messdaten, Brechzahldaten und/oder Aufbereitungsdaten aufweist.

10. Fertigungsanlage nach Anspruch 9,
**dadurch gekennzeichnet, dass**
der mindestens eine Betriebsparameter der Lasereinrichtung (12, 120) in Abhängigkeit der infolge einer konkreten Waferabtrennung erfassten Daten von der Prozessoreinrichtung (32) anpassbar ist, wobei zumindest ein Betriebsparameter der Lasereinrichtung (12, 120) bei allen oder bei mehr als 25%, insbesondere bei mehr als 40% oder mehr als 50% oder mehr als 75% oder mehr als 90% oder bei mehr als 95%, aller von einem konkreten Spendersubstrat (4) abgetrennten Wafern (2) zur Reduzierung einer Planarisierungsreserve angepasst wird.

11. Fertigungsanlage (40) nach einem der vorangegangenen Ansprüche,
**dadurch gekennzeichnet, dass**
die Wafer-Prozessdaten zusätzlich
Positionsdaten umfassen, wobei die Positionsdaten die Position des Wafers (2) im Spendersubstrat (4) beschreiben und/oder
Messdaten der Messeinrichtung (24) umfassen, wobei die Messdaten die Dicke des abgetrennten Wafers (2) umfasst.

12. Verfahren zum Reduzieren einer beim Zerteilen eines Spendersubstrats (4) in eine Vielzahl an Festkörperscheiben (2) vorgesehenen Planierungsreserve,
mindestens umfassend die Schritte:
Bestimmen von mindestens einer individuellen örtlich aufgelösten, direkten optischen oder indirekten optischen Eigenschaft, insbesondere der Dotierung und/oder der Kristallgiterversetzungen, eines konkreten Spendersubstrats (4) mittels einer Analyseeinrichtung (6), Erzeugen von Analysedaten mittels der Analyseeinrichtung (6) in Abhängigkeit von der zumindest einen bestimmten individuellen örtlich aufgelösten, direkten optischen oder indirekten optischen Eigenschaft,
Erzeugen von Spendersubstrat-Prozessdaten zu dem konkreten Spendersubstrat (4) mittels einer Dateneinrichtung, wobei die Spendersubstrat-Prozessdaten die Analysedaten der Analyseeinrichtung (6) umfassen, wobei die Analysedaten zumindest die eine individuelle örtlich aufgelöste, direkte optische oder indirekte optische Eigenschaft des Spendersubstrats (2) beschreiben und wobei die Spendersubstrat-Prozessdaten eine erste Planierungsreserve definiert,
Erzeugen von Modifikationen (14) im Inneren des konkreten Spendersubstrats (4) zum Ausbilden eines Ablösebereichs (16) im Inneren des Spendersubstrats (4) mittels einer Lasereinrichtung (12, 120), wobei die Lasereinrichtung (12, 120) in Abhängigkeit der Spendersubstrat-Prozessdaten, die dem konkreten Spendersubstrat (4) zuordenbar sind, betrieben wird,
Erzeugen von mechanischen Spannungen im Inneren des konkreten Spendersubstrats (4) zum Auslösen und/oder Führen eines Risses zum Abtrennen von einem Wafer (2) von dem konkreten Spendersubstrat (4) mittels einer Ablöseeinrichtung (18),
und
Bestimmen der mindestens einen individuellen örtlich aufgelösten, direkten optischen oder indirekten optischen Eigenschaft, insbesondere der Dotierung und/oder Brechzahl und/oder der Kristallgitterversetzungen, des um den konkreten Wafer (2) reduzierten konkreten Spendersubstrats (4) mittels der oder einer weiteren Analyseeinrichtung (6),
Erzeugen von neuen Analysedaten mittels der jeweiligen Analyseeinrichtung (6) in Abhängigkeit von der zumindest einen bestimmten individuellen örtlich aufgelösten, direkten optischen oder indirekten optischen Eigenschaft, und
Modifizieren der Spendersubstrat-Prozessdaten zum erneuten Erzeugen von Modifikationen (14) in dem konkreten Spendersubstrat (4) mittels der neuen Analysedaten und definieren einer zweiten Planierungsreserve als Bestandteil der Spendersubstrat-Prozessdaten, wobei die zweite Planierungsreserve geringer ist als die erste Planierungsreserve.

13. Verfahren zum Zerteilen eines Spendersubstrats in eine Vielzahl an Festkörperscheiben,
mindestens umfassend die Schritte:
Bestimmen von mindestens einer individuellen örtlich aufgelösten, direkten optischen oder indirekten optischen Eigenschaft, insbesondere der Dotierung und/oder der Kristallgitterversetzungen, eines konkreten Spendersubstrats (4) mittels einer Analyseeinrichtung (6), Erzeugen von Analysedaten mittels der Analyseeinrichtung (6) in Abhängigkeit von der zumindest einen bestimmten individuellen örtlich aufgelösten, direkten optischen oder indirekten optischen Eigenschaft,
Erzeugen von Spendersubstrat-Prozessdaten zu dem konkreten Spendersubstrat (4) mittels einer Dateneinrichtung, wobei die Spendersubstrat-Prozessdaten die Analysedaten der Analyseeinrichtung (6) umfassen, wobei die Analysedaten zumindest die eine individuelle örtlich aufgelöste, direkte optische oder indirekte optische Eigenschaft des Spendersubstrats (4) beschreiben,
Erzeugen von Modifikationen (14) im Inneren des konkreten Spendersubstrats (4) zum Ausbilden eines Ablösebereichs (16) im Inneren des Spendersubstrats (4) mittels einer Lasereinrichtung (12, 120), wobei die Lasereinrichtung (12, 120) in Abhängigkeit der Spendersubstrat-Prozessdaten, die dem konkreten Spendersubstrat (4) zuordenbar sind, betrieben wird,
Erzeugen von mechanischen Spannungen im Inneren des konkreten Spendersubstrats (4) zum Auslösen und/oder Führen eines Risses zum Abtrennen von einem Wafer (2) von dem konkreten Spendersubstrat (4) mittels einer Ablöseeinrichtung (18),
und
Bestimmen der mindestens einen individuellen örtlich aufgelösten, direkten optischen oder indirekten optischen Eigenschaft, insbesondere der Dotierung und/oder der Kristallgitterversetzungen, des um den konkreten Wafer (2) reduzierten konkreten Spendersubstrats (4) mittels der Analyseeinrichtung (6) oder mittels einer weiteren Analyseeinrichtung,
Erzeugen von neuen Analysedaten mittels der Analyseeinrichtung (6) in Abhängigkeit von der zumindest einen bestimmten individuellen örtlich aufgelösten, direkten optischen oder indirekten optischen Eigenschaft, und
Modifizieren der Spendersubstrat-Prozessdaten mittels der neuen Analysedaten,
Erzeugen von Modifikationen (14) im Inneren des konkreten Spendersubstrats (4) zum Ausbilden eines Ablösebereichs (16) im Inneren des Spendersubstrats (4) mittels der Lasereinrichtung (12) oder mittels einer weiteren Lasereinrichtung (120), wobei die Lasereinrichtung (12) oder die weitere Lasereinrichtung (120) in Abhängigkeit der modifizierten Spendersubstrat-Prozessdaten betrieben wird,
Erzeugen von mechanischen Spannungen im Inneren des konkreten Spendersubstrats (4) zum Auslösen und/oder Führen eines Risses zum Abtrennen von einem Wafer (2) von dem konkreten Spendersubstrat (4) mittels einer Ablöseeinrichtung (18).

14. Verfahren zum Erzeugen von Prozessdaten zum Ansteuern von Komponenten einer Fertigungsanlage (40) zur Ablösung von Wafern (2) von Spendersubstraten (4) mindestens umfassend die Schritte:
Erzeugen von Analysedaten mittels einer Analyseeinrichtung (6) in Abhängigkeit von mindestens einer Eigenschaft eines Spendersubstrats (4),
Erzeugen von Spendersubstrat-Prozessdaten zu dem konkreten Spendersubstrat (4) mittels einer Dateneinrichtung, wobei die Spendersubstrat-Prozessdaten zum Einstellen einer Lasereinrichtung (12, 120) zum Erzeugen von Modifikationen (14) im Inneren des Spendersubstrats (4) dienen, wobei die Spendersubstrat-Prozessdaten die Analysedaten der Analyseeinrichtung (6) umfassen, wobei die Analysedaten zumindest die eine individuelle Eigenschaft des Spendersubstrats (4) beschreiben,
Bestimmen der mindestens einen individuellen Eigenschaft, insbesondere der Dotierung und/oder der Kristallgitterversetzungen, des um den konkreten Wafer (2) reduzierten konkreten Spendersubstrats (4) mittels einer Analyseeinrichtung (6),
Erzeugen von neuen Analysedaten mittels der Analyseeinrichtung (6) oder einer weiteren Analyseeinrichtung in Abhängigkeit von der zumindest einen bestimmten individuellen Eigenschaft, wobei die neuen Analysedaten für dasselbe Spendersubstrat (4) erfasst werden, wobei das Spendersubstrat (4) bei der Erzeugung der neuen Analysedaten zumindest um den konkreten Wafer gekürzt ist,
Modifizieren der Spendersubstrat-Prozessdaten mittels der neuen Analysedaten zum Einstellen der Lasereinrichtung (12) oder einer weiteren Lasereinrichtung (120), wobei in Abhängigkeit von den modifizierten Spendersubstrat-Prozessdaten Modifikationen (14) im Spendersubstrat (4) erzeugbar sind, die weniger weit zur Eindringoberfläche beabstandet sind als bei mindestens einer vorangegangenen Laserbehandlung desselben Spendersubstrats (4),
Erzeugen, in Abhängigkeit von den modifizierten Spendersubstrat-Prozessdaten, von Modifikationen (14) im Spendersubstrat (4).

15. Datensatz erzeugt in einem Verfahren gemäß Anspruch 14,
mindestens umfassend die vor jeder nach einer Waferabspaltung erfolgenden Laserbehandlung eines konkreten Spendersubstrats (4) erfassten Analysedaten und/oder die vor jeder nach einer Waferabspaltung erfolgenden Laserbehandlung bestimmten Brechzahldaten des konkreten Spendersubstrats (4).

## Claims

1. Production facility (40) for separating wafers (2) from donor substrates (4), at least comprising
an analysis device (6) for determining at least one individual spatially resolved, direct optical or indirect optical property, in particular the doping and/or the crystal lattice dislocations, of the respective donor substrates (4),
a data device (10) for generating donor substrate process data for individual donor substrates (4), the donor substrate process data comprising analysis data of the analysis device (6), the analysis data describing at least the one individual spatially resolved, direct optical or indirect optical property of the donor substrate (4),
a laser device (12) for generating modifications (14) inside the donor substrates (4) to form a separating region (16) inside the respective donor substrate (4), the laser device (12) being operable depending on the donor substrate process data of a specific donor substrate (4) to process the specific donor substrate (4),
a separating device (18) for generating mechanical stresses inside the respective donor substrate (4) to initiate and/or guide a crack for separating in each case at least one wafer (2) from a donor substrate (4).

2. Production facility according to Claim 1, **characterized in that**
allocation means (20) are provided for recording wafer process data or for associating wafer process data with in each case at least one specific wafer (2) separated by the separating device (18) or a further separating device (180), the wafer process data comprising at least parts of the analysis data that were generated for the respective donor wafer (4) from which the specific wafer (2) was separated.

3. Production facility according to Claim 1 or 2, **characterized in that**
at least one transport device (22) for moving the donor substrate (4) reduced by the separated wafer (2) to a further analysis device or to the analysis device (6) for renewed determination of the at least one individual spatially resolved, direct optical or indirect optical property, the donor substrate process data allocatable to the specific donor substrate (4) being modified by means of the newly recorded analysis data.

4. Production facility according to one of the preceding claims,
**characterized in that**
at least one measuring device (24) is provided for generating measurement data, the measurement data describing the thickness of the separated wafer (2), the measurement data being processable as a fraction of the donor substrate process data, a refractive index determination being performable by means of the donor substrate process data used to separate a specific wafer and the measurement data of the specific wafer (2), to determine refractive index data for adapting the donor substrate process data for renewed generation of modifications (14) inside the specific donor substrate (4) .

5. Production facility according to one of the preceding claims,
**characterized in that**
a surface preparation device (26), in particular a polishing device, is provided for preparing the surface of the donor substrate (4) which has been exposed as a result of wafer separation, preparation data being generatable by the surface preparation device, the preparation data describing the material fraction removed during the preparation, in particular the average thickness of the removed material fraction, and/or the surface roughness.

6. Production facility according to one of the preceding claims,
**characterized in that**
the donor substrate (4) comprises or consists of a crystalline material, the donor substrate (4) comprising crystal lattice planes which are inclined with respect to a planar main surface (30), the main surface (30) bounding the donor substrate (4) on one side in the longitudinal direction of the donor substrate (4), a crystal lattice plane normal being inclined in a first direction relative to a main surface normal, the laser device (12, 120) being configured in such a way that the introduction of laser radiation into the interior of the donor substrate (4) can be carried out through the main surface (30) to modify the material properties of the donor substrate (4) in the region of at least one laser focus, the laser focus being formable by laser beams emitted by the laser device (12, 120), a linear configuration being formable in the donor substrate (4) by the variation of the material property and by varying the penetration position of the laser radiation into the donor substrate (4), in particular by a relative movement of the donor substrate (4) with respect to the laser device (12, 120), the variations of the material property being generated on at least one generation plane in the donor substrate (4), the crystal lattice planes of the donor substrate (4) being aligned with an inclination relative to the generation plane, the linear configuration being inclined relative to a line of intersection resulting at the intersection between the generation plane and the crystal lattice plane, the donor substrate (4) cracking in the form of subcritical cracks because of the varied material property.

7. Production facility according to one of the preceding claims,
**characterized in that**
the separating device (18) comprises an application device (181) or an application device (181) is provided before the separating device in the transport path of the donor substrate (4) for applying a layer comprising at least one polymer material, in particular a polymer film, onto the donor substrate (4), and the separating device (18) comprises a pressing device (185) for pressing at least in sections or fully onto the layer comprising the at least one polymer material, and the separating device (18) comprises a temperature control device (188) for cooling the layer of at least one polymer material which is arranged on the donor substrate (4) and to which pressure is applied by the pressing device (185).

8. Production facility according to one of the preceding claims,
**characterized in that**
layer data relating to at least one parameter of the layer comprising at least one polymer material are provided by the application device (181), the layer data in this case preferably comprising the material composition and/or the layer thickness,
and/or
pressing force data are provided by the pressing device (185), the pressing force data preferably comprising the pressing force of the pressing device (185) on the layer comprising at least one polymer material per unit area and/or comprising the one force distribution over the area,
and/or
temperature control data are provided by the temperature control device (188), the temperature control data preferably comprising the temperature of the layer comprising the at least one polymer at the instant of crack initiation and/or crack propagation.

9. Production facility according to one of the preceding claims,
**characterized in that**
a processor device (32) is provided for modifying the donor substrate process data, the predefined supplementing and/or adapting of donor substrate process starting data by means of at least two types of data being brought about by the modification of the donor substrate process data to adapt at least one operating parameter, in particular the focal depth and/or the laser energy, of the laser device (12, 120), the data being selected from the group of data which comprises analysis data, measurement data, refractive index data and/or preparation data.

10. Production facility according to Claim 9,
**characterized in that**
the at least one operating parameter of the laser device (12, 120) is adaptable depending on the data of the processor device (32) recorded as a result of a specific wafer separation, at least one operating parameter of the laser device (12, 120) being adapted for all or for more than 25%, in particular for more than 40% or more than 50% or more than 75% or more than 90% or for more than 95%, of all wafers (2) separated from a specific donor substrate (4) to reduce a planarization reserve.

11. Production facility (40) according to one of the preceding claims,
**characterized in that**
the wafer process data additionally
comprise position data, the position data describing the position of the wafer (2) in the donor substrate (4) and/or
comprise measurement data of the measuring device (24), the measurement data comprising the thickness of the separated wafer (2).

12. Method for reducing a planarization reserve provided during the division of a donor substrate (4) into a multiplicity of solid slices (2),
at least comprising the steps of:
determining at least one individual spatially resolved, direct optical or indirect optical property, in particular the doping and/or the crystal lattice dislocations, of a specific donor substrate (4) by means of an analysis device (6), generating analysis data by means of the analysis device (6) depending on the at least one individual spatially resolved, direct optical or indirect optical property determined,
generating donor substrate process data for the specific donor substrate (4) by means of a data device, the donor substrate process data comprising the analysis data of the analysis device (6), the analysis data describing at least the one individual spatially resolved, direct optical or indirect optical property of the donor substrate (2), and the donor substrate process data defining a first planarization reserve,
generating modifications (14) inside the specific donor substrate (4) to form a separating region (16) inside the donor substrate (4) by means of a laser device (12, 120), the laser device (12, 120) being operated depending on the donor substrate process data which are allocatable to the specific donor substrate (4),
generating mechanical stresses inside the specific donor substrate (4) to initiate and/or guide a crack for separating a wafer (2) from the specific donor substrate (4) by means of a separating device (18),
and
determining the at least one individual spatially resolved, direct optical or indirect optical property, in particular the doping and/or refractive index and/or the crystal lattice dislocations, of the specific donor substrate (4) reduced by the specific wafer (2) by means of the or a further analysis device (6),
generating new analysis data by means of the respective analysis device (6) depending on the at least one individual spatially resolved, direct optical or indirect optical property determined, and
modifying the donor substrate process data for renewed generation of modifications (14) in the specific donor substrate (4) by means of the new analysis data and defining a second planarization reserve as a constituent of the donor substrate process data, the second planarization reserve being less than the first planarization reserve.

13. Method for dividing a donor substrate into a multiplicity of solid slices,
at least comprising the steps of:
determining at least one individual spatially resolved, direct optical or indirect optical property, in particular the doping and/or the crystal lattice dislocations, of a specific donor substrate (4) by means of an analysis device (6), generating analysis data by means of the analysis device (6) depending on the at least one individual spatially resolved, direct optical or indirect optical property determined,
generating donor substrate process data for the specific donor substrate (4) by means of a data device, the donor substrate process data comprising the analysis data of the analysis device (6), the analysis data describing at least the one individual spatially resolved, direct optical or indirect optical property of the donor substrate (4),
generating modifications (14) inside the specific donor substrate (4) to form a separating region (16) inside the donor substrate (4) by means of a laser device (12, 120), the laser device (12, 120) being operated depending on the donor substrate process data which are allocatable to the specific donor substrate (4),
generating mechanical stresses inside the specific donor substrate (4) to initiate and/or guide a crack for separating a wafer (2) from the specific donor substrate (4) by means of a separating device (18),
and
determining the at least one individual spatially resolved, direct optical or indirect optical property, in particular the doping and/or the crystal lattice dislocations, of the specific donor substrate (4) reduced by the specific wafer (2) by means of the analysis device (6) or by means of a further analysis device,
generating new analysis data by means of the analysis device (6) depending on the at least one individual spatially resolved, direct optical or indirect optical property determined, and
modifying the donor substrate process data by means of the new analysis data,
generating modifications (14) inside the specific donor substrate (4) to form a separating region (16) inside the donor substrate (4) by means of the laser device (12) or by means of a further laser device (120), the laser device (12) or the further laser device (120) being operated depending on the modified donor substrate process data, generating mechanical stresses inside the specific donor substrate (4) to initiate and/or guide a crack for separating a wafer (2) from the specific donor substrate (4) by means of a separating device (18).

14. Method for generating process data for driving components of a production facility (40) for separating wafers (2) from donor substrates (4), at least comprising the steps of:
generating analysis data by means of an analysis device (6) depending on at least one property of a donor substrate (4),
generating donor substrate process data for the specific donor substrate (4) by means of a data device, the donor substrate process data being used to adjust a laser device (12, 120) for generating modifications (14) inside the donor substrate (4), the donor substrate process data comprising the analysis data of the analysis device (6), the analysis data describing at least the one individual property of the donor substrate (4),
determining the at least one individual property, in particular the doping and/or the crystal lattice dislocations, of the specific donor substrate (4) reduced by the specific wafer (2) by means of an analysis device (6),
generating new analysis data by means of the analysis device (6) or a further analysis device depending on the at least one individual property determined, the new analysis data being recorded for the same donor substrate (4), the donor substrate (4) being shortened at least by the specific wafer when the new analysis data are generated,
modifying the donor substrate process data by means of the new analysis data to adjust the laser device (12) or a further laser device (120), modifications (14) that are distanced less far from the penetration surface than during at least one preceding laser treatment of the donor substrate (4) being generatable in the same donor substrate (4) depending on the modified donor substrate process data, generating modifications (14) in the donor substrate (4) depending on the modified donor substrate process data.

15. Data set generated in a method according to Claim 14,
at least comprising the analysis data recorded before each laser treatment, carried out after a wafer cleavage, of a specific donor substrate (4) and/or the refractive index data determined before each laser treatment, carried out after a wafer cleavage, of the specific donor substrate (4).

## Revendications

1. Installation (40) de fabrication pour le détachement de tranches (2) de substrats (4) donneurs,
comprenant au moins
un dispositif (6) d'analyse pour la détermination d'au moins une propriété optique directe ou optique indirecte individuelle résolue localement, en particulier le dopage et/ou des dislocations de réseaux cristallins, des substrats (4) donneurs respectifs,
un dispositif (10) de données pour la production de données de processus de substrat donneur relatives à des substrats (4) donneurs individuels, dans lequel les données de processus de substrat donneur comprennent des données d'analyse du dispositif (6) d'analyse, dans lequel les données d'analyse décrivent au moins la une propriété du substrat (4) donneur optique directe ou optique indirecte individuelle résolue localement,
un dispositif (12) laser de production de modifications (14) au sein des substrats (4) donneurs pour la formation d'une partie (16) de détachement au sein du substrat (4) donneur respectif, dans lequel le dispositif (12) laser peut, en fonction des données de processus de substrat donneur d'un substrat (4) donneur concret, fonctionner pour le traitement du substrat (4) donneur concret,
un dispositif (18) de détachement pour la production de contraintes mécaniques au sein du substrat (4) donneur respectif, pour le déclenchement et/ou la conduite d'une fissure pour la séparation de respectivement au moins une tranche (2) d'un substrat (4) donneur.

2. Installation de fabrication suivant la revendication 1, **caractérisée en ce qu'**
il est prévu des moyens (20) d'association, pour la saisie de données de processus de tranche ou pour la combinaison de données de processus de tranche à respectivement au moins une tranche (2) concrète, séparée par le dispositif (18) de détachement ou par un autre dispositif (180) de détachement, dans lequel les données de processus de tranche comprennent au moins des parties des données d'analyse, qui ont été produites pour la tranche (4) de donneur respectif, dont la tranche (2) concrète a été séparée.

3. Installation de fabrication suivant la revendication 1 ou 2,
**caractérisée par**
au moins un dispositif (22) de transport, pour le déplacement du substrat (4) donneur, réduit de la tranche (2) séparée, à un autre dispositif d'analyse ou au dispositif (6) d'analyse, pour la détermination renouvelée de la au moins une propriété optique directe ou optique indirecte individuelle résolue localement, dans lequel on modifie, au moyen des données d'analyse saisies à nouveau, les données de processus de substrat donneur pouvant être associées au substrat (4) donneur concret.

4. Installation de fabrication suivant l'une des revendications précédentes,
**caractérisée en ce qu'**
il est prévu au moins un dispositif (24) de mesure, pour la production de données de mesure, dans lequel les données de mesure décrivent l'épaisseur de la tranche (2) séparée, dans lequel les données de mesure peuvent être traitées comme parties des données de processus de substrat donneur, dans lequel, au moyen des données de processus de substrat donneur utilisées pour la séparation d'une tranche concrète et des données de mesure de la tranche (2) concrète, peut être effectuée une détermination d'indice de réfraction, pour la détermination de données d'indice de réfraction pour l'adaptation des données de processus de substrat donneur à la production renouvelée de modifications (14) au sein du substrat (4) donneur concret.

5. Installation de fabrication suivant l'une des revendications précédentes,
**caractérisée en ce qu'**
il est prévu un dispositif (26) de traitement de surface, en particulier un dispositif de polissage, pour le traitement de la surface mise à nu en raison de la surface du substrat (4) donneur mise à nu en raison d'une séparation de tranche, dans lequel des données de traitement peuvent être produites par le dispositif de traitement de surface, dans lequel les données de traitement décrivent la proportion de matériau enlevée pendant le traitement, en particulier l'épaisseur moyenne de la partie de matériau enlevée et/ou la rugosité de surface.

6. Installation de fabrication suivant l'une des revendications précédentes,
**caractérisée en ce que**
le substrat (4) donneur a un matériau cristallin ou en est constitué et dans laquelle le substrat (4) donneur a des plans de réseau cristallin, qui sont inclinés par rapport à une surface (30) principale plane, dans lequel la surface (30) principale délimite le substrat (4) donneur dans la direction longitudinale du substrat (4) donneur d'une part, dans lequel une normale au plan du réseau cristallin par rapport à une normale à la surface principale est inclinée dans une première direction, dans lequel le dispositif (12, 120) laser est configuré de manière **en ce que** la pénétration du rayonnement laser dans le substrat (4) donneur peut être provoquée par la surface (30) principale pour modifier les propriétés de matériau du substrat (4) donneur dans la partie d'au moins un foyer laser, dans lequel le foyer laser peut être constitué par des rayons laser émis par le dispositif (12, 120) laser, dans lequel, par la modification de la propriété de matériau et par la modification de l'endroit de pénétration du rayonnement laser dans le substrat (4) donneur, en particulier par un mouvement relatif du substrat (4) donneur par rapport au dispositif (12, 120) laser, une conformation linéaire peut être formée dans le substrat (4) donneur, dans lequel on produit les modifications de propriétés de matériau sur au moins un plan de production dans le substrat (4) donneur, dans lequel les plans de réseau cristallin du substrat (4) donneur sont inclinés par rapport au plan de production, dans laquelle la forme linéaire est inclinée par rapport à une ligne de coupe provenant de l'interface entre le plan d production et le plan de réseau cristallin, dans lequel, par les propriétés modifiées de matériaux, le substrat (4) donneur se rompt sous la forme de fissures sous critiques.

7. Installation de fabrication suivant l'une des revendications précédentes,
**caractérisée en ce que**
le dispositif (18) de détachement a un dispositif (181) de dépôt où il est prévu, sur le substrat (4) donneur dans le chemin de transport du substrat (4) donneur en amont du dispositif de détachement, un dispositif (181) de dépôt pour le dépôt d'une couche ayant au moins une matière polymère, en particulier une feuille polymère, et le dispositif (18) de détachement a un dispositif (185) d'application d'une pression pour appliquer une pression au moins par endroits ou complètement sur la couche ayant au moins une matière polymère et le dispositif (18) de détachement a un dispositif (188) de mise en température pour le refroidissement de la couche en au moins une matière polymère disposée sur le substrat (4) donneur ou appliquée avec pression par le dispositif (185) d'application d'une pression.

8. Installation de fabrication suivant l'une des revendications précédentes,
**caractérisée en ce que**,
par le dispositif (181) de dépôt, on dispose de données de couche se rapportant à au moins un paramètre de la au moins une couche ayant une matière polymère, les données de couche comprennent ainsi, de préférence la composition de la matière et/ou l'épaisseur de la couche
et/ou
par le dispositif (185) d'application d'une pression, on dispose de données de force de pression, dans lequel les données de force de pression comprennent de préférence la force de pression du dispositif (185) d'application d'une pression à la au moins une couche ayant une matière polymère par surface et/ou la répartition de forces sur la surface
et/ou,
par le dispositif (188) de mise en température, on dispose de données de mise en température, dans lequel les données de mise en température comprennent de préférence la température de la couche ayant au moins un polymère à l'instant d'un déclenchement de fissures et/ou d'une propagation de fissures.

9. Installation de fabrication suivant l'une des revendications précédentes,
**caractérisée en ce qu'**
il est prévu un dispositif (32) de processeur pour la modification des données de processus de substrat donneur, dans lequel par la modification de données de processus de substrat donneur, on provoque le supplément défini à l'avance et/ou l'adaptation des données de sortie de processus de substrat donneur au moyen d'au moins deux types de données pour l'adaptation d'au moins un paramètre de fonctionnement, en particulier de la profondeur focale et/ou d'énergie laser, du dispositif (12, 120) laser, dans lequel on choisit les données dans le groupe, qui comporte des données d'analyse, des données de mesure, des données d'indice de réfraction et/ou des données de traitement.

10. Installation de fabrication suivant la revendication 9, **caractérisée en ce que**
le au moins un paramètre de fonctionnement du dispositif (12, 120) laser peut être adapté, en fonction des données saisies en raison d'une séparation de tranche concrète, par le dispositif (32) de processeur, dans lequel on adapte, pour la réduction d'une réserve de planarisation, au moins un paramètre de fonctionnement du dispositif (12, 120) laser pour toutes ou pour plus de 25 %, en particulier pour plus de 40 % ou pour plus 50 % ou pour plus de 75 % ou pour plus de 90 % ou pour plus de 95 %, de toutes les tranches (2) séparées d'un substrat (4) donneur concret.

11. Installation (40) de fabrication suivant l'une des revendications précédentes,
**caractérisée en ce que**
les données de processus de tranche
comprennent en outre des données de position, dans lequel les données de position décrivent la position de la tranche (2) dans le substrat (4) donneur et/ou
comprennent des données de mesure du dispositif (24) de mesure, dans lequel les données de mesure comprennent l'épaisseur de la tranche (2) séparée.

12. Procédé de réduction d'une réserve de planarisation prévue lors de la fragmentation d'un substrat (4) donneur en une pluralité de tranches (2) de corps solide,
comprenant au moins les stades :
détermination d'au moins une propriété optique directe ou optique indirecte individuelle résolue localement, en particulier du dopage et/ou des dislocations de réseau cristallin d'un substrat (4) donneur concret, au moyen d'un dispositif (6) d'analyse, production de données d'analyse au moyen du dispositif (6) d'analyse en fonction de la propriété optique directe ou optique indirecte individuelle déterminée résolue localement,
production de données de processus de substrat donneur, se rapportant au substrat (4) donneur concret au moyen d'un dispositif de données, dans lequel les données de processus de substrat donneur comprennent les données d'analyse du dispositif (6) d'analyse, dans lequel les données d'analyse décrivent au moins la propriété du substrat (2) donneur optique directe ou optique indirecte individuelle résolue localement et dans lequel les données de processus de substrat donneur définissent une réserve de planarisation,
production de modifications (14) au sein du substrat (4) donneur concret pour la formation d'une partie (16) de détachement au sein du substrat (4) donneur au moyen d'un dispositif (12, 120) laser, dans lequel on fait fonctionner le dispositif (12, 120) laser en fonction des données de processus de substrat donneur, qui peuvent être associées au substrat (4) donneur concret,
production de contraintes mécaniques au sein du substrat (4) donneur concret pour le déclenchement et/ou la conduite d'une fissure pour la séparation d'une tranche (2) du substrat (4) donneur concret au moyen d'un dispositif (18) de détachement,
et
détermination, au moyen du ou d'un autre dispositif (6) d'analyse, d'au moins une propriété optique directe ou optique indirecte individuelle résolue localement, en particulier du dopage ou de l'indice de réfraction et/ou des dislocations de réseau cristallin du substrat (4) donneur concret réduit de la tranche (2) concrète,
production de nouvelles données d'analyse au moyen du dispositif (6) d'analyse respectif en fonction de la propriété optique directe ou optique indirecte déterminée individuelle résolue localement, et
modification des données de processus de substrat donneur pour la production renouvelée de modifications (14) dans le substrat (4) donneur concret au moyen des nouvelles données d'analyse et définition d'une deuxième réserve de planarisation, comme partie constitutive des données de processus de substrat donneur, dans lequel la deuxième réserve de planarisation est plus petite que la première réserve de planarisation.

13. Procédé de fragmentation d'un substrat donneur en une pluralité de tranches de corps solide,
comprenant au moins les stades :
détermination d'au moins une propriété optique directe ou optique indirecte individuelle résolue localement, en particulier du dopage et/ou des dislocations de réseau cristallin d'un substrat (4) donneur concret au moyen d'un dispositif (6) d'analyse, production de données d'analyse au moyen du dispositif (6) d'analyse en fonction de la propriété optique directe ou optique indirecte déterminée individuelle résolue localement,
production de données de processus de substrat donneur se rapportant au substrat (4) donneur concret au moyen d'un dispositif de données, dans lequel les données de processus de substrat donneur comprennent les données d'analyse du dispositif (6) d'analyse, dans lequel les données d'analyse décrivent au moins la propriété du substrat (4) donneur optique directe ou optique indirecte individuelle résolue localement,
production de modifications (14) au sein du substrat (4) donneur concret pour la formation d'une partie (16) de détachement au sein du substrat (4) donneur au moyen d'un dispositif (12, 120) laser, dans lequel on fait fonctionner le dispositif (12, 120) laser en fonction des données de processus de substrat donneur, qui peuvent être associées au substrat (4) donner concret,
production de contraintes mécaniques au sein du substrat (4) donneur concret pour le déclenchement et/ou à la conduite d'une fissure pour la séparation d'une tranche (2) du substrat (4) donneur concret au moyen d'un dispositif (18) de détachement,
et
détermination, au moyen du dispositif (6) d'analyse ou au moyen d'un autre dispositif d'analyse, de la au moins une propriété optique directe ou optique indirecte individuelle résolue localement, en particulier du dopage et/ou des dislocations de réseau cristallin, du substrat (4) donneur concret réduit de la tranche (2) concrète,
production de nouvelles données d'analyse, au moyen du dispositif (6) d'analyse, en fonction de la au moins une propriété optique directe ou optique indirecte déterminée individuelle résolue localement, et
modification des données de processus de substrat donneur au moyen des nouvelles données d'analyse,
production de modifications (14) au sein du substrat (4) donneur concret, pour la formation d'une partie (16) de détachement au sein du substrat (4) donneur au moyen du dispositif (12) laser ou au moyen d'un autre dispositif (120) laser, dans lequel on fait fonctionner le dispositif (12) laser ou l'autre dispositif (120) laser en fonction des données de processus de substrat donneur modifiées,
production de contraintes mécaniques au sein du substrat (4) donneur concret pour le déclenchement et/ou à la conduite d'une fissure pour la séparation d'une tranche (2) du substrat (4) donneur concret au moyen d'un dispositif (18) de détachement.

14. Procédé de production de données de processus pour la commande de composants d'une installation (40) de fabrication pour le détachement de tranches (2) de substrats (4) donneurs, comprenant au moins les stades :
production de données d'analyse au moyen d'un dispositif (6) d'analyse en fonction d'au moins une propriété d'un substrat (4) donneur,
production de données de processus de substrat donneur se rapportant au substrat (4) donneur concret au moyen d'un dispositif de données, dans lequel les données de processus de substrat donneur servent au réglage d'un dispositif (12, 120) laser pour la production de modifications (14) au sein du substrat (4) donneur, dans lequel les données de processus de substrat donneur comprennent les données d'analyse du dispositif (6) d'analyse, dans lequel les données d'analyse décrivent au moins une propriété individuelle du substrat (4) donneur,
détermination, au moyen du dispositif (6) d'analyse, de la au moins une propriété individuelle, en particulier du dopage et/ou des dislocations de réseau cristallin, du substrat (4) donneur concret réduit de la tranche (2) concrète,
production de nouvelles données d'analyse, au moyen du dispositif (6) d'analyse ou d'un autre dispositif d'analyse, en fonction de la au moins une propriété individuelle déterminée, dans lequel on saisit les données d'analyse pour le même substrat (4) donneur, dans lequel le substrat (4) donneur est raccourci de la tranche concrète, lors de la production des nouvelles données d'analyse,
modification des données de processus de substrat donneur, au moyen des nouvelles données d'analyse, pour le réglage du dispositif (12) laser ou d'un autre dispositif (120) laser, dans lequel, en fonction des données de processus de substrat donneur modifiées, peuvent être produites, dans le substrat (4) donneur, des modifications (14), qui sont à une distance plus petite de la surface de pénétration que lors d'au moins un traitement laser précédent du même substrat (4) donneur,
production, en fonction des données de processus de substrat donneur modifiées, de modifications (14) dans le substrat (4) donneur.

15. Ensemble de données produit dans un procédé suivant la revendication 14,
comprenant au moins les données d'analyse saisies avant chaque traitement laser s'effectuant après une séparation de tranches d'un substrat (4) donneur concret et/ou les données d'indice de réfraction du substrat (4) donneur concret déterminées avant chaque traitement laser s'effectuant après une séparation de tranche.
